(19) Europäisches Patentamt
European Patent Office
Office européen des brevets

(11) EP 3 848 627 A1

(12) **EUROPEAN PATENT APPLICATION**
published in accordance with Art. 153(4) EPC

(43) Date of publication:
**14.07.2021 Bulletin 2021/28**

(21) Application number: **19857668.8**

(22) Date of filing: **05.08.2019**

(51) Int Cl.:
***F21S 41/40*** *(2018.01)* ***F21W 102/155*** *(2018.01)*

(86) International application number:
**PCT/JP2019/030758**

(87) International publication number:
**WO 2020/049930 (12.03.2020 Gazette 2020/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **07.09.2018 JP 2018168042**

(71) Applicant: **FUJIFILM Corporation**
**Tokyo 106-8620 (JP)**

(72) Inventors:
- **TAGUCHI, Yoshinori**
**Haibara-gun, Shizuoka 421-0396 (JP)**
- **HAMADA, Daisuke**
**Haibara-gun, Shizuoka 421-0396 (JP)**
- **OYA, Takahiro**
**Haibara-gun, Shizuoka 421-0396 (JP)**

(74) Representative: **HGF**
**1 City Walk**
**Leeds LS11 9DX (GB)**

(54) **VEHICULAR HEADLIGHT UNIT, LIGHT-SHIELDING FILM FOR HEADLIGHT, AND METHOD FOR PRODUCING LIGHT-SHIELDING FILM FOR HEADLIGHT**

(57) Provided are: a headlight unit for a vehicle, the headlight unit having a light-shielding film which contains a black coloring material and a resin and suppresses light leakage into a light-shielded region; a light-shielding film for a headlight; and a method for manufacturing a light-shielding film for a headlight. The headlight unit for a vehicle includes a light source, and a light-shielding part which shields at least a part of light emitted from the light source, in which the light-shielding part has a light-shielding film which is formed in a pattern shape and shields at least a part of light emitted from the light source, the light-shielding film contains a black coloring material and a resin, and has a minimum optical density equal to or greater than 2.0 in a wavelength range of 400 to 700 nm, and in a case where a film thickness of the light-shielding film is defined as FT, and a length of a region where a film thickness of a peripheral edge part of the light-shielding film is changed is defined as UW, $-2.5 \leq (UW/FT) \leq 2.5$ is satisfied.

FIG. 1

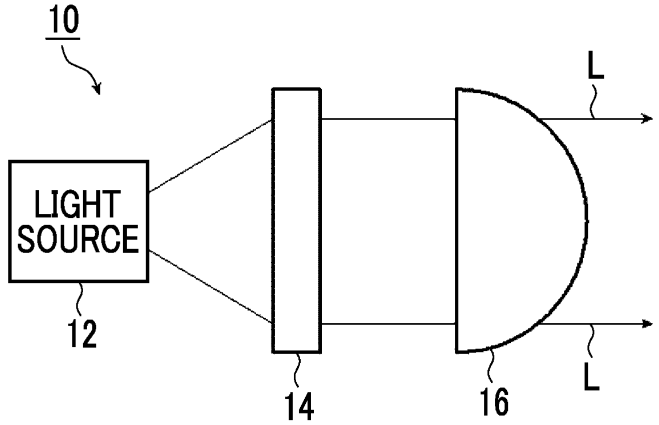


EP 3 848 627 A1

## Description

## BACKGROUND OF THE INVENTION

1. Field of the Invention

The present invention relates to a headlight unit for a vehicle such as an automobile, and in particular, relates to a headlight unit which is for a vehicle and has a light-shielding film.

Moreover, the present invention also relates to a light-shielding film for a headlight, and a method for manufacturing a light-shielding film for a headlight.

2. Description of the Related Art

Currently, a headlamp for a vehicle such as an automobile is switched between a low beam and a high beam.

Moreover, in a vehicle such as an automobile, for safe traveling, a high beam is used during night-time traveling. However, in a case where the high beam is flashed at an oncoming vehicle, it is rather dangerous.

Therefore, nowadays, for example, in a high beam mode, adaptive driving beam control (ADB control) in which in a case where there are non-irradiation objects such as a preceding vehicle, an oncoming vehicle, and a pedestrian, light is shielded or dimmed so as not to dazzle the preceding vehicle, the oncoming vehicle, and the pedestrian is performed. By the adaptive driving beam control, it is possible to prevent light from being flashed at the oncoming vehicle even in a case where a high beam is used.

For example, in JP2015-009647A, a headlamp has a well-known light-shielding mechanism for forming a light-shielding portion in a part of an irradiation region of a high beam in a case where the high beam is set in the vehicle height direction of an optical axis. The light-shielding mechanism is constituted by a shade member capable of shielding a part of the high beam of the headlamp, and an actuator capable of adjusting the shade member in the vehicle width direction or the vehicle height direction with respect to the optical axis of the headlamp.

In addition, JP2016-534503A describes a microprojection light module for an automobile headlight, the module including: at least one light source; and at least one projection device that forms an image of light, which is emitted from at least one light source, in a region in front of an automobile in a form of at least one light distribution.

In the projection device, at least one stop (light-shielding screen) device is disposed between an incident optical system and an emission optical system.

## SUMMARY OF THE INVENTION

In all of a case where the shade member capable of shielding light is used as in JP2015-009647A and a case where the stop device is used as in JP2016-534503A, leakage of light into a light-shielded region causes dazzling to a forward vehicle, which is not preferable.

The present inventors have conducted extensive experimental research, and as a result, have found that light leakage into a light-shielded region and dazzling to a forward vehicle can be suppressed by applying a specific light-shielding film containing a black coloring material and a resin to a headlamp for a vehicle and evaluating characteristics thereof.

An object of the present invention is to provide a headlight unit for a vehicle, the headlight unit having a light-shielding film which contains a black coloring material and a resin and suppresses light leakage into a light-shielded region.

Moreover, another object of the present invention is to provide a light-shielding film for a headlight, and a method for manufacturing a light-shielding film for a headlight.

As a result of conducting an extensive investigation to achieve the objects, the present inventors have found that the objects can be achieved by the following configuration.

The present invention is a headlight unit for a vehicle, comprising a light source, and a light-shielding part which shields at least a part of light emitted from the light source, in which the light-shielding part has a light-shielding film which is formed in a pattern shape and shields at least a part of light emitted from the light source, the light-shielding film contains a black coloring material and a resin, a minimum optical density of the light-shielding film in a wavelength range of 400 to 700 nm is equal to or greater than 2.0, and in a case where a film thickness of the light-shielding film is defined as FT, and a length of a region where a film thickness of a peripheral edge part of the light-shielding film is changed is defined as UW, $-2.5 \leq (UW/FT) \leq 2.5$ is satisfied.

It is preferable that $-2.0 \leq (UW/FT) \leq 2.0$ is satisfied.

It is preferable that $-1.5 \leq (UW/FT) \leq 1.5$ is satisfied.

It is preferable that the minimum optical density is 3.0 to 6.0.

It is preferable that the black coloring material is at least one selected from the group consisting of carbon black,

a bisbenzofuranone-based pigment, a metal oxynitride, and a metal nitride.

It is preferable that the black coloring material is at least one selected from the group consisting of carbon black, a bisbenzofuranone-based pigment, titanium nitride, titanium oxynitride, zirconium nitride, zirconium oxynitride, vanadium nitride, vanadium oxynitride, niobium nitride, and niobium oxynitride.

It is preferable that the light-shielding film is formed of a light-shielding film-forming composition, and the light-shielding film-forming composition contains the black coloring material, a polymerizable compound, and a polymerization initiator.

It is preferable that the light-shielding film-forming composition further contains a resin.

It is preferable that the resin contains an ethylenically unsaturated group.

It is preferable that the polymerization initiator is an oxime compound.

It is preferable that a surface roughness of the light-shielding film is 10 to 250 nm.

The present invention is a light-shielding film for a headlight, comprising a black coloring material and a resin, in which a minimum optical density in a wavelength range of 400 to 700 nm is equal to or greater than 2.0, and in a case where a film thickness of the light-shielding film is defined as FT, and a length of a region where a film thickness of a peripheral edge part of the light-shielding film is changed is defined as UW, $-2.5 \leq (UW/FT) \leq 2.5$ is satisfied.

It is preferable that $-2.0 \leq (UW/FT) \leq 2.0$ is satisfied.

It is preferable that $-1.5 \leq (UW/FT) \leq 1.5$ is satisfied.

It is preferable that the minimum optical density is 3.0 to 6.0.

It is preferable that the black coloring material is at least one selected from the group consisting of carbon black, a bisbenzofuranone-based pigment, a metal oxynitride, and a metal nitride.

It is preferable that the black coloring material is at least one selected from the group consisting of carbon black, a bisbenzofuranone-based pigment, titanium nitride, titanium oxynitride, zirconium nitride, zirconium oxynitride, vanadium nitride, vanadium oxynitride, niobium nitride, and niobium oxynitride.

It is preferable that the light-shielding film for a headlight is formed of a light-shielding film-forming composition, and the light-shielding film-forming composition contains the black coloring material, a compound containing an ethylenically unsaturated group, and a polymerization initiator.

It is preferable that the light-shielding film-forming composition further contains a resin.

It is preferable that the resin contains an ethylenically unsaturated group.

It is preferable that the polymerization initiator is an oxime compound.

It is preferable that a surface roughness is 10 to 250 nm.

A method for manufacturing the above-mentioned light-shielding film for a headlight, the method comprising, in the following order: a composition layer forming step of forming a composition layer using a light-shielding film-forming composition which contains a black coloring material, a compound containing an ethylenically unsaturated group, and a polymerization initiator; an exposure step of exposing a part of the composition layer by irradiation with actinic rays or radiation; and then a development step of developing the exposed composition layer to form a light-shielding film.

According to the present invention, it is possible to provide a headlight unit for a vehicle, the headlight unit having a light-shielding film which contains a black coloring material and a resin and suppresses light leakage into a light-shielded region.

Moreover, according to the present invention, it is possible to provide a light-shielding film for a headlight, and a method for manufacturing a light-shielding film for a headlight.

## BRIEF DESCRIPTION OF THE DRAWINGS

Fig. 1 is a schematic view showing an example of a headlight unit for a vehicle according to an embodiment of the present invention.

Fig. 2 is a schematic perspective view showing an example of a light-shielding part of the headlight unit for a vehicle according to the embodiment of the present invention.

Fig. 3 is a schematic cross-sectional view showing an example of a light-shielding film of the light-shielding part of the headlight unit for a vehicle according to the embodiment of the present invention.

Fig. 4 is a schematic cross-sectional view showing another example of the light-shielding film of the light-shielding part of the headlight unit for a vehicle according to the embodiment of the present invention.

Fig. 5 is a schematic view showing an example of a light distribution pattern by the headlight unit for a vehicle according to the embodiment of the present invention.

Fig. 6 is a schematic view showing another example of the light distribution pattern by the headlight unit for a vehicle according to the embodiment of the present invention.

## DESCRIPTION OF THE PREFERRED EMBODIMENTS

Hereinafter, a headlight unit for a vehicle according to an embodiment of the present invention will be described in detail with reference to the suitable embodiments shown in the accompanying drawings.
Moreover, the drawings described below are exemplary for illustrating the present invention, and the present invention is not limited to the following drawings.
Furthermore, in the following description, "to" indicating a numerical range means to include numerical values on both sides thereof. For example, in a case where $\varepsilon$ is a numerical value $\alpha$ to a numerical value $\beta$, the range of $\varepsilon$ is a range including the numerical value $\alpha$ and the numerical value $\beta$, and is $\alpha \leq \varepsilon \leq \beta$ in terms of mathematical symbol.
In addition, the "same" means to include an error range generally accepted in the relevant technical field. Moreover, "all", the "entire surface", or the like means to include an error range generally accepted in the relevant technical field.

[Headlight unit for vehicle]

The headlight unit for a vehicle according to the embodiment of the present invention can be used for a vehicle lighting tool such as a headlight.
Fig. 1 is a schematic view showing the headlight unit for a vehicle according to the embodiment of the present invention, and Fig. 2 is a schematic perspective view showing a light-shielding part of the headlight unit for a vehicle according to the embodiment of the present invention.
As shown in Fig. 1, a headlight unit 10 for a vehicle includes a light source 12, a light-shielding part 14, and a lens 16, and the light source 12, the light-shielding part 14, and the lens 16 are arranged in this order.
As shown in Fig. 2, the light-shielding part 14 has a substrate 20 and a light-shielding film 22.
In the light-shielding film 22, a pattern-like opening part 23 for radiating light emitted from the light source 12 into a specific shape is formed. A light distribution pattern radiated from the lens 16 is determined by the shape of the opening part 23 of the light-shielding film 22. The lens 16 projects light L from the light source 12, which has passed through the light-shielding part 14. In a case where a specific light distribution pattern can be radiated from the light source 12, the lens 16 is not necessarily required. The lens 16 is appropriately determined according to an irradiation distance and an irradiation range of the light L.
Moreover, a configuration of the substrate 20 is not particularly limited as long as the substrate can hold the light-shielding film 22, but the substrate 20 is preferably not deformed by heat of the light source 12, and is made of glass, for example.
Fig. 2 shows an example of the light-shielding part of the headlight unit for a vehicle according to the embodiment, but the present invention is not limited to the example.
Furthermore, the number of the light sources 12 is also not limited to one, and the light sources may be arranged in a row or in a matrix, for example. In a case where a plurality of light sources are provided, for example, one light-shielding part 14 may be provided for one light source 12. In this case, the respective light-shielding film 22 of a plurality of light-shielding parts 14 may all have the same pattern or may have different patterns.
The light-shielding film 22 is constituted of a black coloring material and a resin, and has a minimum optical density (hereinafter, referred to as a minimum OD value as well) equal to or greater than 2.0 in a wavelength range of 400 to 700 nm. In particular, from the viewpoint that the effect of the present invention is superior, the minimum optical density is preferably equal to or greater than 2.5 and more preferably equal to or greater than 3.0. The upper limit is not particularly limited, but in a case where the minimum optical density is equal to or less than 6.0, lithography suitability is improved, and thus the upper limit value of the minimum optical density is preferably equal to or less than 6.0.
The optical density is dependent on the thickness, and the higher the thickness, the higher the optical density. The minimum optical density in the present invention refers to the lowest optical density in a case where the optical density of the formed light-shielding film at wavelengths of 400 to 700 nm is measured.
The black coloring material and the resin, which constitute the light-shielding film 22, will be described in detail later.
Next, the light-shielding film 22 will be described.
Fig. 3 is a schematic cross-sectional view of the light-shielding film in a film thickness direction, which shows an example of the light-shielding film of the light-shielding part of the headlight unit for a vehicle according to the embodiment of the present invention, and Fig. 4 is a schematic cross-sectional view of the light-shielding film in the film thickness direction, which shows another example of the light-shielding film of the light-shielding part of the headlight unit for a vehicle according to the embodiment of the present invention. In Fig. 3, a film thickness of the light-shielding film 22 is not constant, and as shown in Figs. 3 and 4, a film thickness of a peripheral edge part 22b is changed. Moreover, the film thickness of the light-shielding film 22 may be changed into an undercut shape (shape in which a short side of two parallel sides is present on a side of the substrate (not shown in Fig. 3) in a cross-sectional view in the film thickness

direction), as shown in Fig. 3, or may be changed into a reverse shape (shape in which a long side of two parallel sides is present on a side of the substrate (not shown in Fig. 4) in a cross-sectional view in the film thickness direction) with respect to the undercut shape shown in Fig. 3, as shown in Fig. 4.

In the light-shielding film 22 shown in Figs. 3 and 4, in a case where the film thickness of the light-shielding film 22 is defined as FT, and a length of a region where the film thickness of the peripheral edge part of the light-shielding film 22 is changed is defined as UW, $-2.5 \leq (UW/FT) \leq 2.5$ is satisfied. In a case where $2.5 \leq (UW/FT) \leq 2.5$ is satisfied, in the irradiation of the peripheral edge part 22b of the light-shielding film 22 with light, a region corresponding to the peripheral edge part 22b in the projected light distribution pattern is shielded from light.

On the other hand, in a case where $2.5 \leq (UW/FT) \leq 2.5$ is not satisfied, in the irradiation of the peripheral edge part 22b of the light-shielding film 22 with light, a degree of light-shielding in the region corresponding to the peripheral edge part 22b in the projected light distribution pattern is poor, and the peripheral edge part 22b is not sufficiently shielded from light.

Further, the film thickness FT of the light-shielding film 22 is a thickness in a region where the thickness is uniform. The length UW of the region where the film thickness of the peripheral edge part of the light-shielding film 22 is changed is a distance from the edge of the light-shielding film 22 to the region where the thickness is uniform, in a direction orthogonal to the film thickness direction. In a case where the length UW of the region where the film thickness of the peripheral edge part of the light-shielding film 22 is changed varies depending on the location of the light-shielding film 22, the longest distance is used.

In particular, from the viewpoint that the effect of the present invention is superior, UW/FT preferably satisfies $-2.0 \leq (UW/FT) \leq 2.0$ and more preferably satisfies $-1.5 \leq (UW/FT) \leq 1.5$.

For example, the film thickness FT of the light-shielding film 22 is preferably 0.1 to 10.0 μm and more preferably 1.0 to 4.0 μm. Moreover, the light-shielding film 22 may be thinner or thicker than this range depending on the application.

Furthermore, a surface roughness (Ra) of the light-shielding film 22 is not particularly limited, but is preferably 10 to 250 nm. In a case where the surface roughness is within the above range, light distribution characteristics are excellent. The surface roughness is more preferably 15 to 250 nm, even more preferably 50 to 250 nm, and particularly preferably 100 to 250 nm. The mechanism by which the light distribution characteristics are excellent is not clear, but it is presumed that in a case where the surface roughness is coarser, that is, the numerical value of Ra is larger, the reflectivity on the surface of the light-shielding film is reduced, and as a result, the light distribution characteristics are excellent. Moreover, the surface roughness (Ra) of the light-shielding film 22 is an arithmetic mean roughness, and is measured using an atomic force microscope (Dimension FastScan AFM (manufactured by Bruker)), as will be described later.

The light distribution pattern based on the pattern of the light-shielding film 22 will be described.

Fig. 5 is a schematic view showing an example of a light distribution pattern by the headlight unit for a vehicle according to the embodiment of the present invention, and Fig. 6 is a schematic view showing another example of the light distribution pattern by the headlight unit for a vehicle according to the embodiment of the present invention. Moreover, a light distribution pattern 30 shown in Fig. 5 and a light distribution pattern 32 shown in Fig. 6 both indicate a region irradiated with light. Further, a region 31 shown in Fig. 5 and a region 31 shown in Fig. 6 both indicate an irradiation region irradiated by the light source 12 (see Fig. 1) in a case where the light-shielding film 22 is not provided.

Due to the pattern of the light-shielding film 22, the intensity of light is sharply reduced at an edge 30a, for example, as in the light distribution pattern 30 shown in Fig. 5. The light distribution pattern 30 shown in Fig. 5 is, for example, a pattern in which light is not flashed at an oncoming vehicle in a case of left-side traveling.

Furthermore, as in the light distribution pattern 32 shown in Fig. 6, a pattern in which a part of the light distribution pattern 30 shown in Fig. 5 is cut out may be used. Also in this case, similar to the light distribution pattern 30 shown in Fig. 5, the intensity of light is sharply reduced at an edge 32a, and the pattern is, for example, a pattern in which light is not flashed at an oncoming vehicle in a case of left-side traveling. Moreover, the intensity of light is sharply reduced even at a cutout part 33. Therefore, in a region corresponding to the cutout part 33, a mark indicating a state such as a curved road, upward inclination, and downward inclination can be displayed on the road. By doing so, safety during night-time traveling can be improved.

In addition, the light-shielding part 14 is not limited to being fixedly disposed between the light source 12 and the lens 16, and a configuration in which the light-shielding part 14 is allowed to enter between the light source 12 and the lens 16, if necessary, by a driving mechanism (not shown) to obtain a specific light distribution pattern may be adopted.

Moreover, in the light-shielding part 14, a shade member capable of shielding the light from the light source 12 may be formed.

In this case, a configuration in which the shade member is allowed to enter between the light source 12 and the lens 16, if necessary, by the driving mechanism (not shown) to obtain a specific light distribution pattern may be adopted.

The light-shielding film contains a black coloring material and a resin.

Hereinafter, various components contained in the light-shielding film will be described in detail.

<Black coloring material>

As a black coloring material, various known black pigments and black dyes can be used.

In particular, from the viewpoint that a high minimum optical density can be achieved with a small amount, carbon black, a bisbenzofuranone-based pigment, an azomethine-based pigment, a perylene-based pigment, a metal oxynitride, or a metal nitride is preferable, carbon black, a bisbenzofuranone-based pigment, a titanium nitride, titanium oxynitride, zirconium nitride, zirconium oxynitride, vanadium nitride, vanadium oxynitride, niobium nitride, or niobium oxynitride is more preferable, and titanium nitride, titanium oxynitride, zirconium nitride, zirconium oxynitride, vanadium nitride, vanadium oxynitride, niobium nitride, or niobium oxynitride is even more preferable.

Examples of the bisbenzofuranone-based pigment include the pigments described in JP2012-528448A, JP2010-534726A, JP2012-515234A, and the like, and the pigment is available as "IRGAPHOR BK" produced by BASF SE, for example.

Examples of the azomethine-based pigment include the pigments described in JP1989-170601A (JP-H01-170601A), JP1990-034664A (JP-H02-034664A), and the like, and the pigment is available as "CHROMOFINE BLACK A1103" produced by Dainichiseika Color & Chemicals Mfg. Co., Ltd., for example.

The azo dye is not particularly limited, but for example, "SOLVENT BLACK 3" produced by Orient Chemical Industries Co., Ltd. can be suitably mentioned.

Furthermore, as the black coloring material, a black coloring material obtained by mixing a red coloring material, a green coloring material, a blue coloring material, and the like can also be used.

In addition, the types of the metal elements contained in the metal oxynitride and the metal nitride are not particularly limited, but as the metal oxynitride and the metal nitride, an oxynitride or a nitride of a transition metal (hereinafter, referred to as a "specific transition metal" as well) having an electronegativity (Pauling's electronegativity) of 1.22 to 1.80, among the transition metals of groups 3 to 7, is preferable.

Examples of the specific transition metal (each number in parentheses is an electronegativity) include: Sc (1.36), Dy (1.22), Ho (1.23), Er (1.24), Tm (1.25), Lu (1.27), Th (1.3), Pa (1.5), U (1.38), Np (1.36), Pu (1.28), Am (1.3), Cm (1.3), Bk (1.3), Cf (1.3), Es (1.3), Fm (1.3), Md (1.3), No (1.3), and Lr (1.3) which are transition elements of group 3; Ti (1.54), Zr (1.33), and Hf (1.3) which belong to group 4; V (1.63), Nb (1.6), and Ta (1.5) which belong to group 5; Cr (1.66) belonging to group 6; and Mn (1.55) belonging to group 7. Among them, from the viewpoint that the effect of the present invention is superior, zirconium (Zr), vanadium (V), niobium (Nb), chromium (Cr), tantalum (Ta), yttrium (Y), and titanium (Ti) are preferable, zirconium, vanadium, niobium, or titanium is more preferable, and zirconium or titanium is even more preferable.

A content of the specific transition metal in the metal oxynitride or the metal nitride is preferably 10% to 85% by mass, more preferably 50% to 80% by mass, and even more preferably 70% to 80% by mass, with respect to the total mass of the metal oxynitride or the metal nitride. The content of the transition metal in the metal oxynitride or the metal nitride is measured by an X-ray fluorescence (XRF) analysis method.

One specific transition metal may be used singly or two or more specific transition metals are used, and in a case where two or more specific transition metals are used, the total content thereof is preferably within the above range.

A method for producing the black coloring material is not particularly limited, and a known method is adopted.

In a case where the black coloring material is a black pigment, an average primary particle diameter of the black pigment is not particularly limited, but is preferably 5 to 100 nm and more preferably 30 to 65 nm.

The content of the black coloring material in the light-shielding film is not particularly limited, but from the viewpoint that the effect of the present invention is superior, the content is preferably 10% to 90% by mass, more preferably 30% to 70% by mass, and even more preferably 30% to 65% by mass, with respect to the total mass of the light-shielding film.

<Resin>

The light-shielding film contains a resin. Examples of the resin include a dispersant and an alkali-soluble resin.

A content of the resin in the light-shielding film is not particularly limited, but is preferably 3% to 60% by mass, more preferably 10% to 40% by mass, and even more preferably 15% to 35% by mass, with respect to the total mass of the light-shielding film. The resins may be used singly or in combination of two or more thereof. In a case where two or more resins are used in combination, the total content thereof is preferably within the above range.

A molecular weight of the resin is greater than 2,000. Moreover, in a case where the molecular weight of the resin is polydisperse, a weight-average molecular weight thereof is greater than 2,000.

<Dispersant>

The light-shielding film preferably contains a dispersant. In particular, in a case where a black pigment is used

as the black coloring material, it is preferable to use a dispersant in combination. Moreover, in the present specification, a dispersant refers to a compound different from the alkali-soluble resin which will be described later.

A content of the dispersant in the light-shielding film is not particularly limited, but is preferably 2% to 40% by mass, more preferably 5% to 30% by mass, and even more preferably 10% to 20% by mass, with respect to the total mass of the light-shielding film.

The dispersants may be used singly or in combination of two or more thereof. In a case where two or more dispersants are used in combination, the total content thereof is preferably within the above range.

Furthermore, in the light-shielding film, a mass ratio (content of dispersant/content of black coloring material) of the content of the dispersant (preferably, a graft polymer) to the content of the black coloring material is preferably 0.05 to 1.00, more preferably 0.05 to 0.35, and even more preferably 0.20 to 0.35.

As the dispersant, for example, known dispersants can be appropriately selected and used. Among them, a polymer compound is preferable.

Examples of the dispersant include a polymer dispersant [for example, polyamidoamine and a salt thereof, polycarboxylic acid and a salt thereof, high-molecular-weight unsaturated acid ester, modified polyurethane, modified polyester, modified poly(meth)acrylate, a (meth)acrylic copolymer, and a naphthalenesulfonic acid-formalin condensate], polyoxyethylene alkyl phosphoric acid ester, polyoxyethylene alkylamine, and a pigment derivative.

The polymer compound can be further classified into a linear polymer, a terminal-modified polymer, a graft polymer, and a block polymer based on the structure.

• Polymer compound

The polymer compound acts to prevent the reaggregation of a substance to be dispersed by being adsorbed onto a surface of the substance to be dispersed, such as the black pigment and another pigment (hereinafter, the black pigment and the other pigment are collectively and simply referred to as a "pigment" as well) used in combination if desired. Therefore, a terminal-modified polymer, a graft (containing a polymer chain) polymer, or a block polymer is preferable which contains a moiety anchored to the pigment surface.

The polymer compound may contain a curable group.

Examples of the curable group include an ethylenically unsaturated group (for example, a (meth)acryloyl group, a vinyl group, a styryl group, and the like), and a cyclic ether group (for example, an epoxy group, an oxetanyl group, and the like), but the present invention is not limited to these examples.

Among them, from the viewpoint that polymerization can be controlled by a radical reaction, as the curable group, an ethylenically unsaturated group is preferable. As the ethylenically unsaturated group, a (meth)acryloyl group is more preferable.

The resin containing a curable group preferably has at least one selected from the group consisting of a polyester structure and a polyether structure. In this case, the polyester structure and/or the polyether structure may be included in a main chain, and as will be described later, in a case where the resin has a structural unit containing a graft chain, the polymer chain may have a polyester structure and/or a polyether structure.

As the resin, a resin in which the polymer chain has a polyester structure is more preferable.

The polymer compound preferably has a structural unit containing a graft chain. Moreover, in the present specification, the "structural unit" has the same definition as a "repeating unit".

Such a polymer compound having the structural unit containing a graft chain has an affinity with a solvent due to the graft chain, and thus is excellent in dispersibility of a pigment or the like and dispersion stability (temporal stability) after the lapse of time. Moreover, due to the presence of the graft chain, the polymer compound having the structural unit containing a graft chain has an affinity with a polymerizable compound or other resins which can be used in combination.

As a result, residues are less likely to be generated in alkali development.

In a case where the graft chain is prolonged, a steric repulsion effect is enhanced, and thus the dispersibility of the pigment or the like is improved. Meanwhile, in a case where the graft chain is too long, adsorptive power to the pigment or the like is reduced, and thus the dispersibility of the pigment or the like tends to be reduced. Therefore, the number of atoms excluding a hydrogen atom in the graft chain is preferably 40 to 10,000, more preferably 50 to 2,000, and even more preferably 60 to 500.

Herein, the graft chain refers to a portion from the base (in a group which is branched off from the main chain, an atom bonded to the main chain) of a main chain of the copolymer to the terminal of a group branched off from the main chain.

The graft chain preferably has a polymer structure, and examples of such a polymer structure include a poly(meth)acrylate structure (for example, a poly(meth)acryl structure), a polyester structure, a polyurethane structure, a polyurea structure, a polyamide structure, and a polyether structure.

In order to improve interactive properties between the graft chain and the solvent, and thus enhance the

dispersibility of the pigment or the like, the graft chain is preferably a graft chain having at least one selected from the group consisting of a polyester structure, a polyether structure, and a poly(meth)acrylate structure, and more preferably a graft chain having at least one of a polyester structure or a polyether structure.

A macromonomer (a monomer which has a polymer structure and constitutes a graft chain by being bonded to the main chain of a copolymer) containing such a graft chain is not particularly limited, but a macromonomer containing a reactive double bond group can be suitably used.

As a commercial macromonomer, which corresponds to a structural unit containing a graft chain contained in the polymer compound and is suitably used for synthesizing the polymer compound, AA-6 (trade name, produced by TOAGOSEI CO., LTD.), AA-10 (trade name, produced by TOAGOSEI CO., LTD.), AB-6 (trade name, produced by TOAGOSEI CO., LTD.), AS-6 (trade name, produced by TOAGOSEI CO., LTD.), AN-6 (trade name, produced by TOAGOSEI CO., LTD.), AW-6 (trade name, produced by TOAGOSEI CO., LTD.), AA-714 (trade name, produced by TOAGOSEI CO., LTD.), AY-707 (trade name, produced by TOAGOSEI CO., LTD.), AY-714 (trade name, produced by TOAGOSEI CO., LTD.), AK-5 (trade name, produced by TOAGOSEI CO., LTD.), AK-30 (trade name, produced by TOAGOSEI CO., LTD.), AK-32 (trade name, produced by TOAGOSEI CO., LTD.), BLEMMER PP-100 (trade name, produced by NOF CORPORATION), BLEMMER PP-500 (trade name, produced by NOF CORPORATION), BLEMMER PP-800 (trade name, produced by NOF CORPORATION), BLEMMER PP-1000 (trade name, produced by NOF CORPORATION), BLEMMER 55-PET-800 (trade name, produced by NOF CORPORATION), BLEMMER PME-4000 (trade name, produced by NOF CORPORATION), BLEMMER PSE-400 (trade name, produced by NOF CORPORATION), BLEMMER PSE-1300 (trade name, produced by NOF CORPORATION), BLEMMER 43PAPE-600B (trade name, produced by NOF CORPORATION), or the like is used. Among them, AA-6 (trade name, produced by TOAGOSEI CO., LTD.), AA-10 (trade name, produced by TOAGOSEI CO., LTD.), AB-6 (trade name, produced by TOAGOSEI CO., LTD.), AS-6 (trade name, produced by TOAGOSEI CO., LTD.), AN-6 (trade name, produced by TOAGOSEI CO., LTD.), or BLEMMER PME-4000 (trade name, produced by NOF CORPORATION) is preferable.

The dispersant preferably has at least one structure selected from the group consisting of polymethyl acrylate, polymethyl methacrylate, and cyclic or chain-like polyester, more preferably has at least one structure selected from the group consisting of polymethyl acrylate, polymethyl methacrylate, and chain-like polyester, and even more preferably has at least one structure selected from the group consisting of a polymethyl acrylate structure, a polymethyl methacrylate structure, a polycaprolactone structure, and a polyvalerolactone structure. The dispersant may be a dispersant having the aforementioned structure alone in one dispersant, or may be a dispersant having a plurality of these structures in one dispersant.

Herein, the polycaprolactone structure refers to a structure containing a structure, which is obtained by ring opening of ε-caprolactone, as a repeating unit. The polyvalerolactone structure refers to a structure containing a structure, which is obtained by ring opening of δ-valerolactone, as a repeating unit.

Specific examples of the dispersant having a polycaprolactone structure include dispersants in which j and k in Formula (1) and Formula (2) are each 5. Moreover, specific examples of the dispersant having a polyvalerolactone structure include dispersants in which j and k in Formula (1) and Formula (2) are each 4.

Specific examples of the dispersant having a polymethyl acrylate structure include dispersants in which in Formula (4), $X^5$ is a hydrogen atom and $R^4$ is a methyl group. Moreover, specific examples of the dispersant having a polymethyl methacrylate structure include dispersants in which in Formula (4), $X^5$ is a methyl group and $R^4$ is a methyl group.

• Structural unit containing graft chain

As the structural unit containing a graft chain, the polymer compound preferably has a structural unit represented by any one of Formula (1), ..., or Formula (4), and more preferably has a structural unit represented by any one of Formula (1A), Formula (2A), Formula (3A), Formula (3B), or Formula (4).

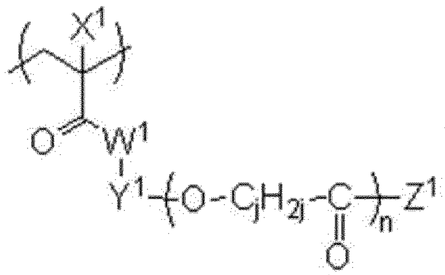

(1)

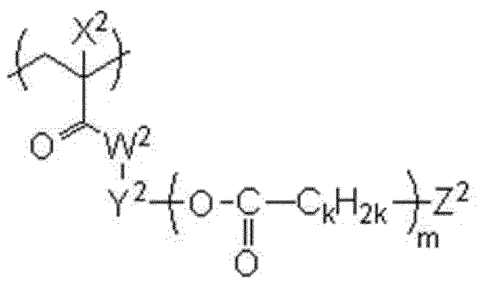

(2)

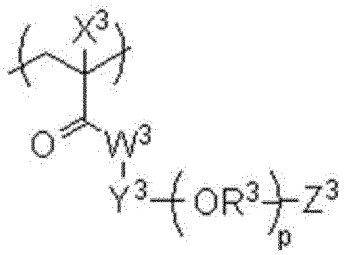
(3)

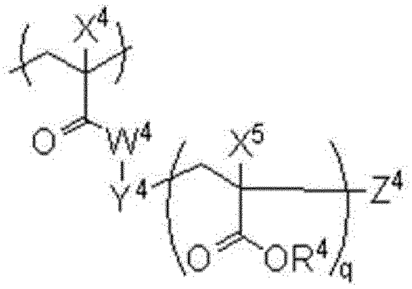
(4)

In Formulae (1) to (4), $W^1$, $W^2$, $W^3$, and $W^4$ each independently represent an oxygen atom or NH. $W^1$, $W^2$, $W^3$, and $W^4$ are each preferably an oxygen atom.

In Formulae (1) to (4), $X^1$, $X^2$, $X^3$, $X^4$, and $X^5$ each independently represent a hydrogen atom or a monovalent organic group. From the viewpoint of the restriction on synthesis, $X^1$, $X^2$, $X^3$, $X^4$, and $X^5$ are preferably each independently a hydrogen atom or an alkyl group having 1 to 12 carbon atoms (the number of carbon atoms), more preferably each independently a hydrogen atom or a methyl group, and even more preferably each independently a methyl group.

In Formulae (1) to (4), $Y^1$, $Y^2$, $Y^3$, and $Y^4$ each independently represent a divalent linking group, and the linking group has no particular restriction on a structure. Specific examples of the divalent linking groups represented by $Y^1$, $Y^2$, $Y^3$, and $Y^4$ include linking groups represented by the following (Y-1) to (Y-21). In the following structures, A and B refer to moieties bonded to the left terminals and the right terminals of $Y^1$, $Y^2$, $Y^3$, and $Y^4$ in Formulae (1) to (4), respectively. Among the following structures, from the viewpoint of simplicity of synthesis, (Y-2) or (Y-13) is more preferable.

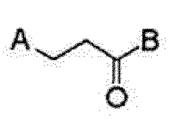
(Y-1)

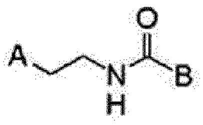
(Y-2)

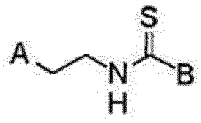
(Y-3)

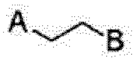
(Y-4)

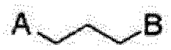
(Y-5)

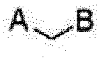
(Y-6)

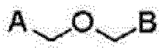
(Y-7)

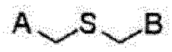
(Y-8)

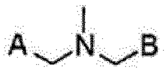
(Y-9)

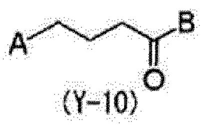
(Y-10)

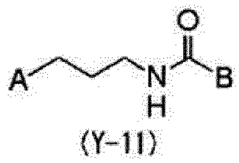
(Y-11)

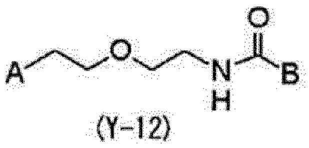
(Y-12)

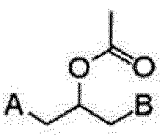
(Y-13)

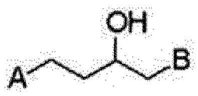
(Y-14)

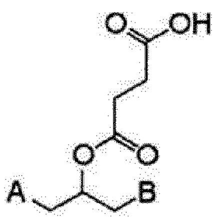
(Y-15)

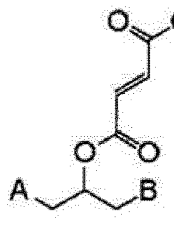
(Y-16)

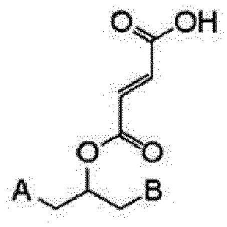
(Y-17)

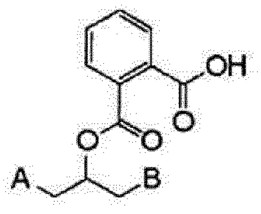
(Y-18)

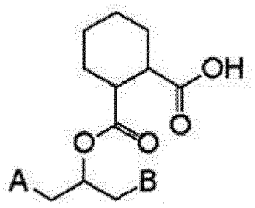
(Y-19)

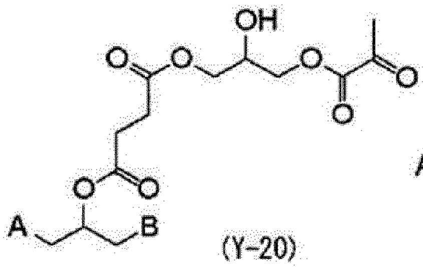
(Y-20)

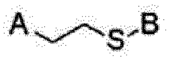
(Y-21)

In Formulae (1) to (4), $Z^1$, $Z^2$, $Z^3$, and $Z^4$ each independently represent a monovalent organic group. The structure of the organic group is not particularly limited, but specific examples thereof include an alkyl group, a hydroxyl group, an alkoxy group, an aryloxy group, a heteroaryloxy group, an alkylthioether group, an arylthioether group, a heteroarylthioether group, and an amino group. Among them, particularly from the viewpoint of improvement in the dispersibility, the organic groups represented by $Z^1$, $Z^2$, $Z^3$, and $Z^4$ are each preferably a group exhibiting a steric repulsion effect, and more preferably each independently an alkyl group or alkoxy group having 5 to 24 carbon atoms, and, among them, in particular, even more preferably each independently a branched alkyl group having 5 to 24 carbon atoms, a cyclic alkyl group having 5 to 24 carbon atoms, or an alkoxy group having 5 to 24 carbon atoms. Furthermore, the alkyl group contained in the alkoxy group may be any one of linear, branched, or cyclic.

In Formulae (1) to (4), n, m, p, and q are each independently an integer of 1 to 500.

Furthermore, in Formulae (1) and (2), j and k each independently represent an integer of 2 to 8. From the viewpoints of the temporal stability and developability of a light-shielding film-forming composition (hereinafter, simply referred to as a "composition" as well), which will be described later, j and k in Formulae (1) and (2) are each preferably an integer of 4 to 6 and more preferably 5.

In Formulae (1) and (2), n and m are each preferably an integer equal to or greater than 10 and more preferably an integer equal to or greater than 20. Moreover, in a case where the dispersant has a polycaprolactone structure and a polyvalerolactone structure, the sum of the repeating number of the polycaprolactone structure and the repeating number of the polyvalerolactone structure is preferably an integer equal to or greater than 10 and more preferably an integer equal to or greater than 20.

In Formula (3), $R^3$ represents a branched or linear alkylene group, and is preferably an alkylene group having 1 to 10 carbon atoms and more preferably an alkylene group having 2 or 3 carbon atoms. In a case where p is 2 to 500, a plurality of $R^3$' s may be the same as or different from each other.

In Formula (4), $R^4$ represents a hydrogen atom or a monovalent organic group, and the monovalent organic group has no particular limitation on a structure. As $R^4$, a hydrogen atom, an alkyl group, an aryl group, or a heteroaryl group is preferable, and a hydrogen atom or an alkyl group is more preferable. In a case where $R^4$ is an alkyl group, as the alkyl group, a linear alkyl group having 1 to 20 carbon atoms, a branched alkyl group having 3 to 20 carbon atoms, or a cyclic alkyl group having 5 to 20 carbon atoms is preferable, a linear alkyl group having 1 to 20 carbon atoms is more preferable, and a linear alkyl group having 1 to 6 carbon atoms is even more preferable. In a case where q in Formula (4) is 2 to 500, a plurality of $X^5$'s and a plurality of $R^4$'s in the graft copolymer may be respectively the same as or different from each other.

In addition, the polymer compound may have a structural unit which contains two or more different structures and contains a graft chain. That is, the structural units which are represented by Formulae (1) to (4) and have structures different from one another may be included in a molecule of the polymer compound, and in a case where n, m, p, and q in Formulae (1) to (4) each represent an integer equal to or greater than 2, in Formulae (1) and (2), structures in which j and k are different from each other may be included in the side chain, and in Formulae (3) and (4), a plurality of $R^3$'s, a plurality of $R^4$'s, and a plurality of $X^5$'s in the molecule may be respectively the same as or different from each other.

From the viewpoints of the temporal stability and developability of the composition, the structural unit represented

by Formula (1) is more preferably a structural unit represented by Formula (1A).

Furthermore, from the viewpoints of the temporal stability and developability of the composition, the structural unit represented by Formula (2) is more preferably a structural unit represented by Formula (2A).

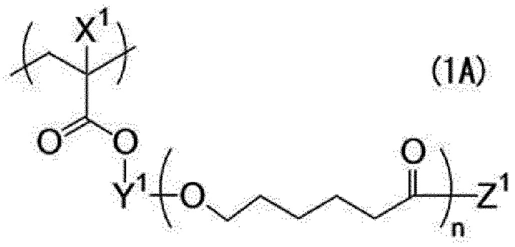

(1A)

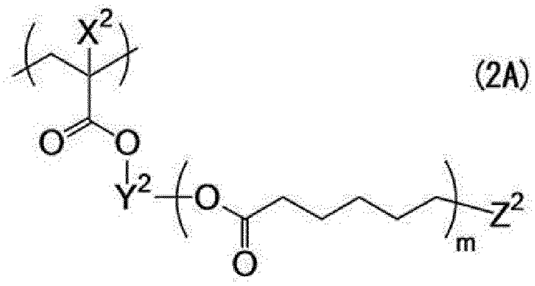

(2A)

$X^1$, $Y^1$, $Z^1$, and n in Formula (1A) have the same definitions as $X^1$, $Y^1$, $Z^1$, and n in Formula (1), and preferred ranges thereof are also the same. $X^2$, $Y^2$, $Z^2$, and m in Formula (2A) have the same definitions as $X^2$, $Y^2$, $Z^2$, and m in Formula (2), and preferred ranges thereof are also the same.

In addition, from the viewpoints of the temporal stability and developability of the composition, the structural unit represented by Formula (3) is more preferably a structural unit represented by Formula (3A) or (3B).

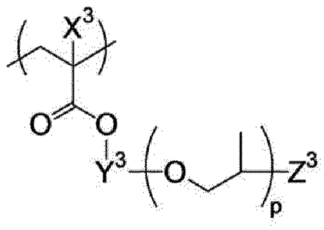

(3A)

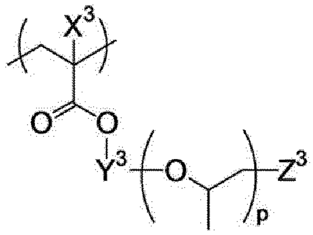

(3B)

$X^3$, $Y^3$, $Z^3$, and p in Formula (3A) or (3B) have the same definitions as $X^3$, $Y^3$, $Z^3$, and p in Formula (3), and preferred ranges thereof are also the same.

The polymer compound more preferably has, as a structural unit containing a graft chain, the structural unit represented by Formula (1A).

The content of the structural unit (for example, the structural units represented by Formulae (1) to (4)) containing a graft chain in the polymer compound is preferably within a range of 2% to 90% by mass and more preferably within a range of 5% to 30% by mass, in terms of mass, with respect to the total mass of the polymer compound. In a case where the content of the structural unit containing a graft chain is within the above range, the dispersibility of the pigment is high and the developability in a case of forming a light-shielding film is favorable.

• Hydrophobic structural unit

The polymer compound preferably has a hydrophobic structural unit which is different from the structural unit (that is, the structural unit does not correspond to the structural unit containing a graft chain) containing a graft chain. Here, in the present specification, the hydrophobic structural unit is a structural unit which does not have an acid group (for example, a carboxylic acid group, a sulfonic acid group, a phosphoric acid group, a phenolic hydroxyl group, or the like).

As the hydrophobic structural unit, a structural unit derived from (corresponding to) a compound (monomer)

having a ClogP value equal to or greater than 1.2 is preferable, and a structural unit derived from a compound having a ClogP value of 1.2 to 8 is more preferable. By doing so, the effect of the present invention can be more reliably exhibited.

The ClogP value is a value calculated by a program "CLOGP" available from Daylight Chemical Information System, Inc. This program provides a value of "calculated logP" calculated by the fragment approach (see the following documents) of Hansch and Leo. The fragment approach is based on a chemical structure of a compound, and the logP value of the compound is estimated by dividing the chemical structure into partial structures (fragments) and summing up degrees of contribution to logP which are assigned to the fragments. Details of the method are described in the following documents. In the present specification, a ClogP value calculated by a program CLOGP v4.82 is used.

A. J. Leo, Comprehensive Medicinal Chemistry, Vol. 4, C. Hansch, P. G. Sammnens, J. B. Taylor and C. A. Ramsden, Eds., p. 295, Pergamon press, 1990, C. Hansch & A. J. Leo. Substituent Constants For Correlation Analysis in Chemistry and Biology. John Wiley & Sons. A. J. Leo. Calculating logPoct from structure. Chem. Rev., 93, 1281 to 1306, 1993.

The logP refers to a common logarithm of a partition coefficient P, is a physical property value that shows how a certain organic compound is partitioned in an equilibrium of a two-phase system consisting of oil (generally, 1-octanol) and water by using a quantitative numerical value, and is expressed by the following expression.

$$\log P = \log(\mathrm{Coil}/\mathrm{Cwater})$$

In the expression, Coil represents a molar concentration of a compound in an oil phase, and Cwater represents a molar concentration of the compound in a water phase.

The greater the positive logP value based on 0, the higher the oil solubility, and the greater the absolute value of negative logP, the higher the water solubility. Accordingly, the value of logP has a negative correlation with the water solubility of an organic compound and is widely used as a parameter for estimating the hydrophilicity and hydrophobicity of an organic compound.

The polymer compound preferably has, as a hydrophobic structural unit, one or more structural units selected from structural units derived from monomers represented by Formulae (i) to (iii).

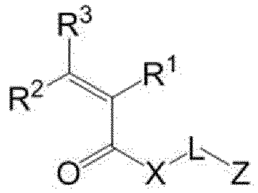

(i)

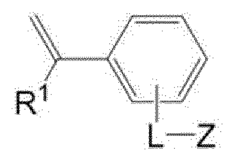

(ii)

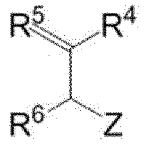

(iii)

In Formulae (i) to (iii), $R^1$, $R^2$, and $R^3$ each independently represent a hydrogen atom, a halogen atom (for example, a fluorine atom, a chlorine atom, a bromine atom, or the like), or an alkyl group (for example, a methyl group, an ethyl group, a propyl group, or the like) having 1 to 6 carbon atoms.

$R^1$, $R^2$, and $R^3$ are each preferably a hydrogen atom or an alkyl group having 1 to 3 carbon atoms, and more preferably a hydrogen atom or a methyl group. $R^2$ and $R^3$ are each even more preferably a hydrogen atom.

X represents an oxygen atom (-O-) or an imino group (-NH-), and is preferably an oxygen atom.

L is a single bond or a divalent linking group. Examples of the divalent linking group include a divalent aliphatic group (for example, an alkylene group, a substituted alkylene group, an alkenylene group, a substituted alkenylene group, an alkynylene group, or a substituted alkynylene group), a divalent aromatic group (for example, an arylene group or a substituted arylene group), a divalent heterocyclic group, an oxygen atom (-O-), a sulfur atom (-S-), an imino group

(-NH-), a substituted imino group (-$NR^{31}$-, where $R^{31}$ is an aliphatic group, an aromatic group, or a heterocyclic group), a carbonyl group (-CO-), and a combination thereof.

The divalent aliphatic group may have a cyclic structure or a branched structure. The number of carbon atoms in the aliphatic group is preferably 1 to 20, more preferably 1 to 15, and even more preferably 1 to 10. The aliphatic group may be an unsaturated aliphatic group or a saturated aliphatic group, but is preferably a saturated aliphatic group. Moreover, the aliphatic group may have a substituent. Examples of the substituent include a halogen atom, an aromatic group, and a heterocyclic group.

The number of carbon atoms in the divalent aromatic group is preferably 6 to 20, more preferably 6 to 15, and even more preferably 6 to 10. Moreover, the aromatic group may have a substituent. Examples of the substituent include a halogen atom, an aliphatic group, an aromatic group, and a heterocyclic group.

The divalent heterocyclic group preferably contains a 5-membered ring or a 6-membered ring as a heterocyclic ring. The heterocyclic ring may be fused with another heterocyclic ring, an aliphatic ring, or an aromatic ring. Moreover, the heterocyclic group may have a substituent. Examples of the substituent include a halogen atom, a hydroxyl group, an oxo group (=O), a thioxo group (=S), an imino group (=NH), a substituted imino group (=N-$R^{32}$, where $R^{32}$ is an aliphatic group, an aromatic group, or a heterocyclic group), an aliphatic group, an aromatic group, and a heterocyclic group.

L is preferably a single bond, an alkylene group, or a divalent linking group having an oxyalkylene structure. The oxyalkylene structure is more preferably an oxyethylene structure or an oxypropylene structure. Moreover, L may have a polyoxyalkylene structure which contains two or more repeating oxyalkylene structures. As the polyoxyalkylene structure, a polyoxyethylene structure or a polyoxypropylene structure is preferable. The polyoxyethylene structure is represented by $-(OCH_2CH_2)n-$, and n is preferably an integer equal to or greater than 2 and more preferably an integer of 2 to 10.

Examples of Z include an aliphatic group (for example, an alkyl group, a substituted alkyl group, an unsaturated alkyl group, or a substituted unsaturated alkyl group), an aromatic group (for example, an aryl group, a substituted aryl group, an arylene group, or a substituted arylene group), a heterocyclic group, and a combination thereof. These groups may contain an oxygen atom (-O-), a sulfur atom (-S-), an imino group (-NH-), a substituted imino group (-$NR^{31}$-, where $R^{31}$ is an aliphatic group, an aromatic group, or a heterocyclic group), or a carbonyl group (-CO-).

The aliphatic group may have a cyclic structure or a branched structure. The number of carbon atoms in the aliphatic group is preferably 1 to 20, more preferably 1 to 15, and even more preferably 1 to 10. The aliphatic group further contains a ring-aggregated hydrocarbon group or a crosslinked cyclic hydrocarbon group, and examples of the ring-aggregated hydrocarbon group include a bicyclohexyl group, a perhydronaphthalenyl group, a biphenyl group, and a 4-cyclohexylphenyl group. Examples of a crosslinked cyclic hydrocarbon ring include a bicyclic hydrocarbon ring such as pinane, bornane, norpinane, norbornane, and bicyclooctane rings (a bicyclo[2.2.2]octane ring, a bicyclo[3.2.1]octane ring, or the like); a tricyclic hydrocarbon ring such as homobredane, adamantane, tricyclo[5.2.1.$0^{2,6}$]decane, and tricyclo[4.3.1.$1^{2,5}$]undecane rings; and a tetracyclic hydrocarbon ring such as tetracyclo[4.4.0.$1^{2,5}$.$1^{7,10}$]dodecane and perhydro-1,4-methano-5,8-methanonaphthalene rings. Moreover, the crosslinked cyclic hydrocarbon ring also includes a fused cyclic hydrocarbon ring, for example, a fused ring in which a plurality of 5- to 8-membered cycloalkane rings, such as perhydronaphthalene (decalin), perhydroanthracene, perhydrophenanthrene, perhydroacenaphthene, perhydrofluorene, perhydroindene, and perhydrophenalene rings, are fused.

As the aliphatic group, a saturated aliphatic group is more preferable to an unsaturated aliphatic group. Moreover, the aliphatic group may have a substituent. Examples of the substituent include a halogen atom, an aromatic group, and a heterocyclic group. Here, the aliphatic group does not have an acid group as a substituent.

The number of carbon atoms in the aromatic group is preferably 6 to 20, more preferably 6 to 15, and even more preferably 6 to 10. Moreover, the aromatic group may have a substituent. Examples of the substituent include a halogen atom, an aliphatic group, an aromatic group, and a heterocyclic group. Here, the aromatic group does not have an acid group as a substituent.

The heterocyclic group preferably contains a 5-membered ring or a 6-membered ring as a heterocyclic ring. The heterocyclic ring may be fused with another heterocyclic ring, an aliphatic ring, or an aromatic ring. Moreover, the heterocyclic group may have a substituent. Examples of the substituent include a halogen atom, a hydroxyl group, an oxo group (=O), a thioxo group (=S), an imino group (=NH), a substituted imino group (=N-$R^{32}$, where $R^{32}$ is an aliphatic group, an aromatic group, or a heterocyclic group), an aliphatic group, an aromatic group, and a heterocyclic group. Here, the heterocyclic group does not have an acid group as a substituent.

In Formula (iii), $R^4$, $R^5$, and $R^6$ each independently represent a hydrogen atom, a halogen atom (for example, a fluorine atom, a chlorine atom, a bromine atom, or the like), an alkyl group (for example, a methyl group, an ethyl group, a propyl group, or the like) having 1 to 6 carbon atoms, Z, or L-Z. Herein, L and Z have the same definitions as L and Z described above. As $R^4$, $R^5$, and $R^6$, a hydrogen atom or an alkyl group having 1 to 3 carbon atoms is preferable, and a hydrogen atom is more preferable.

The monomer represented by Formula (i) is preferably a compound in which $R^1$, $R^2$, and $R^3$ are each a hydrogen

atom or a methyl group, L is a single bond, an alkylene group, or a divalent linking group having an oxyalkylene structure, X is an oxygen atom or an imino group, and Z is an aliphatic group, a heterocyclic group, or an aromatic group.

The monomer represented by Formula (ii) is preferably a compound in which $R^1$ is a hydrogen atom or a methyl group, L is an alkylene group, and Z is an aliphatic group, a heterocyclic group, or an aromatic group. Moreover, the monomer represented by Formula (iii) is preferably a compound in which $R^4$, $R^5$, and $R^6$ are each a hydrogen atom or a methyl group, and Z is an aliphatic group, a heterocyclic group, or an aromatic group.

Examples of typical compounds represented by Formulae (i) to (iii) include radically polymerizable compounds selected from acrylic acid esters, methacrylic acid esters, and styrenes.

Furthermore, regarding the examples of the typical compounds represented by Formulae (i) to (iii), reference can be made to the compounds described in paragraphs 0089 to 0093 of JP2013-249417A, the contents of which are incorporated into the present specification.

The content of the hydrophobic structural unit in the polymer compound is preferably within a range of 10% to 90% and more preferably within a range of 20% to 80%, in terms of mass, with respect to the total mass of the polymer compound. In a case where the content is within the above range, sufficient pattern formation can be obtained.

• Functional group capable of forming interaction with pigment or the like

A functional group capable of forming interaction with the pigment or the like (for example, a light-shielding pigment) can be introduced into the polymer compound. Herein, it is preferable that the polymer compound further has a structural unit containing a functional group capable of forming interaction with the pigment or the like.

Examples of the functional group capable of forming interaction with the pigment or the like include an acid group, a basic group, a coordinating group, and a reactive functional group.

In a case where the polymer compound contains an acid group, a basic group, a coordinating group, or a reactive functional group, it is preferable that the polymer compound contains a structural unit containing an acid group, a structural unit containing a basic group, a structural unit containing a coordinating group, or a reactive structural unit.

In particular, in a case where the polymer compound further contains, as an acid group, an alkali-soluble group such as a carboxylic acid group, developability for forming a pattern by alkali development can be imparted to the polymer compound.

That is, in a case where an alkali-soluble group is introduced into the polymer compound, in the composition, the polymer compound as a dispersant making a contribution to the dispersion of the pigment or the like has alkali solubility. The composition containing such a polymer compound is excellent in light-shielding properties of a light-shielding film formed by exposure, and improves alkali developability of an unexposed portion.

Furthermore, in a case where the polymer compound has a structural unit containing an acid group, the polymer compound is easily compatible with the solvent, and coating properties also tend to be improved.

It is presumed that this is because the acid group in the structural unit containing an acid group easily interacts with the pigment or the like, the polymer compound stably disperses the pigment or the like, the viscosity of the polymer compound dispersing the pigment or the like is reduced, and thus the polymer compound is also easily dispersed in a stable manner.

Here, the structural unit containing an alkali-soluble group as an acid group may be the same as or different from the structural unit containing a graft chain, but the structural unit containing an alkali-soluble group as an acid group is a structural unit different from the hydrophobic structural unit (that is, the structural unit does not correspond to the hydrophobic structural unit).

Examples of the acid group, which is the functional group capable of forming interaction with the pigment or the like, include a carboxylic acid group, a sulfonic acid group, a phosphoric acid group, and a phenolic hydroxyl group, at least one of a carboxylic acid group, a sulfonic acid group, or a phosphoric acid group is preferable, and a carboxylic acid group is more preferable. The carboxylic acid group has favorable adsorptive power to the pigment or the like and high dispersibility.

That is, it is preferable that the polymer compound further has a structural unit containing at least one of a carboxylic acid group, a sulfonic acid group, or a phosphoric acid group.

The polymer compound may have one or more structural units containing an acid group.

The polymer compound may or may not contain the structural unit containing the acid group, but in a case where the polymer compound contains the structural unit containing the acid group, the content thereof, in terms of mass, with respect to the total mass of the polymer compound is preferably 5% to 80% by mass, and more preferably 10% to 60% by mass from the viewpoint of suppressing damage of the image intensity by alkali development.

Examples of the basic group, which is the functional group capable of forming interaction with the pigment or the like, include a primary amino group, a secondary amino group, a tertiary amino group, a hetero ring containing a N atom, and an amide group, and a preferred basic group is a tertiary amino group from the viewpoints of favorable adsorptive power to the pigment or the like and high dispersibility. The polymer compound may contain one or more of

these basic groups.

The polymer compound may or may not contain the structural unit containing the basic group, but in a case where the polymer compound contains the structural unit containing the basic group, the content thereof, in terms of mass, with respect to the total mass of the polymer compound is preferably 0.01% to 50% by mass, and more preferably 0.01% to 30% by mass from the viewpoint of suppressing developability inhibition.

Examples of the coordinating group and the reactive functional group, which are the functional groups capable of forming interaction with the pigment or the like, include an acetyl acetoxy group, a trialkoxysilyl group, an isocyanate group, an acid anhydride, and an acid chloride. A preferred functional group is an acetyl acetoxy group from the viewpoints of favorable adsorptive power to the pigment or the like and high dispersibility of the pigment or the like. The polymer compound may have one or more of these groups.

The polymer compound may or may not contain the structural unit containing the coordinating group or the structural unit containing the reactive functional group, but in a case where the polymer compound contains the structural unit containing the coordinating group or the structural unit containing the reactive functional group, the content thereof, in terms of mass, with respect to the total mass of the polymer compound is preferably 10% to 80% by mass, and more preferably 20% to 60% by mass from the viewpoint of suppressing developability inhibition.

In a case where the polymer compound contains, other than the graft chain, the functional group capable of forming interaction with the pigment or the like, the functional groups capable of forming interaction with various pigments or the like may be contained, the way these functional groups are introduced is not particularly limited, but it is preferable that the polymer compound has one or more structural units selected from structural units derived from monomers represented by Formulae (iv) to (vi).

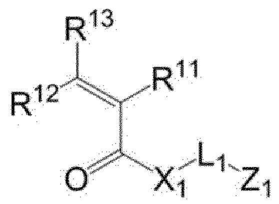

(iv)

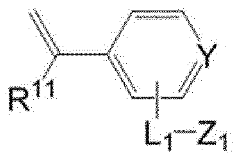

(v)

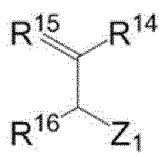

(vi)

In Formulae (iv) to (vi), $R^{11}$, $R^{12}$, and $R^{13}$ each independently represent a hydrogen atom, a halogen atom (for example, a fluorine atom, a chlorine atom, a bromine atom, or the like), or an alkyl group (for example, a methyl group, an ethyl group, a propyl group, or the like) having 1 to 6 carbon atoms.

In Formulae (iv) to (vi), $R^{11}$, $R^{12}$, and $R^{13}$ are preferably each independently a hydrogen atom or an alkyl group having 1 to 3 carbon atoms, and more preferably each independently a hydrogen atom or a methyl group. In Formula (iv), $R^{12}$ and $R^{13}$ are each even more preferably a hydrogen atom.

In Formula (iv), $X_1$ represents an oxygen atom (-O-) or an imino group (-NH-), and is preferably an oxygen atom.

Moreover, in Formula (v), Y represents a methine group or a nitrogen atom.

In addition, in Formulae (iv) and (v), $L_1$ represents a single bond or a divalent linking group. The divalent linking group has the same definition as the divalent linking group represented by L in Formula (i).

$L_1$ is preferably a single bond, an alkylene group, or a divalent linking group having an oxyalkylene structure. The oxyalkylene structure is more preferably an oxyethylene structure or an oxypropylene structure. Moreover, $L_1$ may have a polyoxyalkylene structure which contains two or more repeating oxyalkylene structures. As the polyoxyalkylene structure, a polyoxyethylene structure or a polyoxypropylene structure is preferable. The polyoxyethylene structure is represented by $-(OCH_2CH_2)n-$, and n is preferably an integer equal to or greater than 2 and more preferably an integer of 2 to 10.

In Formulae (iv) to (vi), $Z_1$ represents a functional group capable of forming interaction with the pigment or the

like other than a graft chain, and is preferably a carboxylic acid group and a tertiary amino group and more preferably a carboxylic acid group.

In Formula (vi), $R^{14}$, $R^{15}$, and $R^{16}$ each independently represent a hydrogen atom, a halogen atom (for example, a fluorine atom, a chlorine atom, a bromine atom, or the like), an alkyl group (for example, a methyl group, an ethyl group, a propyl group, or the like) having 1 to 6 carbon atoms, $-Z_1$, or $L_1$-$Z_1$. Herein, $L_1$ and $Z_1$ have the same definitions as $L_1$ and $Z_1$ described above, and preferred examples thereof are also the same. $R^{14}$, $R^{15}$, and $R^{16}$ are preferably each independently a hydrogen atom or an alkyl group having 1 to 3 carbon atoms, and more preferably each independently a hydrogen atom.

The monomer represented by Formula (iv) is preferably a compound in which $R^{11}$, $R^{12}$, and $R^{13}$ are each independently a hydrogen atom or a methyl group, $L_1$ is an alkylene group or a divalent linking group having an oxyalkylene structure, $X_1$ is an oxygen atom or an imino group, and $Z_1$ is a carboxylic acid group.

Moreover, the monomer represented by Formula (v) is preferably a compound in which $R^{11}$ is a hydrogen atom or a methyl group, $L_1$ is an alkylene group, $Z_1$ is a carboxylic acid group, and Y is a methine group.

Furthermore, the monomer represented by Formula (vi) is preferably a compound in which $R^{14}$, $R^{15}$, and $R^{16}$ are each independently a hydrogen atom or a methyl group, $L_1$ is a single bond or an alkylene group, and $Z_1$ is a carboxylic acid group.

Typical examples of the monomers (compounds) represented by Formulae (iv) to (vi) are shown below.

Examples of the monomers include methacrylic acid, crotonic acid, isocrotonic acid, a reaction product of a compound (for example, 2-hydroxyethyl methacrylate) containing an addition polymerizable double bond and a hydroxyl group in a molecule with a succinic acid anhydride, a reaction product of a compound containing an addition polymerizable double bond and a hydroxyl group in a molecule with a phthalic acid anhydride, a reaction product of a compound containing an addition polymerizable double bond and a hydroxyl group in a molecule with a tetrahydroxyphthalic acid anhydride, a reaction product of a compound containing an addition polymerizable double bond and a hydroxyl group in a molecule with trimellitic acid anhydride, a reaction product of a compound containing an addition polymerizable double bond and a hydroxyl group in a molecule with a pyromellitic acid anhydride, acrylic acid, an acrylic acid dimer, an acrylic acid oligomer, maleic acid, itaconic acid, fumaric acid, 4-vinylbenzoic acid, vinyl phenol, and 4-hydroxyphenyl methacrylamide.

From the viewpoints of the interaction with the pigment or the like, the temporal stability, and the permeability into a developer, the content of the structural unit containing a functional group capable of forming interaction with the pigment or the like is preferably 0.05% to 90% by mass, more preferably 1.0% to 80% by mass, and even more preferably 10% to 70% by mass, with respect to the total mass of the polymer compound.

• Other structural units

In addition, for the purpose of improving various performances such as image intensity, as long as the effects of the present invention are not impaired, the polymer compound may further have other structural units (for example, a structural unit containing a functional group or the like having an affinity with the solvent which will be described later) which have various functions and are different from the structural unit containing a graft chain, the hydrophobic structural unit, and the structural unit containing a functional group capable of forming interaction with the pigment or the like.

Examples of such other structural units include structural units derived from radically polymerizable compounds selected from acrylonitriles and methacrylonitriles.

The polymer compound may have one or more of these other structural units, and the content thereof is preferably 0% to 80% by mass and more preferably 10% to 60% by mass, in terms of mass, with respect to the total mass of the polymer compound. In a case where the content is within the above range, sufficient pattern formability is maintained.

• Physical properties of polymer compound

An acid value of the polymer compound is preferably 0 to 250 mg KOH/g, more preferably 10 to 200 mg KOH/g, even more preferably 30 to 180 mg KOH/g, and particularly preferably in a range of 70 to 120 mg KOH/g.

In a case where the acid value of the polymer compound is equal to or lower than 160 mg KOH/g, pattern peeling during development in a case of forming a light-shielding film is more effectively suppressed. Moreover, in a case where the acid value of the polymer compound is equal to or higher than 10 mg KOH/g, the alkali developability is improved. Furthermore, in a case where the acid value of the polymer compound is equal to or higher than 20 mg KOH/g, the precipitation of the pigment or the like can be further suppressed, the number of coarse particles can be further reduced, and the temporal stability of the composition can be further improved.

In the present specification, the acid value can be calculated, for example, from the average content of acid groups in the compound. Moreover, a resin having a desired acid value can be obtained by changing the content of the

structural unit containing an acid group, which is a constituent component of the resin.

A weight-average molecular weight of the polymer compound is preferably 4,000 to 300,000, more preferably 5,000 to 200,000, even more preferably 6,000 to 100,000, and particularly preferably 10,000 to 50,000.

The polymer compound can be synthesized based on known methods.

Specific examples of the polymer compound include "DA-7301" produced by Kusumoto Chemicals, Ltd., "Disperbyk-101 (polyamidoamine phosphate), 107 (carboxylic acid ester), 110 (copolymer containing an acid group), 111 (phosphoric acid-based dispersant), 130 (polyamide), 161, 162, 163, 164, 165, 166, 170, and 190 (polymeric copolymer)" and "BYK-P104 and P105 (high-molecular-weight unsaturated polycarboxylic acid)" produced by BYK-Chemie GmbH, "EFKA 4047, 4050 to 4010 to 4165 (based on polyurethane), EFKA 4330 to 4340 (block copolymer), 4400 to 4402 (modified polyacrylate), 5010 (polyester amide), 5765 (high-molecular-weight polycarboxylate), 6220 (fatty acid polyester), 6745 (phthalocyanine derivative), and 6750 (azo pigment derivative)" produced by EFKA, "AJISPER PB821, PB822, PB880, and PB881" produced by Ajinomoto Fine-Techno Co., Inc., "FLOWLEN TG-710 (urethane oligomer)" and "POLYFLOW No. 50E and No. 300 (acrylic copolymer)" produced by KYOEISHA CHEMICAL Co., LTD., "DISPARLON KS-860, 873SN, 874, #2150 (aliphatic polyvalent carboxylic acid), #7004 (polyether ester), DA-703-50, DA-705, and DA-725" produced by Kusumoto Chemicals, Ltd., "DEMOL RN, N (naphthalenesulfonic acid-formalin polycondensate), MS, C, and SN-B (aromatic sulfonic acid-formalin polycondensate)", "HOMOGENOL L-18 (polymeric polycarboxylic acid)", "EMULGEN 920, 930, 935, and 985 (polyoxyethylene nonylphenyl ether)", and "ACETAMIN 86 (stearylamine acetate)" produced by Kao Corporation, "SOLSPERSE 5000 (phthalocyanine derivative), 22000 (azo pigment derivative), 13240 (polyester amine), 3000, 12000, 17000, 20000, 27000 (polymer containing a functional portion on a terminal portion), 24000, 28000, 32000, and 38500 (graft copolymer)" produced by Lubrizol Japan Limited, "NIKKOL T106 (polyoxyethylene sorbitan monooleate), and MYS-IEX (polyoxyethylene monostearate)" produced by Nikko Chemicals Co., Ltd., HINOACT T-8000E and the like produced by Kawaken Fine Chemicals Co., Ltd., an organosiloxane polymer KP-341 produced by Shin-Etsu Chemical Co., Ltd., "W001: cationic surfactant", nonionic surfactants such as polyoxyethylene lauryl ether, polyoxyethylene stearyl ether, polyoxyethylene oleyl ether, polyoxyethylene octyl phenyl ether, polyoxyethylene nonylphenyl ether, polyethylene glycol dilaurate, polyethylene glycol distearate, and a sorbitan fatty acid ester, and anionic surfactants such as "W004, W005, and W017" produced by Yusho Co., Ltd., "EFKA-46, EFKA-47, EFKA-47EA, EFKA polymer 100, EFKA polymer 400, EFKA polymer 401, and EFKA polymer 450" produced by MORISHITA & CO., LTD., polymer dispersants such as "DISPERSE AID 6, DISPERSE AID 8, DISPERSE AID 15, and DISPERSE AID 9100" produced by SAN NOPCO LIMITED, "ADEKAPLURONIC L31, F38, L42, L44, L61, L64, F68, L72, P95, F77, P84, F87, P94, L101, P103, F108, L121, and P-123" produced by ADEKA CORPORATION, and "IONET (trade name) S-20" produced by Sanyo Chemical Industries, Ltd. Moreover, ACRYBASE FFS-6752 and ACRYBASE FFS-187 can also be used.

In addition, it is also preferable that an amphoteric resin containing an acid group and a basic group is used. The amphoteric resin is preferably a resin having an acid value equal to or higher than 5 mg KOH/g and an amine value equal to or higher than 5 mg KOH/g.

Examples of commercial products of the amphoteric resin include DISPERBYK-130, DISPERBYK-140, DISPERBYK-142, DISPERBYK-145, DISPERBYK-180, DISPERBYK-187, DISPERBYK-191, DISPERBYK-2001, DISPERBYK-2010, DISPERBYK-2012, DISPERBYK-2025, and BYK-9076 produced by BYK-Chemie GmbH, and AJISPER PB821, AJISPER PB822, and AJISPER PB881 produced by Ajinomoto Fine-Techno Co., Inc.

These polymer compounds may be used singly or in combination of two or more thereof.

Furthermore, regarding specific examples of the polymer compound, reference can be made to the polymer compound described in paragraphs 0127 to 0129 of JP2013-249417A, the contents of which are incorporated into the present specification.

In addition, as the dispersant, in addition to the aforementioned polymer compounds, the graft copolymer described in paragraphs 0037 to 0115 of JP2010-106268A (corresponding to paragraphs 0075 to 0133 of US2011/0124824A) can be used, the contents of which can be incorporated by reference into the present specification.

Moreover, in addition to the aforementioned dispersant, the polymer compound described in paragraphs 0028 to 0084 of JP2011-153283A (corresponding to paragraphs 0075 to 0133 of US2011/0279759A) which contains a constituent component having a side chain structure formed by bonding of acidic groups through a linking group can be used, the contents of which can be incorporated by reference into the present specification.

Furthermore, as the dispersant, the resin described in paragraphs 0033 to 0049 of JP2016-109763A can also be used, the contents of which are incorporated into the present specification.

<Alkali-soluble resin>

The light-shielding film preferably contains an alkali-soluble resin. In the present specification, the alkali-soluble resin refers to a resin containing a group (an alkali-soluble group, for example, an acid group such as a carboxylic acid group) which promotes alkali solubility, and refers to a resin different from the dispersant described above.

A content of the alkali-soluble resin in the light-shielding film is not particularly limited, but is preferably 1% to 30% by mass, more preferably 2% to 20% by mass, and even more preferably 5% to 15% by mass, with respect to the total mass of the light-shielding film.

The alkali-soluble resins may be used singly or in combination of two or more thereof. In a case where two or more alkali-soluble resins are used in combination, the total content thereof is preferably within the above range.

As the alkali-soluble resin, a resin containing at least one alkali-soluble group in a molecule is mentioned, and examples thereof include a polyhydroxystyrene resin, a polysiloxane resin, a (meth)acrylic resin, a (meth)acrylamide resin, a (meth)acryl/(meth)acrylamide copolymer resin, an epoxy-based resin, and a polyimide resin.

Specific examples of the alkali-soluble resin include a copolymer of an unsaturated carboxylic acid and an ethylenically unsaturated compound.

The unsaturated carboxylic acid is not particularly limited, but examples thereof include monocarboxylic acids such as (meth)acrylic acid, crotonic acid, and vinyl acetate; dicarboxylic acid such as itaconic acid, maleic acid, and fumaric acid or an acid anhydride thereof; and polyvalent carboxylic acid monoesters such as mono(2-(meth)acryloyloxyethyl)phthalate.

Examples of a copolymerizable ethylenically unsaturated compound include methyl (meth)acrylate. Moreover, the compounds described in paragraph 0027 of JP2010-097210A and paragraphs 0036 and 0037 of JP2015-068893A can also be used, the contents of which are incorporated into the present specification.

Furthermore, copolymerizable ethylenically unsaturated compounds containing an ethylenically unsaturated group in a side chain may be used in combination. As the ethylenically unsaturated group, a (meth)acrylic acid group is preferable. An acrylic resin containing an ethylenically unsaturated group in a side chain can be obtained, for example, by addition-reacting a carboxylic acid group of an acrylic resin containing the carboxylic acid group with an ethylenically unsaturated compound containing a glycidyl group or an alicyclic epoxy group.

As the alkali-soluble resin, an alkali-soluble resin containing a curable group is also preferable.

As the curable group, the curable groups, which may be contained in the aforementioned polymer compound, are also mentioned, and preferred ranges are also the same.

The alkali-soluble resin containing a curable group is preferably an alkali-soluble resin having a curable group in the side chain, or the like. Examples of the alkali-soluble resin containing a curable group include DIANAL NR series (produced by Mitsubishi Rayon Co., Ltd.), Photomer 6173 (COOH-containing polyurethane acrylic oligomer, produced by Diamond Shamrock Co., Ltd.), VISCOAT R-264 and KS resist 106 (all produced by OSAKA ORGANIC CHEMICAL INDUSTRY LTD.), CYCLOMER P series (for example, ACA230AA) and PLACCEL CF200 series (all produced by DAICEL CORPORATION), Ebecryl 3800 (produced by DAICEL-ALLNEX LTD.), and ACRYCURE RD-F8 (produced by NIPPON SHOKUBAI CO., LTD.).

As the alkali-soluble resin, for example, the radical polymers which contain a carboxylic acid group in a side chain and are described in JP1984-044615A (JP-S59-044615A), JP1979-034327B (JP-S54-034327B), JP1983-012577B (JP-S58-012577B), JP1979-025957B (JP-S54-025957B), JP1979-092723A (JP-S54-092723A), JP1984-053836A (JP-S59-053836A), and JP1984-071048A (JP-S59-071048A); the acetal-modified polyvinyl alcohol-based binder resins which contain an alkali-soluble group and are described in EP993966B, EP1204000B, and JP2001-318463A; polyvinyl pyrrolidone; polyethylene oxide; polyether or the like which is a reaction product of alcohol-soluble nylon, 2,2-bis-(4-hydroxyphenyl)-propane, and epichlorohydrin; the polyimide resin described in WO2008/123097A; and the like can be used.

As the alkali-soluble resin, for example, the compound described in paragraphs 0225 to 0245 of JP2016-075845A can also be used, the contents of which are incorporated into the present specification.

As the alkali-soluble resin, a polyimide precursor can also be used. The polyimide precursor refers to a resin obtained by causing an addition polymerization reaction between a compound containing an acid anhydride group and a diamine compound at a temperature of 40°C to 100°C.

Examples of the polyimide precursor include a resin having a repeating unit represented by Formula (1). Examples of the polyimide precursor include polyimide precursors containing an amic acid structure represented by Formula (2), and imide structures represented by Formula (3) obtained in a case where imide ring closure occurs in a portion of an amic acid structure and Formula (4) obtained in a case where imide ring closure occurs in the entirety of an amic acid structure.

Furthermore, in the present specification, the polyimide precursor having an amic acid structure is referred to as polyamic acid in some cases.

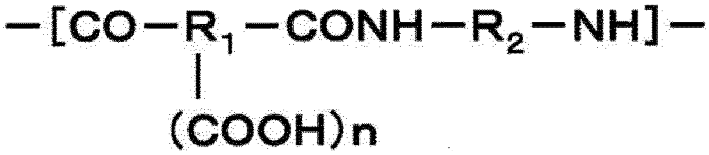

(1)

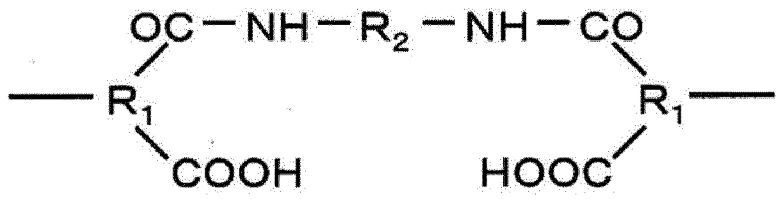

(2)

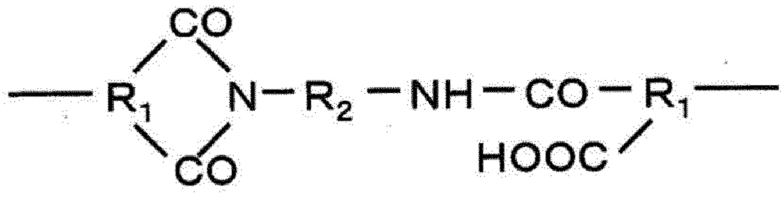

(3)

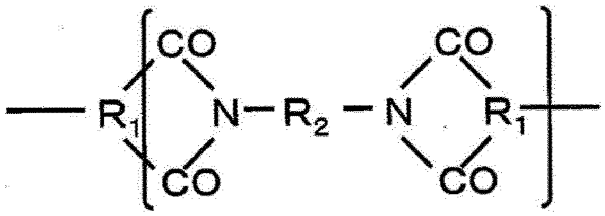

(4)

In Formulae (1) to (4), $R_1$ represents a tetravalent organic group having 2 to 22 carbon atoms, $R_2$ represents a divalent organic group having 1 to 22 carbon atoms, and n represents 1 or 2.

Specific examples of the polyimide precursor include the compound described in paragraphs 0011 to 0031 of JP2008-106250A, the compound described in paragraphs 0022 to 0039 of JP2016-122101A, and the compound described in paragraphs 0061 to 0092 of JP2016-068401A, the contents of which are incorporated into the present specification.

From the viewpoint that a pattern shape of a pattern-like light-shielding film formed of the composition is superior, it is also preferable that the alkali-soluble resin contains at least one selected from the group consisting of a polyimide resin and a polyimide precursor.

The polyimide resin containing the alkali-soluble group is not particularly limited, and known polyimide resins containing the alkali-soluble group can be used. Examples of the polyimide resin include the resin described in paragraph 0050 of JP2014-137523A, the resin described in paragraph 0058 of JP2015-187676A, and the resin described in paragraphs 0012 and 0013 of JP2014-106326A, the contents of which are incorporated into the present specification.

(Resin containing ethylenically unsaturated group)

The light-shielding film preferably contains a resin containing an ethylenically unsaturated group. The resin containing an ethylenically unsaturated group may be a dispersant or an alkali-soluble resin. Moreover, the resin containing an ethylenically unsaturated group may be a resin other than the dispersant or the alkali-soluble resin.

The lower limit of a content of the resin containing an ethylenically unsaturated group in the light-shielding film is preferably equal to or greater than 30% by mass, more preferably equal to or greater than 50% by mass, even more preferably equal to or greater than 65% by mass, and particularly preferably equal to or greater than 85% by mass, with respect to the total mass of the resins contained in the light-shielding film.

The upper limit of the content of the resin containing an ethylenically unsaturated group in the light-shielding film is preferably equal to or less than 100% by mass with respect to the total mass of the resins contained in the light-shielding film.

One resin containing an ethylenically unsaturated group may be used singly or two or more resins containing an ethylenically unsaturated group may be used, and in a case where two or more resins containing an ethylenically unsaturated group are used, the total content thereof is preferably within the above range.

Furthermore, the resin containing an ethylenically unsaturated group refers to a resin containing one or more ethylenically unsaturated groups in one molecule.

The content of the resin containing an ethylenically unsaturated group may be calculated from the charged amount of raw materials.

In addition, the content of the ethylenically unsaturated group with respect to the total resin mass is not particularly

limited, but is preferably 0.001 to 5.00 mmol/g, more preferably 0.10 to 3.00 mmol/g, and even more preferably 0.26 to 2.50 mmol/g.

Furthermore, the total resin mass means the total mass of the resins contained in the light-shielding film, and for example, in a case where the light-shielding film contains a resin containing an ethylenically unsaturated group and a resin containing no ethylenically unsaturated group, the total mass of both resins corresponds to the total mass of the resins.

Therefore, the content of the ethylenically unsaturated group represents the content of the ethylenically unsaturated group in the resin, which contains the ethylenically unsaturated group, with respect to the total resin mass.

Moreover, the resin refers to a component having a weight-average molecular weight greater than 2,000.

In the present specification, the content of the ethylenically unsaturated group is referred to as a "C=C value" in some cases.

In the present specification, the content (C=C value) of the ethylenically unsaturated group means a value measured by the following method. Moreover, in a case where a resin containing an ethylenically unsaturated group is synthesized, the content (C=C value) may be calculated from the charged amount of raw materials and substituted for measurement.

Furthermore, in a case where the light-shielding film contains a plurality of resins and the C=C value of each resin is clear, the C=C value as the total resin mass in the light-shielding film may be calculated and determined from a formulation ratio of each resin.

<Other materials>

The light-shielding film may contain other components in addition to the black coloring material and the resin.

For example, the other components may be pigments other than the black coloring material, and the other pigments may be each an inorganic pigment or an organic pigment.

The inorganic pigment is not particularly limited, and known inorganic pigments can be used.

Examples of the inorganic pigment include zinc oxide, white lead, lithopone, titanium oxide, chromium oxide, iron oxide, precipitated barium sulfate and a barite powder, red lead, red iron oxide, chrome yellow, zinc yellow (zinc yellow type 1 and zinc yellow type 2), ultramarine blue, Prussian blue (potassium ferric ferrocyanide), zircon grey, Praseodymium yellow, chromium titanium yellow, chrome green, peacock, Victoria green, iron blue (irrelevant to Prussian blue), vanadium zirconium blue, chrome tin pink, manganese pink, and salmon pink.

The inorganic pigment may be subjected to a surface modification treatment. For example, an inorganic pigment, which is subjected to a surface modification treatment with a surface-treating agent having both a silicone group and an alkyl group, is mentioned, and examples thereof include "KTP-09" series (produced by Shin-Etsu Chemical Co., Ltd.).

A pigment having infrared-absorbing properties can also be used.

As the pigment having infrared-absorbing properties, a tungsten compound, a metal boride, and the like are preferable, and among them, from the viewpoint that light-shielding properties at a wavelength in an infrared range are excellent, a tungsten compound is preferable.

These pigments may be used in combination of two or more thereof, and may be used in combination with a dye which will be described later. In order to adjust tint and to enhance light-shielding properties in a desired wavelength range, for example, an aspect in which a dye described later or a pigment which has a chromatic color such as red, green, yellow, orange, violet, and blue is mixed with a pigment which is black or has infrared ray-shielding properties can be mentioned. It is preferable that a red pigment or dye or a violet pigment or dye is mixed with the pigment having infrared ray-shielding properties, and more preferable that a red pigment is mixed with a pigment having infrared ray-shielding properties.

Furthermore, an infrared absorber, which will be described later, may be added.

Examples of organic pigments include: Color Index (C. I.) Pigment Yellow 1, 2, 3, 4, 5, 6, 10, 11, 12, 13, 14, 15, 16, 17, 18, 20, 24, 31, 32, 34, 35, 35:1, 36, 36:1, 37, 37:1, 40, 42, 43, 53, 55, 60, 61, 62, 63, 65, 73, 74, 77, 81, 83, 86, 93, 94, 95, 97, 98, 100, 101, 104, 106, 108, 109, 110, 113, 114, 115, 116, 117, 118, 119, 120, 123, 125, 126, 127, 128, 129, 137, 138, 139, 147, 148, 150, 151, 152, 153, 154, 155, 156, 161, 162, 164, 166, 167, 168, 169, 170, 171, 172, 173, 174, 175, 176, 177, 179, 180, 181, 182, 185, 187, 188, 193, 194, 199, 213, 214, and the like;

C. I. Pigment Orange 2, 5, 13, 16, 17:1, 31, 34, 36, 38, 43, 46, 48, 49, 51, 52, 55, 59, 60, 61, 62, 64, 71, 73, and the like;
C. I. Pigment Red 1, 2, 3, 4, 5, 6, 7, 9, 10, 14, 17, 22, 23, 31, 38, 41, 48:1, 48:2, 48:3, 48:4, 49, 49:1, 49:2, 52:1, 52:2, 53:1, 57:1, 60:1, 63:1, 66, 67, 81:1, 81:2, 81:3, 83, 88, 90, 105, 112, 119, 122, 123, 144, 146, 149, 150, 155, 166, 168, 169, 170, 171, 172, 175, 176, 177, 178, 179, 184, 185, 187, 188, 190, 200, 202, 206, 207, 208, 209, 210, 216, 220, 224, 226, 242, 246, 254, 255, 264, 270, 272, 279, 294 (base on xanthene, Organo Ultramarine, Bluish Red), and the like;
C. I. Pigment Green 7, 10, 36, 37, 58, 59, and the like;

C. I. Pigment Violet 1, 19, 23, 27, 32, 37, 42, and the like; and

C. I. Pigment Blue 1, 2, 15, 15:1, 15:2, 15:3, 15:4, 15:6, 16, 22, 29, 60, 64, 66, 79, 80, 87 (based on monoazo), 88 (based on methine/polymethine), and the like. Furthermore, the pigments may be used singly or in combination of two or more thereof.

As a coloring dye, for example, the colorant described in paragraphs 0027 to 0200 of JP2014-042375A can also be used in addition to a dye (chromatic dye) having a chromatic color such as red (R), green (G), and blue (B). Moreover, a black dye can be used.

As the dye, for example, the coloring agents disclosed in JP1989-090403A (JP-S64-090403A), JP1989-091102A (JP-S64-091102A), JP1989-094301A (JP-H01-094301A), JP1994-011614A (JP-H06-011614A), JP2592207B, US4808501A, US5667920A, US0505950A, JP1993-333207A (JP-H05-333207A), JP1994-035183A (JP-H06-035183A), JP1994-051115A (JP-H06-051115A), JP1994-194828A (JP-H06-194828A), and the like can be used. In a case where the dyes are sorted based on the chemical structure, a pyrazole azo compound, a pyrromethene compound, an anilinoazo compound, a triphenylmethane compound, an anthraquinone compound, a benzylidene compound, an oxonol compound, a pyrazolotriazole azo compound, a pyridone azo compound, a cyanine compound, a phenothiazine compound, a pyrrolopyrazole azomethine compound, or the like can be used. Moreover, a coloring agent multimer may be used as the dye. Examples of the coloring agent multimer include the compounds described in JP2011-213925A and JP2013-041097A. Furthermore, a polymerizable dye having a polymerizable group in a molecule may be used, and examples of a commercial product thereof include RDW series produced by FUJIFILM Wako Pure Chemical Corporation.

As the other components, an infrared absorber is also mentioned.

The infrared absorber refers to a compound having absorption in a wavelength range of an infrared range (preferably, wavelengths of 650 to 1,300 nm). The infrared absorber is preferably a compound having a maximum absorption in a wavelength range of 675 to 900 nm.

Examples of a colorant having such spectral characteristics include a pyrrolopyrrole compound, a copper compound, a cyanine compound, a phthalocyanine compound, an iminium compound, a thiol complex-based compound, a transition metal oxide-based compound, a squarylium compound, a naphthalocyanine compound, a quotelylene compound, a dithiol metal complex-based compound, and a croconium compound.

As the phthalocyanine compound, the naphthalocyanine compound, the iminium compound, the cyanine compound, the squarylium compound, and the croconium compound, the compounds disclosed in paragraphs 0010 to 0081 of JP2010-111750A may be used, the contents of which are incorporated into the present specification. Regarding the cyanine compound, reference can be made to, for example, "Functional Dyes, written by Makoto OKAWARA, Masaru MATSUOKA, Teijiro KITAO, and Tsuneaki HIRASHIMA, Kodansha Scientific Ltd.", the contents of which are incorporated into the specification of the present application.

As the colorant having the spectral characteristics, the compound disclosed in paragraphs 0004 to 0016 of JP1995-164729A (JP-H07-164729A) and/or the compound disclosed in paragraphs 0027 to 0062 of JP2002-146254A, and the near-infrared absorption particles which are disclosed in paragraphs 0034 to 0067 of JP2011-164583A, consist of crystallites of an oxide containing Cu and/or P, and have a number-average aggregated particle diameter of 5 to 200 nm may be used.

As the compound having a maximum absorption in a wavelength range of 675 to 900 nm, at least one selected from the group consisting of a cyanine compound, a pyrrolopyrrole compound, a squarylium compound, a phthalocyanine compound, and a naphthalocyanine compound is preferable.

Furthermore, the infrared absorber is preferably a compound which is dissolved in an amount equal to or greater than 1% by mass in water at 25°C, and more preferably a compound which is dissolved in an amount equal to or greater than 10% by mass in water at 25°C. In a case where such a compound is used, solvent resistance is improved.

Regarding the pyrrolopyrrole compound, reference can be made to paragraphs 0049 to 0062 of JP2010-222557A, the contents of which are incorporated into the present specification. Regarding the cyanine compound and the squarylium compound, reference can be made to paragraphs 0022 to 0063 of WO2014/088063A, paragraphs 0053 to 0118 of WO2014/030628A, paragraphs 0028 to 0074 of JP2014-059550A, paragraphs 0013 to 0091 of WO2012/169447A, paragraphs 0019 to 0033 of JP2015-176046A, paragraphs 0053 to 0099 of JP2014-063144A, paragraphs 0085 to 0150 of JP2014-052431A, paragraphs 0076 to 0124 of JP2014-044301A, paragraphs 0045 to 0078 of JP2012-008532A, paragraphs 0027 to 0067 of JP2015-172102A, paragraphs 0029 to 0067 of JP2015-172004A, paragraphs 0029 to 0085 of JP2015-040895A, paragraphs 0022 to 0036 of JP2014-126642A, paragraphs 0011 to 0017 of JP2014-148567A, paragraphs 0010 to 0025 of JP2015-157893A, paragraphs 0013 to 0026 of JP2014-095007A, paragraphs 0013 to 0047 of JP2014-080487A, paragraphs 0007 to 0028 of JP2013-227403A, and the like, the contents of which are incorporated into the present specification.

A method for manufacturing the light-shielding film is not particularly limited, but from the viewpoint that the effect of the present invention is superior, the light-shielding film is preferably formed of a light-shielding film-forming

composition (composition).

The light-shielding film-forming composition preferably contains the black coloring material, a compound containing an ethylenically unsaturated group, and a polymerization initiator. Hereinafter, various components contained in the light-shielding film-forming composition will be described in detail.

The definition of the black coloring material is as described above.

<Polymerizable compound>

The composition preferably contains a polymerizable compound. In the present specification, the polymerizable compound refers to a compound which is polymerized by the action of the polymerization initiator, which will be described later, and refers to a component different from the aforementioned dispersant and alkali-soluble resin.

Moreover, the polymerizable compound refers to a component different from an epoxy group-containing compound which will be described later.

A content of the polymerizable compound in the composition is not particularly limited, but is preferably 5% to 35% by mass, more preferably 10% to 30% by mass, and even more preferably 15% to 25% by mass, with respect to the total solid content of the composition. The polymerizable compounds may be used singly or in combination of two or more thereof. In a case where two or more polymerizable compounds are used in combination, the total content thereof is preferably within the above range.

The polymerizable compound is preferably a low-molecular-weight compound, and the low-molecular-weight compound mentioned here is a compound having a molecular weight equal to or less than 2,000.

The polymerizable compound is preferably a compound which contains a group (hereinafter, simply referred to as an "ethylenically unsaturated group" as well) containing an ethylenically unsaturated bond.

That is, the composition preferably contains, as a polymerizable compound, a low-molecular-weight compound containing an ethylenically unsaturated group.

The polymerizable compound is preferably a compound containing one or more ethylenically unsaturated bonds, more preferably a compound containing two or more ethylenically unsaturated bonds, even more preferably a compound containing three or more ethylenically unsaturated bonds, and particularly preferably a compound containing five or more ethylenically unsaturated bonds. The upper limit thereof is equal to or smaller than 15, for example. Examples of the ethylenically unsaturated group include a vinyl group, a (meth)allyl group, and a (meth)acryloyl group.

As the polymerizable compound, for example, the compounds described in paragraph 0050 of JP2008-260927A and paragraph 0040 of JP2015-068893A can be used, the contents of which are incorporated into the present specification.

The polymerizable compound may be in any chemical form such as a monomer, a prepolymer, an oligomer, a mixture thereof, and a multimer thereof.

The polymerizable compound is preferably a tri- to pentadeca-functional (meth)acrylate compound, and more preferably a tri- to hexa-functional (meth)acrylate compound.

As the polymerizable compound, a compound which contains one or more ethylenically unsaturated groups and has a boiling point equal to or higher than 100°C under normal pressure is also preferable. Reference can be made to, for example, the compounds described in paragraph 0227 of JP2013-029760A and paragraphs 0254 to 0257 of JP2008-292970A, the contents of which are incorporated into the present specification.

As the polymerizable compound, dipentaerythritol triacrylate (as a commercial product, KAYARAD D-330; produced by Nippon Kayaku Co., Ltd.), dipentaerythritol tetraacrylate (as a commercial product, KAYARAD D-320; produced by Nippon Kayaku Co., Ltd.), dipentaerythritol penta(meth)acrylate (as a commercial product, KAYARAD D-310; produced by Nippon Kayaku Co., Ltd.), dipentaerythritol hexa(meth)acrylate (as a commercial product, KAYARAD DPHA; produced by Nippon Kayaku Co., Ltd., and A-DPH-12E; produced by Shin-Nakamura Chemical Co., Ltd.), and a structure (for example, SR454 and SR499 commercially available from Sartomer) in which an ethylene glycol residue or a propylene glycol residue is between these (meth)acryloyl groups are preferable. Oligomer types thereof can also be used. Moreover, NK ESTER A-TMMT (pentaerythritol tetraacrylate, produced by Shin-Nakamura Chemical Co., Ltd.), KAYARAD RP-1040, KAYARAD DPEA-12LT, KAYARAD DPHA LT, KAYARAD RP-3060, and KAYARAD DPEA-12 (produced by Nippon Kayaku Co., Ltd.), and the like may be used.

The preferred aspects of the polymerizable compound are shown below.

The polymerizable compound may have an acid group such as a carboxylic acid group, a sulfonic acid group, and a phosphoric acid group. The polymerizable compound containing an acid group is preferably an ester of an aliphatic polyhydroxy compound and an unsaturated carboxylic acid, more preferably a polymerizable compound having an acid group by reacting a nonaromatic carboxylic acid anhydride with an unreacted hydroxyl group of an aliphatic polyhydroxy compound, and even more preferably a compound in which the aliphatic polyhydroxy compound in the ester is pentaerythritol and/or dipentaerythritol. Examples of a commercial product thereof include ARONIX TO-2349, M-305, M-510, and M-520 produced by TOAGOSEI CO., LTD.

The acid value of the polymerizable compound containing an acid group is preferably 0.1 to 40 mg KOH/g and more preferably 5 to 30 mg KOH/g. In a case where the acid value of the polymerizable compound is equal to or greater than 0.1 mg KOH/g, development dissolution characteristics are favorable, and in a case where the acid value is equal to or less than 40 mg KOH/g, the polymerizable compound is advantageous in terms of production and/or handling. Moreover, a photopolymerization performance is favorable, and curing properties are excellent.

As the polymerizable compound, a compound having a caprolactone structure is also a preferred aspect.

The compound having a caprolactone structure is not particularly limited as long as the compound has a caprolactone structure in a molecule, but examples thereof include ε-caprolactone-modified polyfunctional (meth)acrylate which is obtained by esterifying polyhydric alcohol such as trimethylolethane, ditrimethylolethane, trimethylolpropane, ditrimethylolpropane, pentaerythritol, dipentaerythritol, tripentaerythritol, glycerin, diglycerol, and trimethylol melamine, (meth)acrylic acid, and ε-caprolactone. Among them, a compound which has a caprolactone structure and is represented by Formula (Z-1) is preferable.

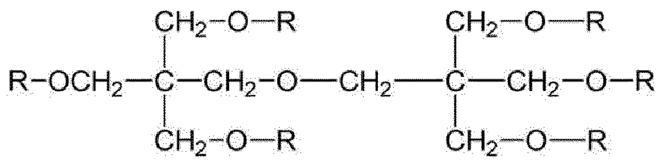

(Z-1)

In Formula (Z-1), all six R's are groups represented by Formula (Z-2), or one to five R's among the six R's are groups represented by Formula (Z-2) and the others are groups represented by Formula (Z-3).

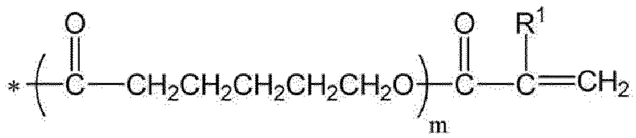

(Z-2)

In Formula (Z-2), $R^1$ represents a hydrogen atom or a methyl group, m represents a number of 1 or 2, and "*" represents a bond.

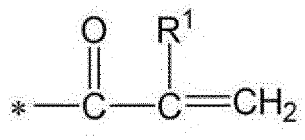

(Z-3)

In Formula (Z-3), $R^1$ represents a hydrogen atom or a methyl group, and "*" represents a bond.

The polymerizable compound having a caprolactone structure is commercially available, for example, as KAYARAD DPCA series from Nippon Kayaku Co., Ltd., and examples thereof include DPCA-20 (a compound in which m in Formulae (Z-1) to (Z-3) is 1, the number of groups represented by Formula (Z-2) is 2, and all of $R^1$'s represent hydrogen atoms), DPCA-30 (a compound in which m in Formulae (Z-1) to (Z-3) is 1, the number of groups represented by Formula (Z-2) is 3, and all of $R^1$'s represent hydrogen atoms), DPCA-60 (a compound in which m in Formulae (Z-1) to (Z-3) is 1, the number of groups represented by Formula (Z-2) is 6, and all of $R^1$'s represent hydrogen atoms), and DPCA-120 (a compound in which m in Formulae (Z-1) to (Z-3) is 2, the number of groups represented by Formula (Z-2) is 6, and all of $R^1$'s represent hydrogen atoms).

As the polymerizable compound, a compound represented by Formula (Z-4) or (Z-5) can also be used.

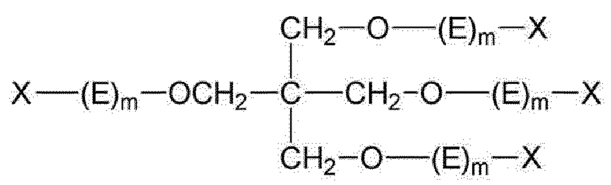

(Z-4)

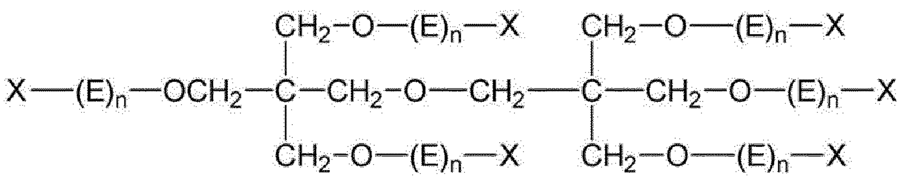 (Z-5)

In Formulae (Z-4) and (Z-5), E's each independently represent $-((CH_2)_yCH_2O)-$ or $((CH_2)_yCH(CH_3)O)-$, y's each independently represent an integer of 0 to 10, and X's each independently represent a (meth)acryloyl group, a hydrogen atom, or a carboxylic acid group.

In Formula (Z-4), the total number of (meth)acryloyl groups is 3 or 4, m's each independently represent an integer of 0 to 10, and the total number of m's is an integer of 0 to 40.

In Formula (Z-5), the total number of (meth)acryloyl groups is 5 or 6, n's each independently represent an integer of 0 to 10, and the total number of n's is an integer of 0 to 60.

In Formula (Z-4), m is preferably an integer of 0 to 6 and more preferably an integer of 0 to 4.

Moreover, the total number of m's is preferably an integer of 2 to 40, more preferably an integer of 2 to 16, and even more preferably an integer of 4 to 8.

In Formula (Z-5), n is preferably an integer of 0 to 6 and more preferably an integer of 0 to 4.

Moreover, the total number of n's is preferably an integer of 3 to 60, more preferably an integer of 3 to 24, and even more preferably an integer of 6 to 12.

Furthermore, an aspect in which a terminal on the oxygen atom side of $-((CH_2)_yCH_2O)-$ or $((CH_2)_yCH(CH_3)O)-$ in Formula (Z-4) or Formula (Z-5) is bonded to X is preferable.

The compounds represented by Formula (Z-4) or Formula (Z-5) may be used singly or in combination of two or more thereof. In particular, an aspect in which all of six X's in Formula (Z-5) are acryloyl groups, or a mixture of a compound in which all of six X's in Formula (Z-5) are acryloyl groups and a compound in which at least one among the six X's is a hydrogen atom is preferable. With such a configuration, the developability can be further improved.

Furthermore, the total content of the compounds represented by Formula (Z-4) or Formula (Z-5) in the polymerizable compound is preferably equal to or greater than 20% by mass and more preferably equal to or greater than 50% by mass.

Among the compounds represented by Formula (Z-4) or Formula (Z-5), a pentaerythritol derivative and/or a dipentaerythritol derivative is more preferable.

In addition, the polymerizable compound may have a cardo skeleton.

As the polymerizable compound having a cardo skeleton, a polymerizable compound having a 9,9-bisarylfluorene skeleton is preferable.

The polymerizable compound having a cardo skeleton is not limited, but examples thereof include ONCOAT EX series (produced by NAGASE & CO., LTD.), and OGSOL (produced by Osaka Gas Chemicals Co., Ltd.).

As the polymerizable compound, a compound having an isocyanuric acid skeleton as a core is also preferable. Examples of such a polymerizable compound include NK ESTER A-9300 (produced by Shin-Nakamura Chemical Co., Ltd.).

The content (which means a value obtained by dividing the number of ethylenically unsaturated groups in the polymerizable compound by the molecular weight (g/mol) of the polymerizable compound) of the ethylenically unsaturated group in the polymerizable compound is preferably equal to or greater than 5.0 mmol/g. The upper limit thereof is not particularly limited, but is generally equal to or less than 20.0 mmol/g.

Furthermore, in a case where the composition contains a plurality of polymerizable compounds and double bond equivalents of respective polymerizable compounds are not the same, a value obtained by summing up products of mass ratios of respective polymerizable compounds in all the polymerizable compounds and double bond equivalents of respective polymerizable compounds is preferably within the above range.

<Polymerization initiator>

The composition preferably contains a polymerization initiator.

The polymerization initiator is not particularly limited, and known polymerization initiators can be used. Examples of the polymerization initiator include a photopolymerization initiator and a thermal polymerization initiator, and a photopolymerization initiator is preferable. Moreover, as the polymerization initiator, a so-called radical polymerization initiator is preferable.

A content of the polymerization initiator in the composition is not particularly limited, but is preferably 0.5% to 20% by mass, more preferably 1.0% to 10% by mass, and even more preferably 1.5% to 8% by mass, with respect to the total solid content of the composition. The polymerization initiators may be used singly or in combination of two or

more thereof. In a case where two or more polymerization initiators are used in combination, the total content thereof is preferably within the above range.

<Thermal polymerization initiator>

Examples of the thermal polymerization initiator include an azo compound such as 2,2'-azobisisobutyronitrile (AIBN), 3-carboxypropionitrile, azobismalononitrile, and dimethyl-(2,2')-azobis(2-methylpropionate) [V-601] and an organic peroxide such as benzoyl peroxide, lauroyl peroxide, and potassium persulfate.

Specific examples of the thermal polymerization initiator include the polymerization initiator described in pp. 65 to 148 of "Ultraviolet Curing System" (published by Sogo Gijutsu Center, 1989) written by Kiyomi KATO.

<Photopolymerization initiator>

The composition preferably contains a photopolymerization initiator.

The photopolymerization initiator is not particularly limited as long as the photopolymerization initiator can initiate the polymerization of the polymerizable compound, and known photopolymerization initiators can be used. As the photopolymerization initiator, for example, a photopolymerization initiator exhibiting photosensitivity from an ultraviolet range to a visible light range is preferable. Moreover, the photopolymerization initiator may be an activator which generates active radicals by causing a certain action with a photoexcited sensitizer, or an initiator which initiates cationic polymerization according to the type of the polymerizable compound.

Furthermore, the photopolymerization initiator preferably contains at least one compound having a molar absorption coefficient of at least 50 within a range of 300 to 800 nm (more preferably 330 to 500 nm).

A content of the photopolymerization initiator in the composition is not particularly limited, but is preferably 0.5% to 20% by mass, more preferably 1.0% to 10% by mass, and even more preferably 1.5% to 8% by mass, with respect to the total solid content of the composition. The photopolymerization initiators may be used singly or in combination of two or more thereof. In a case where two or more photopolymerization initiators are used in combination, the total content thereof is preferably within the above range.

Examples of the photopolymerization initiator include a halogenated hydrocarbon derivative (for example, a compound having a triazine skeleton, a compound having an oxadiazole skeleton, or the like), an acyl phosphine compound such as acyl phosphine oxide, hexaaryl biimidazole, an oxime compound such as an oxime derivative, an organic peroxide, a thio compound, a ketone compound, an aromatic onium salt, an aminoacetophenone compound, and hydroxyacetophenone.

Regarding specific examples of the photopolymerization initiator, reference can be made to, for example, paragraphs 0265 to 0268 of JP2013-029760A, the contents of which are incorporated into the present specification.

More specifically, as the photopolymerization initiator, for example, the aminoacetophenone-based initiator described in JP1998-291969A (JP-H10-291969A) and the acyl phosphine oxide-based initiator described in JP4225898B can also be used.

As the hydroxyacetophenone compound, for example, IRGACURE-184, DAROCUR-1173, IRGACURE-500, IRGACURE-2959, and IRGACURE-127 (trade names: all produced by BASF SE) can be used.

As the aminoacetophenone compound, for example, IRGACURE-907, IRGACURE-369, or IRGACURE-379EG (trade names: all produced by BASF SE), which is a commercial product, can be used. As the aminoacetophenone compound, the compound which is described in JP2009-191179A and whose absorption wavelength is matched to a light source having a long wavelength such as a wavelength of 365 nm or a wavelength of 405 nm can also be used.

As the acyl phosphine compound, IRGACURE-819 or IRGACURE-TPO (trade names: all produced by BASF SE), which is a commercial product, can be used.

(Oxime compound)

As the photopolymerization initiator, an oxime ester-based polymerization initiator (oxime compound) is more preferable. In particular, an oxime compound has high sensitivity and high polymerization efficiency, easily designs the content of the light-shielding pigment in the composition to be high, and thus is preferable.

As specific examples of the oxime compound, the compound described in JP2001-233842A, the compound described in JP2000-080068A, or the compound described in JP2006-342166A can be used.

Examples of the oxime compound include 3-benzoyloxyiminobutan-2-one, 3-acetoxyiminobutan-2-one, 3-propionyloxyiminobutan-2-one, 2-acetoxyiminopentan-3-one, 2-acetoxyimino-1-phenylpropan-1-one, 2-benzoyloxyimino-1 -phenylpropan-1 -one, 3-(4-toluenesulfonyloxy)iminobutan-2-one, and 2-ethoxycarbonyloxyimino-1-phenylpropan-1-one.

Furthermore, the compounds described in J. C. S. Perkin II (1979) pp. 1653 to 1660, J. C. S. Perkin II (1979)

pp. 156 to 162, Journal of Photopolymer Science and Technology (1995) pp. 202 to 232, JP2000-066385A, JP2000-080068A, JP2004-534797A, and JP2006-342166A can also be mentioned.

Among commercial products, IRGACURE-OXE01 (produced by BASF SE), IRGACURE-OXE02 (produced by BASF SE), IRGACURE-OXE03 (produced by BASF SE), or IRGACURE-OXE04 (produced by BASF SE) is also preferable. Moreover, TR-PBG-304 (produced by TRONLY), ADEKA ARKLS NCI-831 and ADEKA ARKLS NCI-930 (produced by ADEKA CORPORATION), or N-1919 (carbazole and oxime ester skeleton-containing photoinitiator (produced by ADEKA CORPORATION)) can also be used.

As oxime compounds other than the aforementioned oxime compounds, the compound which is described in JP2009-519904A and in which oxime is linked to a N-position of carbazole; the compound which is described in US7626957B and in which a hetero substituent is introduced into a benzophenone moiety; the compounds which are described in JP2010-015025A and US2009/0292039A and in which a nitro group is introduced into the moiety of a coloring agent; the ketoxime compound described in WO2009/131189A; the compound which is described in US7556910B and contains a triazine skeleton and an oxime skeleton in the same molecule; the compound which is described in JP2009-221114A, has maximum absorption at 405 nm, and exhibits favorable sensitivity with respect to a light source of a g-line; and the like may be used.

Reference can be made to, for example, paragraphs 0274 and 0275 of JP2013-029760A, the contents of which are incorporated into the present specification.

Specifically, as the oxime compound, a compound represented by Formula (OX-1) is preferable. Moreover, a N-O bond in the oxime compound may be an (E) isomer, a (Z) isomer, or a mixture of an (E) isomer and a (Z) isomer.

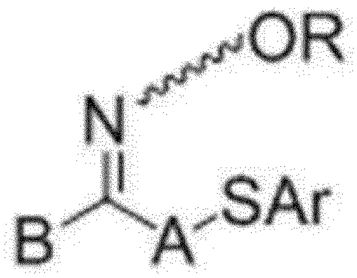

(OX-1)

In Formula (OX-1), R and B each independently represent a monovalent substituent, A represents a divalent organic group, and Ar represents an aryl group.

In Formula (OX-1), the monovalent substituent represented by R is preferably a group of monovalent nonmetallic atoms.

Examples of the group of monovalent nonmetallic atoms include an alkyl group, an aryl group, an acyl group, an alkoxycarbonyl group, an aryloxycarbonyl group, a heterocyclic group, an alkylthiocarbonyl group, and an arylthiocarbonyl group. Moreover, these groups may have one or more substituents. Furthermore, each of the substituents may be further substituted with another substituent.

Examples of the substituent include a halogen atom, an aryloxy group, an alkoxycarbonyl group or an aryloxycarbonyl group, an acyloxy group, an acyl group, an alkyl group, and an aryl group.

As the monovalent substituent represented by B in Formula (OX-1), an aryl group, a heterocyclic group, an arylcarbonyl group, or a heterocyclic carbonyl group is preferable, and an aryl group or a heterocyclic group is more preferable. These groups may have one or more substituents. Examples of the substituents include the aforementioned substituents.

As the divalent organic group represented by A in Formula (OX-1), an alkylene group having 1 to 12 carbon atoms, a cycloalkylene group, or an alkynylene group is preferable. These groups may have one or more substituents. Examples of the substituents include the aforementioned substituents.

As the photopolymerization initiator, a fluorine atom-containing oxime compound can also be used. Specific examples of the fluorine atom-containing oxime compound include the compound described in JP2010-262028A; the compounds 24 and 36 to 40 described in JP2014-500852A; and the compound (C-3) described in JP2013-164471A. The contents thereof are incorporated into the present specification.

As the photopolymerization initiator, compounds represented by Formulae (1) to (4) can also be used.

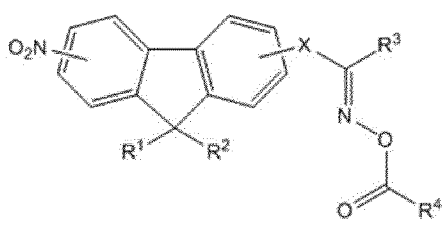

(1)

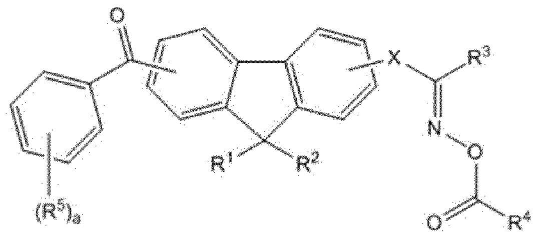

(2)

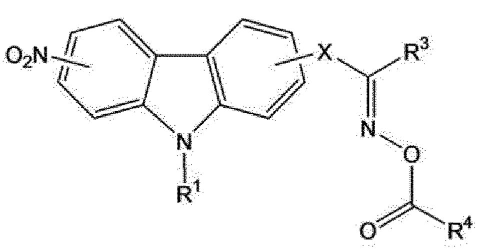

(3)

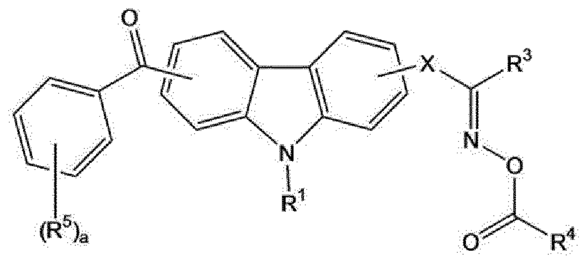

(4)

In Formula (1), $R^1$ and $R^2$ each independently represent an alkyl group having 1 to 20 carbon atoms, an alicyclic hydrocarbon group having 4 to 20 carbon atoms, an aryl group having 6 to 30 carbon atoms, or an aryl alkyl group having 7 to 30 carbon atoms, in a case where $R^1$ and $R^2$ each represent a phenyl group, the phenyl groups may be bonded to each other to form a fluorene group, $R^3$ and $R^4$ each independently represent a hydrogen atom, an alkyl group having 1 to 20 carbon atoms, an aryl group having 6 to 30 carbon atoms, an aryl alkyl group having 7 to 30 carbon atoms, or a heterocyclic group having 4 to 20 carbon atoms, and X represents a direct bond or a carbonyl group.

In Formula (2), $R^1$, $R^2$, $R^3$, and $R^4$ have the same definitions as $R^1$, $R^2$, $R^3$, and $R^4$ in Formula (1), $R^5$ represents $-R^6$, $-OR^6$, $-SR^6$, $-COR^6$, $-CONR^6R^6$, $-NR^6COR^6$, $-OCOR^6$, $-COOR^6$, $-SCOR^6$, $-OCSR^6$, $-COSR^6$, $-CSOR^6$, -CN, a halogen atom, or a hydroxyl group, $R^6$ represents an alkyl group having 1 to 20 carbon atoms, an aryl group having 6 to 30 carbon atoms, an aryl alkyl group having 7 to 30 carbon atoms, or a heterocyclic group having 4 to 20 carbon atoms, X represents a direct bond or a carbonyl group, and a represents an integer of 0 to 4.

In Formula (3), $R^1$ represents an alkyl group having 1 to 20 carbon atoms, an alicyclic hydrocarbon group having 4 to 20 carbon atoms, an aryl group having 6 to 30 carbon atoms, or an aryl alkyl group having 7 to 30 carbon atoms, $R^3$ and $R^4$ each independently represent a hydrogen atom, an alkyl group having 1 to 20 carbon atoms, an aryl group having 6 to 30 carbon atoms, an aryl alkyl group having 7 to 30 carbon atoms, or a heterocyclic group having 4 to 20 carbon atoms, and X represents a direct bond or a carbonyl group.

In Formula (4), $R^1$, $R^3$, and $R^4$ have the same definitions as $R^1$, $R^3$, and $R^4$ in Formula (3), $R^5$ represents $-R^6$, $-OR^6$, $-SR^6$, $-COR^6$, $-CONR^6R^6$, $-NR^6COR^6$, $-OCOR^6$, $-COOR^6$, $-SCOR^6$, $-OCSR^6$, $-COSR^6$, $-CSOR^6$, -CN, a halogen atom, or a hydroxyl group, $R^6$ represents an alkyl group having 1 to 20 carbon atoms, an aryl group having 6 to 30 carbon atoms, an aryl alkyl group having 7 to 30 carbon atoms, or a heterocyclic group having 4 to 20 carbon atoms, X represents a direct bond or a carbonyl group, and a represents an integer of 0 to 4.

In Formulae (1) and (2), $R^1$ and $R^2$ are preferably each independently a methyl group, an ethyl group, an n-propyl group, an i-propyl group, a cyclohexyl group, or a phenyl group. $R^3$ is preferably a methyl group, an ethyl group, a phenyl group, a tolyl group, or a xylyl group.

$R^4$ is preferably an alkyl group having 1 to 6 carbon atoms or a phenyl group. $R^5$ is preferably a methyl group, an ethyl group, a phenyl group, a tolyl group, or a naphthyl group. X is preferably a direct bond.

Furthermore, in Formulae (3) and (4), $R^1$'s are preferably each independently a methyl group, an ethyl group, an n-propyl group, an i-propyl group, a cyclohexyl group, or a phenyl group. $R^3$ is preferably a methyl group, an ethyl group, a phenyl group, a tolyl group, or a xylyl group. $R^4$ is preferably an alkyl group having 1 to 6 carbon atoms or a phenyl group. $R^5$ is preferably a methyl group, an ethyl group, a phenyl group, a tolyl group, or a naphthyl group. X is preferably a direct bond.

Specific examples of the compounds represented by Formula (1) and Formula (2) include the compound described in paragraphs 0076 to 0079 of JP2014-137466A. The contents thereof are incorporated into the present specification.

Specific examples of an oxime compound preferably used in the composition are shown below. Among the

oxime compounds shown below, an oxime compound represented by General Formula (C-13) is more preferable.

Furthermore, as the oxime compound, the compounds described in Table 1 of WO2015/036910A can also be used, the contents of which are incorporated into the present specification.

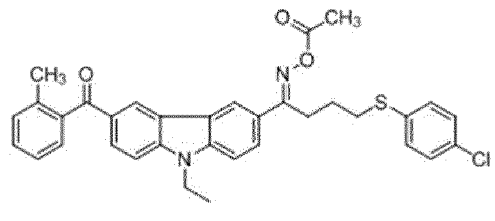
(C-1)

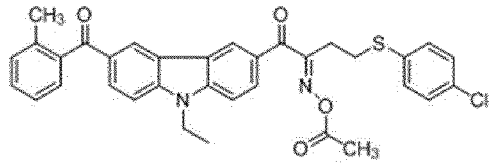
(C-2)

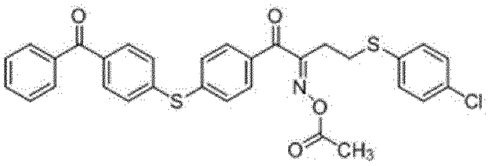
(C-3)

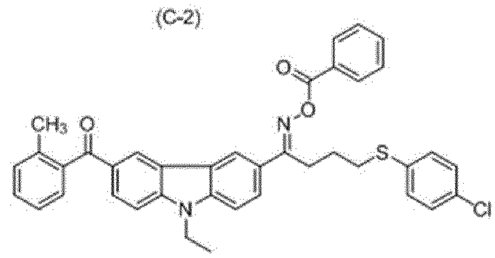
(C-4)

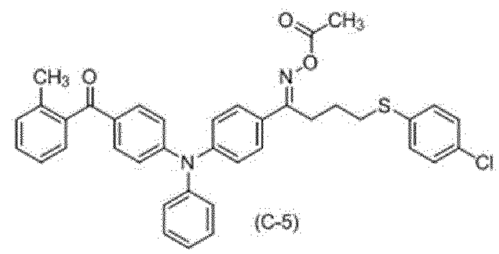
(C-5)

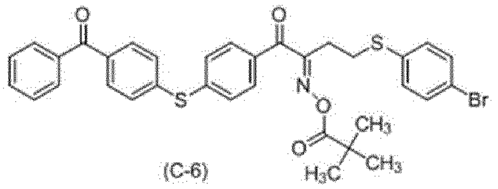
(C-6)

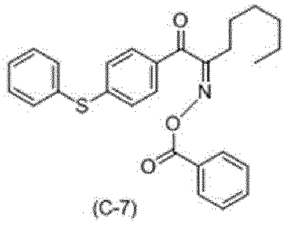
(C-7)

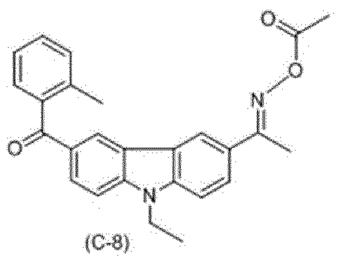
(C-8)

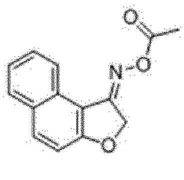

(C-9)

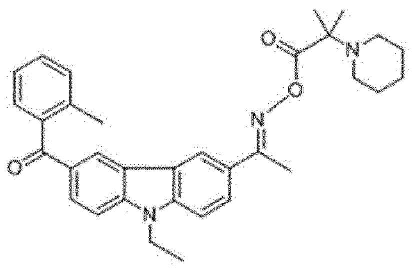

(C-10)

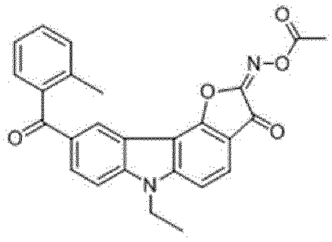

(C-11)

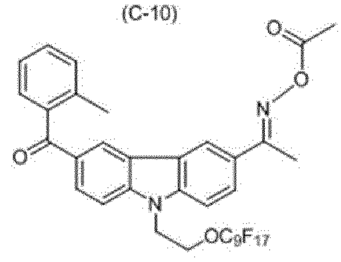

(C-12)

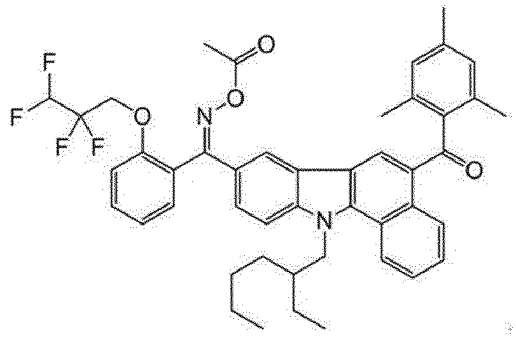

(C-13)

The oxime compound preferably has a maximum absorption in a wavelength range of 350 to 500 nm, more preferably has a maximum absorption in a wavelength range of 360 to 480 nm, and even more preferably has a high absorbance at wavelengths of 365 nm and 405 nm.

From the viewpoint of sensitivity, a molar absorption coefficient of the oxime compound at 365 nm or 405 nm is preferably 1,000 to 300,000, more preferably 2,000 to 300,000, and even more preferably 5,000 to 200,000.

The molar absorption coefficient of the compound can be measured by known methods, but for example, it is preferable that the measurement is carried out with an ultraviolet and visible spectrophotometer (Cary-5 spectrophotometer manufactured by Varian, Inc.) at a concentration of 0.01 g/L using ethyl acetate.

If necessary, two or more photopolymerization initiators may be used in combination.

In addition, as the photopolymerization initiator, the compounds described in paragraph 0052 of JP2008-260927A, paragraphs 0033 to 0037 of JP2010-097210A, and paragraph 0044 of JP2015-068893A can also be used, the contents of which are incorporated into the present specification.

The composition may contain other components in addition to the black coloring material, the polymerizable compound, and the polymerization initiator.

Hereinafter, the other components will be described in detail.

The composition may contain a resin. The definition of the resin is as described above.

<Epoxy group-containing compound>

The composition may contain an epoxy group-containing compound.

Examples of the epoxy group-containing compound include compounds having one or more epoxy groups in one molecule, and compounds having two or more epoxy groups in one molecule are preferable. It is preferable that 1 to 100 epoxy groups are contained in one molecule. The upper limit thereof may be equal to or smaller than 10 or equal to or smaller than 5, for example. The lower limit thereof is preferably equal to or more than 2.

In addition, the epoxy group-containing compound refers to a component different from the aforementioned dispersant, alkali-soluble resin, and polymerizable compound.

An epoxy equivalent (= molecular weight of epoxy group-containing compound/the number of epoxy groups) of the epoxy group-containing compound is preferably equal to or less than 500 g/equivalent, more preferably 100 to 400 g/equivalent, and even more preferably 100 to 300 g/equivalent.

The epoxy group-containing compound may be a low-molecular-weight compound (for example, the molecular weight is less than 2,000), or a polymer compound (macromolecule) (for example, the molecular weight is equal to or greater than 2,000, and in a case of a polymer, the weight-average molecular weight is equal to or greater than 2,000). A weight-average molecular weight of the epoxy group-containing compound is preferably 200 to 100,000 and more preferably 500 to 50,000. The upper limit of the weight-average molecular weight is more preferably equal to or less than 10,000, even more preferably equal to or less than 5,000, and particularly preferably equal to or less than 3,000.

A commercial product may be used for the epoxy group-containing compound. Examples thereof include EHPE3150 (produced by DAICEL CORPORATION) and EPICLON N-695 (produced by DIC CORPORATION). Moreover, as the epoxy group-containing compound, the compounds described in paragraphs 0034 to 0036 of JP2013-011869A, paragraphs 0147 to 0156 of JP2014-043556A, and paragraphs 0085 to 0092 of JP2014-089408A may be used. The contents thereof are incorporated into the present specification.

A content of the epoxy group-containing compound in the composition is preferably 0.1% to 10% by mass, more preferably 0.5% to 8% by mass, and even more preferably 1.0% to 6% by mass, with respect to the total solid content in the composition.

One epoxy group-containing compound may be used singly or two or more epoxy group-containing compounds may be used. In a case where the composition contains two or more epoxy group-containing compounds, the total content thereof is preferably within the above range.

<Ultraviolet absorber>

The composition may contain an ultraviolet absorber. By doing so, a pattern shape of a light-shielding film can be made into a superior (fine) shape.

As the ultraviolet absorber, salicylate-based, benzophenone-based, benzotriazole-based, substituted acrylonitrile-based, and triazine-based ultraviolet absorbers can be used. As specific examples thereof, the compound described in paragraphs 0137 to 0142 of JP2012-068418A (corresponding to paragraphs 0251 to 0254 of US2012/0068292A) can be used, the contents of which can be incorporated by reference into the present specification.

In addition to the aforementioned compounds, a diethylamino-phenylsulfonyl-based ultraviolet absorber (produced by DAITO CHEMICAL CO., LTD., trade name: UV-503) or the like is also suitably used.

Examples of the ultraviolet absorber include the compounds exemplified in paragraphs 0134 to 0148 of JP2012-032556A.

A content of the ultraviolet absorber is preferably 0.001% to 15% by mass, more preferably 0.01% to 10% by mass, and even more preferably 0.1% to 5% by mass, with respect to the total solid content of the composition.

<Silane coupling agent (adhesive agent)>

The composition may contain a silane coupling agent.

The silane coupling agent functions as an adhesive agent which improves adhesiveness between a substrate and a light-shielding film in a case where the light-shielding film is formed on the substrate.

The silane coupling agent is a compound containing a hydrolyzable group and other functional groups in a molecule. Moreover, the hydrolyzable group such as an alkoxy group is bonded to the silicon atom.

The hydrolyzable group refers to a substituent which is directly bonded to a silicon atom and can form a siloxane bond by a hydrolysis reaction and/or a condensation reaction. Examples of the hydrolyzable group include a halogen atom, an alkoxy group, an acyloxy group, and an alkenyloxy group. In a case where the hydrolyzable group contains a carbon atom, the number of carbon atoms is preferably equal to or smaller than 6 and more preferably equal to or smaller than 4. In particular, an alkoxy group having 4 or less carbon atoms or an alkenyloxy group having 4 or less carbon atoms is preferable.

Furthermore, in a case where a light-shielding film is formed on a substrate, in order to improve adhesiveness between the substrate and the light-shielding film, the silane coupling agent preferably does not contain a fluorine atom and a silicon atom (here, a silicon atom to which a hydrolyzable group is bonded is excluded), and desirably does not contain a fluorine atom, a silicon atom (here, a silicon atom to which a hydrolyzable group is bonded is excluded), an alkylene group substituted with a silicon atom, a linear alkyl group having 8 or more carbon atoms, and a branched alkyl group having 3 or more carbon atoms.

The silane coupling agent may contain an ethylenically unsaturated group such as a (meth)acryloyl group. In

a case where the silane coupling agent contains an ethylenically unsaturated group, the number thereof is preferably 1 to 10 and more preferably 4 to 8. Moreover, the silane coupling agent (for example, a compound which contains a hydrolyzable group and an ethylenically unsaturated group and has a molecular weight equal to or less than 2,000) containing an ethylenically unsaturated group does not correspond to the aforementioned polymerizable compound.

A content of the silane coupling agent in the composition is preferably 0.1% to 10% by mass, more preferably 0.5% to 8% by mass, and even more preferably 1.0% to 6% by mass, with respect to the total solid content in the composition.

The composition may contain one silane coupling agent singly or two or more silane coupling agents. In a case where the composition contains two or more silane coupling agents, the total amount thereof may be within the above range.

Examples of the silane coupling agent include 3-glycidoxypropyl trimethoxysilane, 3-glycidoxypropyl triethoxysilane, 3-glycidoxypropyl methyldimethoxysilane, 3-glycidoxypropyl methyldiethoxysilane, vinyltrimethoxysilane, and vinyltriethoxysilane.

<Surfactant>

The composition may contain a surfactant. The surfactant contributes to improvement in coating properties of the composition.

In a case where the composition contains a surfactant, a content of the surfactant is preferably 0.001% to 2.0% by mass, more preferably 0.005% to 0.5% by mass, and even more preferably 0.01% to 0.1% by mass, with respect to the total solid content of the composition.

The surfactants may be used singly or in combination of two or more thereof. In a case where two or more surfactants are used in combination, the total amount thereof is preferably within the above range.

Examples of the surfactant include a fluorine-based surfactant, a nonionic surfactant, a cationic surfactant, an anionic surfactant, and a silicone-based surfactant.

For example, in a case where the composition contains a fluorine-based surfactant, liquid characteristics (particularly, fluidity) of the composition are further improved. That is, in a case where a film is formed of the composition containing the fluorine-based surfactant, an interfacial tension between a surface to be coated and a coating liquid is reduced, and accordingly, wettability with respect to the surface to be coated is improved, and coating properties to the surface to be coated are improved. Therefore, even in a case where a thin film having a thickness of about several micrometers is formed with a small amount of a liquid, the fluorine-based surfactant is effective from the viewpoint that a film having a uniform thickness and small thickness unevenness is more suitably formed.

A content ratio of fluorine in the fluorine-based surfactant is preferably 3% to 40% by mass, more preferably 5% to 30% by mass, and even more preferably 7% to 25% by mass. A fluorine-based surfactant having a content ratio of fluorine within the above range is effective from the viewpoint of uniformity of the thickness of the composition layer and/or liquid saving properties, and also has favorable solubility in the composition.

Examples of the fluorine-based surfactant include MEGAFACE F171, MEGAFACE F172, MEGAFACE F173, MEGAFACE F176, MEGAFACE F177, MEGAFACE F141, MEGAFACE F142, MEGAFACE F143, MEGAFACE F144, MEGAFACE R30, MEGAFACE F437, MEGAFACE F475, MEGAFACE F479, MEGAFACE F482, MEGAFACE F554, and MEGAFACE F780 (all produced by DIC Corporation), FLUORAD FC430, FLUORAD FC431, and FLUORAD FC171 (all produced by Sumitomo 3M Limited), SURFLON S-382, SURFLON SC-101, SURFLON SC-103, SURFLON SC-104, SURFLON SC-105, SURFLON SC-1068, SURFLON SC-381, SURFLON SC-383, SURFLON S-393, and SURFLON KH-40 (all produced by ASAHI GLASS CO., LTD.), and PF636, PF656, PF6320, PF6520, and PF7002 (produced by OMNOVA Solutions Inc.).

A block polymer can also be used as the fluorine-based surfactant.

<Solvent>

The composition may contain a solvent.

The solvent is not particularly limited, and known solvents can be used.

A content of the solvent in the composition is not particularly limited, but is preferably an amount such that the solid content of the composition is 10% to 90% by mass, more preferably an amount such that the solid content of the composition is 10% to 40% by mass, and even more preferably an amount such that the solid content of the composition is 15% to 35% by mass.

The solvents may be used singly or in combination of two or more thereof. In a case where two or more solvents are used in combination, the content thereof is preferably adjusted so that the total solid content of the composition is within the above range.

Examples of the solvent include water and an organic solvent.

Examples of the organic solvent include acetone, methyl ethyl ketone, cyclohexane, ethyl acetate, ethylene dichloride, tetrahydrofuran, toluene, ethylene glycol monomethyl ether, ethylene glycol monoethyl ether, ethylene glycol dimethyl ether, propylene glycol monomethyl ether, propylene glycol monoethyl ether, acetyl acetone, cyclohexanone, cyclopentanone, diacetone alcohol, ethylene glycol monomethyl ether acetate, ethylene glycol ethyl ether acetate, ethylene glycol monoisopropyl ether, ethylene glycol monobutyl ether acetate, 3-methoxypropanol, methoxymethoxy ethanol, diethylene glycol monomethyl ether, diethylene glycol monoethyl ether, diethylene glycol dimethyl ether, diethylene glycol diethyl ether, propylene glycol monomethyl ether acetate, propylene glycol monoethyl ether acetate, 3-methoxypropyl acetate, N,N-dimethylformamide, dimethyl sulfoxide, γ-butyrolactone, butyl acetate, methyl lactate, N-methyl-2-pyrrolidone, and ethyl lactate, but the present invention is not limited to these examples.

<Water>

In a case where the composition contains water, a content thereof is preferably 0.001% to 5.0% by mass, more preferably 0.01% to 3.0% by mass, and even more preferably 0.1% to 1.0% by mass, with respect to the total mass of the composition.
In particular, in a case where the content of the water is equal to or less than 3.0% by mass (more preferably equal to or less than 1.0% by mass) with respect to the total mass of the composition, deterioration of the viscosity stability over time due to hydrolysis or the like of the components in the composition is easily suppressed, and in a case where the content is equal to or greater than 0.01% by mass (preferably equal to or greater than 0.1% by mass), precipitation stability over time is easily improved.
The composition may further contain optional components other than the aforementioned components. Examples thereof include a polymerization inhibitor, a sensitizer, a co-sensitizer, a crosslinking agent, a curing accelerator, a filler, a heat curing accelerator, a plasticizer, a diluent, and an oil sensitizer, and known additives such as an adhesion promoter to the surface of the substrate and other auxiliaries (for example, conductive particles, a filling agent, an antifoaming agent, a flame retardant, a leveling agent, a peeling accelerator, an antioxidant, a fragrance, a surface tension adjuster, a chain transfer agent, and the like) may be added, if necessary.
Regarding these components, reference can be made to, for example, the descriptions in paragraphs 0183 to 0228 of JP2012-003225A (corresponding to paragraphs 0237 to 0309 of US2013/0034812A), paragraphs 0101, 0102, 0103, 0104, and 0107 to 0109 of JP2008-250074A, and paragraphs 0159 to 0184 of JP2013-195480A, the contents of which are incorporated into the specification of the present application.

<Method for producing composition>

The composition is preferably obtained by first producing a dispersion liquid in which black coloring materials are dispersed, and further mixing the obtained dispersion liquid with other components.
The dispersion liquid can be prepared by mixing the aforementioned respective components by known mixing methods (for example, mixing methods using a stirrer, a homogenizer, a high-pressure emulsification device, a wet-type pulverizer, a wet-type disperser, or the like).
In a case of preparing the composition, the respective components may be formulated at once, or each of the components may be dissolved or dispersed in a solvent and then sequentially formulated. Moreover, the input order and the operation conditions during the formulation are not particularly limited.
For the purpose of removing foreign substances, reducing defects, and the like, the composition is preferably filtered with a filter. The filter can be used without particular limitation as long as the filter has been used in the related art in a filtration application or the like. Examples of the filter include filters made of a fluorine resin such as polytetrafluoroethylene (PTFE), a polyamide-based resin such as nylon, a polyolefin-based resin (having a high density and an ultrahigh molecular weight) such as polyethylene and polypropylene (PP), or the like. Among these materials, polypropylene (including high-density polypropylene) and nylon are preferable.
A pore size of the filter is preferably 0.1 to 7.0 μm, more preferably 0.2 to 2.5 μm, even more preferably 0.2 to 1.5 μm, and particularly preferably 0.3 to 0.7 μm. In a case where the pore size is within the above range, it is possible to reliably remove fine foreign substances such as impurities and aggregates contained in a pigment while suppressing filtration clogging of the pigment (including a light-shielding pigment).
In a case of using a filter, different filters may be combined. In this case, filtering with a first filter may be performed only once, or may be performed twice or more times. In a case where filtering is performed twice or more times with a combination of different filters, the pore sizes of the filters used in the second and subsequent filtering are preferably the same as or larger than the pore size of the filter used in the first filtering. Moreover, the first filters having different pore sizes within the above range may be combined. Regarding the pore size mentioned here, reference can be made to nominal values of filter manufacturers. A commercial filter can be selected from, for example, various filters provided by Nihon Pall Ltd., Advantec Toyo Kaisha, Ltd., Nihon Entegris K. K. (formerly Nippon Microlith Co., Ltd.), Kitz

Micro Filter Corporation, and the like.

As a second filter, a filter formed of the same material as that of the first filter, or the like can be used. A pore size of the second filter is preferably 0.2 to 10.0 μm, more preferably 0.2 to 7.0 μm, and even more preferably 0.3 to 6.0 μm.

The composition preferably does not contain impurities such as a metal, a halogen-containing metal salt, an acid, and an alkali. A content of impurities contained in these materials is preferably equal to or less than 1 ppm, more preferably equal to or less than 1 ppb, even more preferably equal to or less than 100 ppt, and particularly preferably equal to or less than 10 ppt, and it is most preferable that the impurities are substantially not contained (the content is equal to or less than the detection limit of the measuring device).

Furthermore, the impurities can be measured using an inductively coupled plasma mass spectrometer (manufactured by Agilent Technologies, Inc., Agilent 7500cs model).

<Method for manufacturing light-shielding film>

A composition layer (composition layer) formed of the composition is cured to obtain a pattern-like light-shielding film.

The method for manufacturing a light-shielding film is not particularly limited, but preferably includes the following steps.

- Composition layer forming step
- Exposure step
- Development step

Hereinafter, each of the steps will be described.

(Composition layer forming step)

In the composition layer forming step, prior to exposure, the composition is applied on a support or the like to form a layer (composition layer) of the composition.

As a method for applying the composition onto the support, various coating methods such as a slit coating method, an ink jet method, a spin coating method, a cast coating method, a roll coating method, and a screen printing method can be applied. The film thickness of the composition layer is preferably 0.1 to 10 μm, more preferably 0.2 to 5 μm, and even more preferably 1 to 4 μm.

The composition layer applied on the support can be dried (pre-baked) at a temperature of 50°C to 140°C for 10 to 300 seconds using a hot plate, an oven, or the like.

(Exposure step)

In the exposure step, the composition layer formed in the composition layer forming step is exposed by irradiation with actinic rays or radiation, and the composition layer irradiated with light is cured.

The method of light irradiation is not particularly limited, but light irradiation is preferably performed through a photo mask having a pattern-like opening part.

The exposure is preferably performed by irradiation with radiation, ultraviolet rays such as a g-line, an h-line, and an i-line are particularly preferable as the radiation which can be used during the exposure, and a high-pressure mercury lamp is preferable as a light source. The irradiation intensity is preferably 5 to 1,500 $mJ/cm^2$ and more preferably 10 to 1,000 $mJ/cm^2$.

In addition, in a case where the composition contains a thermal polymerization initiator, the composition layer may be heated in the exposure step. A heating temperature is not particularly limited, but is preferably 80°C to 250°C. A heating time is not particularly limited, but is preferably 30 to 300 seconds.

Furthermore, in a case where the composition layer is heated in the exposure step, the exposure step may serve as a post-heating step which will be described later. In other words, in a case where the composition layer is heated in the exposure step, the method for manufacturing a light-shielding film may not include the post-heating step.

(Development step)

The development step is a step of developing the exposed composition layer to form a light-shielding film. By this step, the composition layer in a portion which is not irradiated in the exposure step is eluted, only a photo-cured portion remains, and thus a pattern-like light-shielding film can be obtained.

A type of a developer used in the development step is not particularly limited, but an alkaline developer is

desirable.

The development temperature is 20°C to 30°C, for example.

The development time is 20 to 90 seconds, for example. In order to further remove the residues, in recent years, the development may be performed for 120 to 180 seconds. Furthermore, in order to further improve residue removability, a step of shaking off the developer every 60 seconds and further supplying a fresh developer may be repeated several times.

The alkaline developer is preferably an alkaline aqueous solution which is prepared by dissolving an alkaline compound in water so that the concentration thereof is 0.001% to 10% by mass (preferably 0.01% to 5% by mass).

Examples of the alkaline compound include sodium hydroxide, potassium hydroxide, sodium carbonate, sodium silicate, sodium metasilicate, aqueous ammonia, ethylamine, diethylamine, dimethylethanolamine, tetramethylammonium hydroxide, tetraethylammonium hydroxide, tetrapropylammonium hydroxide, tetrabutylammonium hydroxide, benzyltrimethylammonium hydroxide, choline, pyrrole, piperidine, and 1,8-diazabicyclo[5.4.0]-7-undecene (among them, organic alkalis are preferable.).

Furthermore, in a case where the alkaline compound is used as an alkaline developer, the alkaline compound is generally subjected to a washing treatment with water after development.

(Post-baking)

A heating treatment (post-baking) is preferably performed after the exposure step. The post-baking is a heating treatment after development in order to complete the curing. The heating temperature is preferably equal to or lower than 240°C and more preferably equal to or lower than 220°C. The lower limit thereof is not particularly limited, but is preferably equal to or higher than 50°C and more preferably equal to or higher than 100°C, in consideration of an efficient and effective treatment.

The post-baking can be performed continuously or batchwise by using a heating unit such as a hot plate, a convection oven (hot-air circulating dryer), and a radio-frequency heater.

The post-baking is preferably performed in an atmosphere of a low oxygen concentration. The oxygen concentration is preferably equal to or lower than 19% by volume, more preferably equal to or lower than 15% by volume, even more preferably equal to or lower than 10% by volume, particularly preferably equal to or lower than 7% by volume, and most preferably equal to or lower than 3% by volume. The lower limit thereof is not particularly limited, but is practically equal to or higher than 10 ppm by volume.

In addition, the curing may be completed by irradiation with ultraviolet rays (UV) instead of the post-baking by heating.

In this case, it is preferable that the composition further contains a UV curing agent. The UV curing agent is preferably a UV curing agent which can be cured at a wavelength shorter than 365 nm that is an exposure wavelength of a polymerization initiator added for a lithography step by ordinary i-line exposure. Examples of the UV curing agent include CIBA IRGACURE 2959 (trade name). In a case where UV irradiation is performed, the composition layer is preferably a material which is cured at a wavelength equal to or less than a wavelength of 340 nm. The lower limit value of the wavelength is not particularly limited, but is generally equal to or greater than 220 nm. Moreover, an exposure amount of the UV irradiation is preferably 100 to 5,000 mJ, more preferably 300 to 4,000 mJ, and even more preferably 800 to 3,500 mJ. The UV curing step is preferably performed after the lithography step because low-temperature curing is more effectively performed. As an exposure light source, an ozoneless mercury lamp is preferably used.

The present invention is basically configured as described above. Hereinbefore, the headlight unit for a vehicle according to the embodiment of the present invention has been described in detail, but the present invention is not limited to the aforementioned embodiments, and it goes without saying that various improvements or modifications may be made without departing from the gist of the present invention.

Examples

Hereinafter, the features of the present invention will be described in more detail with reference to Examples. The materials, the reagents, the amounts and ratios of substances, the operations, and the like shown in the following Examples can be appropriately modified as long as the gist of the present invention is maintained. Accordingly, the scope of the present invention is not limited to the following Examples.

<Preparation of dispersion liquid>

Raw materials shown in Table 1 below were mixed to prepare a dispersion liquid.

Specifically, first, a black coloring material, a dispersant, and a solvent were mixed for 15 minutes by a stirrer (EUROSTAR manufactured by IKA Works GmbH & Co. KG) to obtain a mixed solution of the aforementioned components.

Subsequently, the obtained mixed solution was subjected to a dispersion treatment using NPM-Pilot manufactured by Shinmaru Enterprises Corporation under the following conditions to obtain a dispersion liquid (light-shielding pigment dispersion liquid).

<Dispersion conditions>

- Bead size: φ 0.05 mm, (zirconia beads manufactured by NIKKATO CORPORATION, YTZ)
- Bead filling rate: 65% by volume
- Circumferential speed of mill: 10 m/sec
- Circumferential speed of separator: 13 m/s
- Amount of mixed solution subjected to dispersion treatment: 15 kg
- Circulation flow rate (pump supply rate): 90 kg/hour
- Temperature of treatment liquid: 19°C to 21°C
- Coolant: water
- Treatment time: about 22 hours

[Table 1]

| | Black coloring material | | Dispersant | | Solvent | |
|---|---|---|---|---|---|---|
| | Type | Addition amount (parts by mass) | Type | Addition amount (parts by mass) | Type | Addition amount (parts by mass) |
| Dispersion liquid 1 | Pig-1 | 24.2 | H-1 | 7.3 | PGMEA | 68.5 |
| Dispersion liquid 2 | Pig-1 | 24.2 | H-2 | 7.3 | PGMEA | 68.5 |
| Dispersion liquid 3 | Pig-1 | 24.2 | H-3 | 7.3 | PGMEA | 68.5 |
| Dispersion liquid 4 | Pig-1 | 24.2 | H-4 | 7.3 | PGMEA | 68.5 |
| Dispersion liquid 5 | Pig-2 | 24.2 | H-3 | 7.3 | PGMEA | 68.5 |
| Dispersion liquid 6 | Pig-3 | 24.2 | H-3 | 7.3 | PGMEA | 68.5 |
| Dispersion liquid 7 | Pig-4 | 24.2 | H-3 | 7.3 | PGMEA | 68.5 |
| Dispersion liquid 8 | Pig-5 | 24.2 | H-3 | 7.3 | PGMEA | 68.5 |
| Dispersion liquid 9 | Pig-6 | 24.2 | H-3 | 7.3 | PGMEA | 68.5 |
| Dispersion liquid 10 | Pig-7 | 24.2 | H-3 | 7.3 | PGMEA | 68.5 |

(continued)

| | Black coloring material | | Dispersant | | Solvent | |
|---|---|---|---|---|---|---|
| | Type | Addition amount (parts by mass) | Type | Addition amount (parts by mass) | Type | Addition amount (parts by mass) |
| Dispersion liquid 11 | Pig-1 | 24.2 | H-3 | 7.3 | PGMEA<br>PGME | 48.5<br>20.0 |
| Dispersion liquid 12 | Pig-1 | 24.2 | H-3 | 7.3 | PGMEA<br>PGME<br>Butyl acetate | 38.5<br>20.0<br>10.0 |
| Dispersion liquid 13 | Pig-1 | 24.2 | H-3 | 7.3 | Cyclopentanone<br>PGME | 48.5 20.0 |

(Black coloring material)

The following Pig-1 to Pig-7 were used as the black coloring material.

(Pig-1): Titanium black prepared by the method described in paragraph 0191 of WO2016/129324A

(Pig-2): TITANIUM BLACK 13M produced by Mitsubishi Materials Electronic Chemicals Co., Ltd.

(Pig-3): Vanadium nitride VN-O produced by JAPAN NEW METALS CO., LTD.

(Pig-4): Niobium nitride NbN-O produced by JAPAN NEW METALS CO., LTD.

(Pig-5): Zirconium nitride prepared by the method described in (Example 1) of JP2017-222559A

(Pig-6): CARBON BLACK #2300 produced by Mitsubishi Chemical Corporation (Pig-7): IRGAPHOR BLACK produced by BASF SE

(Dispersant)

As a dispersant, dispersants H-1 to H-4 having the following structures were used. A numerical value described in each structural unit means % by mole of each structural unit with respect to all structural units.

Furthermore, all of H-1 to H-4 correspond to resins which are graft polymers.

• H-1 (acid value = 100 mg KOH/g, and weight-average molecular weight = 39,000)

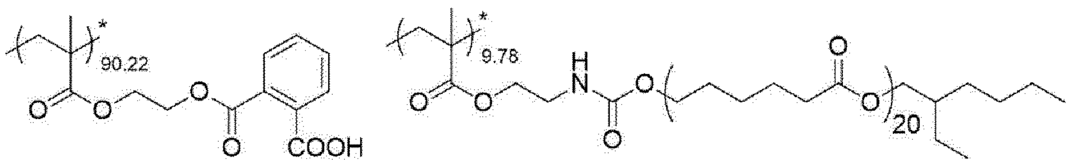

• H-2 (acid value = 60 mg KOH/g, and weight-average molecular weight = 33,000)

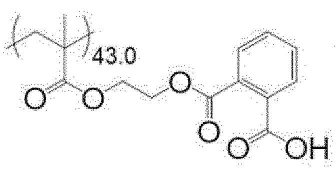 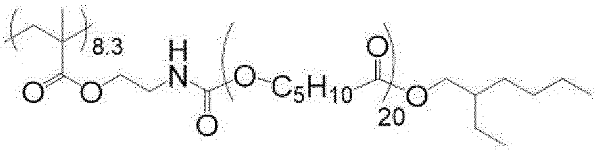 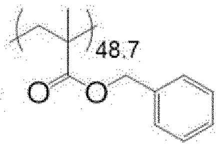

• H-3 (acid value = 100 mg KOH/g, and weight-average molecular weight = 19,000)

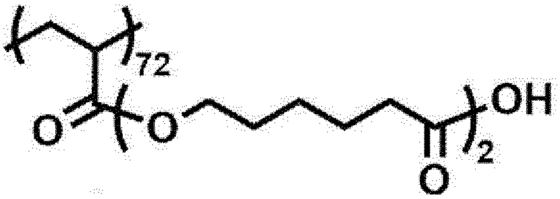

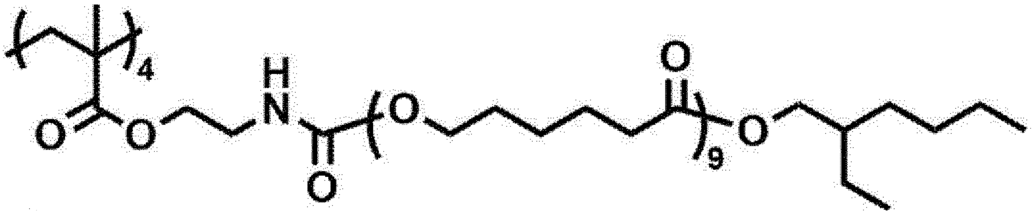

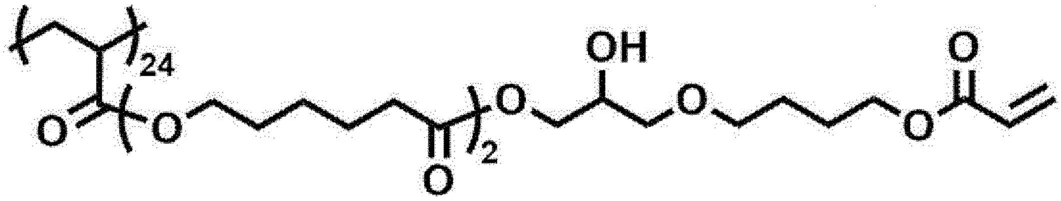

• H-4 (acid value = 33 mg KOH/g, and weight-average molecular weight = 23,000)

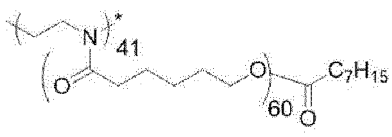 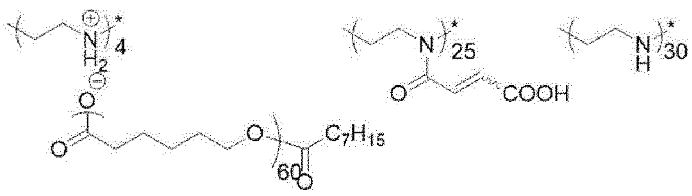

(Solvent)

- PGMEA: Propylene glycol monomethyl ether acetate
- PGME: Propylene glycol monomethyl ether
- Butyl acetate
- Cyclopentanone

<Preparation of light-shielding film-forming composition>

Next, components shown in Table 2 below were mixed with the aforementioned dispersion liquid at ratios shown in Table 2 to obtain respective compositions (light-shielding film-forming compositions) of Examples and Comparative Examples.

The compositions of the obtained compositions are shown in Table 2.

[Table 2]

| | Pigment dispersion liquid | | Alkali-soluble resin | | Polymerizable compound | | Photopolymerization initiator | | Solvent | | Epoxy group-containing compound | | Ultraviolet absorber | | Adhesive agent | | Surfactant | |
|---|---|---|---|---|---|---|---|---|---|---|---|---|---|---|---|---|---|---|
| | Type | parts by mass | Type | parts by mass | Type | parts by mass | Type | parts by mass | Type | parts by mass | Type | parts by mass | Type | parts by mass | Type | parts by mass | Type | parts by mass |
| Example Composition-1 | Dispersion liquid 1 | 54.1 | C-1 | 2.5 | D-1 | 5.2 | E-1 | 1.5 | PGMEA | 36.7 | - | | - | | - | | W-1 | 0.01 |
| Example Composition-2 | Dispersion liquid 1 | 54.1 | C-2 | 2.5 | D-1 | 5.2 | E-1 | 1.5 | PGMEA | 36.7 | - | | - | | - | | W-1 | 0.01 |
| Example Composition-3 | Dispersion liquid 1 | 54.1 | C-2 | 2.5 | D-2 | 5.2 | E-1 | 1.5 | PGMEA | 36.7 | - | | - | | - | | W-1 | 0.01 |
| Example Composition-4 | Dispersion liquid 1 | 54.1 | C-2 | 2.5 | D-2 | 5.2 | E-2 | 1.5 | PGMEA | 36.7 | - | | - | | - | | W-1 | 0.01 |
| Example Composition-5 | Dispersion liquid 1 | 54.1 | C-2 | 2.5 | D-2 | 5.2 | E-3 | 1.5 | PGMEA | 36.7 | - | | - | | - | | W-1 | 0.01 |
| Example Composition-6 | Dispersion liquid 1 | 54.1 | C-2 | 2.5 | D-2 | 5.2 | E-4 | 1.5 | PGMEA | 36.7 | - | | - | | - | | W-1 | 0.01 |
| Example Composition-7 | Dispersion liquid 1 | 54.1 | C-2 | 2.5 | D-2 | 5.2 | E-1 | 1.5 | PGMEA | 36.2 | G-1 | 0.5 | - | | - | | W-1 | 0.01 |
| Example Composition-8 | Dispersion liquid 1 | 54.1 | C-2 | 2.5 | D-2 | 5.2 | E-1 | 1.5 | PGMEA | 36.2 | G-2 | 0.5 | - | | - | | W-1 | 0.01 |
| Example Composition-9 | Dispersion liquid 1 | 54.1 | C-2 | 2.5 | D-2 | 5.2 | E-1 | 1.5 | PGMEA | 36.4 | - | | G-3 | 0.3 | - | | W-1 | 0.01 |

(continued)

| | Pigment dispersion liquid | | Alkali-soluble resin | | Polymerizable compound | | Photopolymerization initiator | | Solvent | | Epoxy group-containing compound | | Ultraviolet absorber | | Adhesive agent | | Surfactant | |
|---|---|---|---|---|---|---|---|---|---|---|---|---|---|---|---|---|---|---|
| | Type | parts by mass | Type | parts by mass | Type | parts by mass | Type | parts by mass | Type | parts by mass | Type | parts by mass | Type | parts by mass | Type | parts by mass | Type | parts by mass |
| Example Composition-10 | Dispersion liquid 1 | 54.1 | C-2 | 2.5 | D-2 | 5.2 | E-1 | 1.5 | PGMEA | 36.2 | - | | - | | G-4 | 0.5 | W-1 | 0.01 |
| Example Composition-11 | Dispersion liquid 1 | 54.1 | C-1 /C-2 | 1.0 /1.5 | D-1 /D-2 | 2.0 /3.2 | E-1 /E-4 | 1.3 /0.2 | PGMEA /Cyclopentanone | 10.7/26.0 | - | | - | | - | | W-1 | 0.01 |
| Example Composition-12 | Dispersion liquid 2 | 54.1 | C-2 | 2.5 | D-2 | 5.2 | E-2 | 1.5 | PGMEA | 36.7 | - | | - | | - | | W-1 | 0.01 |
| Example Composition-13 | Dispersion liquid 3 | 54.1 | C-2 | 2.5 | D-2 | 5.2 | E-2 | 1.5 | PGMEA | 36.7 | - | | - | | - | | W-1 | 0.01 |
| Example Composition-14 | Dispersion liquid 4 | 54.1 | C-2 | 2.5 | D-2 | 5.2 | E-2 | 1.5 | PGMEA | 36.7 | - | | - | | - | | W-1 | 0.01 |
| Example Composition-15 | Dispersion liquid 5 | 54.1 | C-2 | 2.5 | D-2 | 5.2 | E-2 | 1.5 | PGMEA | 36.7 | - | | - | | - | | W-1 | 0.01 |
| Example Composition-16 | Dispersion liquid 6 | 54.1 | C-2 | 2.5 | D-2 | 5.2 | E-2 | 1.5 | PGMEA | 36.7 | - | | - | | - | | W-1 | 0.01 |
| Example Composition-17 | Dispersion liquid 7 | 54.1 | C-2 | 2.5 | D-2 | 5.2 | E-2 | 1.5 | PGMEA | 36.7 | - | | - | | - | | W-1 | 0.01 |
| Example Composition-18 | Dispersion liquid 8 | 54.1 | C-2 | 2.5 | D-2 | 5.2 | E-2 | 1.5 | PGMEA | 36.7 | - | | - | | - | | W-1 | 0.01 |

(continued)

| | Pigment dispersion liquid | | Alkali-soluble resin | | Polymerizable compound | | Photopolymerization initiator | | Solvent | | Epoxy group-containing compound | | Ultraviolet absorber | | Adhesive agent | | Surfactant | |
|---|---|---|---|---|---|---|---|---|---|---|---|---|---|---|---|---|---|---|
| | Type | parts by mass | Type | parts by mass | Type | parts by mass | Type | parts by mass | Type | parts by mass | Type | parts by mass | Type | parts by mass | Type | parts by mass | Type | parts by mass |
| Example Composition-19 | Dispersion liquid 9 | 45.3 | C-2 | 2.5 | D-2 | 9.3 | E-2 | 2.5 | PGMEA | 40.4 | - | | - | | - | | W-1 | 0.01 |
| Example Composition-20 | Dispersion liquid 10 | 54.1 | C-2 | 2.5 | D-2 | 5.2 | E-2 | 1.5 | PGMEA | 36.7 | - | | - | | - | | W-1 | 0.01 |
| Example Composition-21 | Dispersion liquid 11 | 54.1 | C-2 | 2.5 | D-2 | 5.2 | E-2 | 1.5 | PGMEA | 36.7 | - | | - | | - | | W-1 | 0.01 |
| Example Composition-22 | Dispersion liquid 12 | 54.1 | C-2 | 2.5 | D-2 | 5.2 | E-2 | 1.5 | PGMEA | 36.7 | - | | - | | - | | W-1 | 0.01 |
| Example Composition-23 | Dispersion liquid 13 | 54.1 | C-2 | 2.5 | D-2 | 5.2 | E-2 | 1.5 | PGMEA | 36.7 | - | | - | | - | | W-1 | 0.01 |
| Example Composition-24 | Dispersion liquid 1 | 54.1 | C-2 /C-3 | 1.2 /1.3 | D-2 | 5.2 | E-2 | 1.5 | PGMEA | 36.7 | - | | - | | - | | W-1 | 0.01 |
| Example Composition-25 | Dispersion liquid 1 | 54.1 | C-3 | 2.5 | D-2 | 5.2 | E-2 | 1.5 | PGMEA | 36.7 | - | | - | | - | | W-1 | 0.01 |

(Alkali-soluble resin)

As an alkali-soluble resin, the following resins C-1 to C-3 were used. The structures of the resins C-1 to C-3 are shown below. A numerical value described in each structural unit means % by mole of each structural unit with respect to all structural units.

• C-1 (acid value = 110 mg KOH/g, and weight-average molecular weight = 33,000)

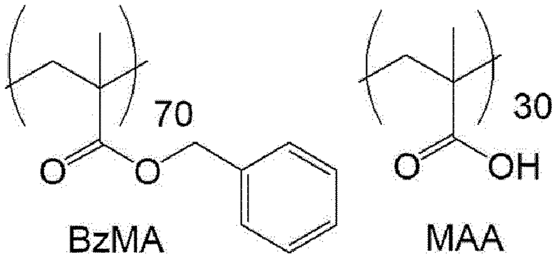

• C-2 (acid value = 70 mg KOH/g, and weight-average molecular weight = 11,000)

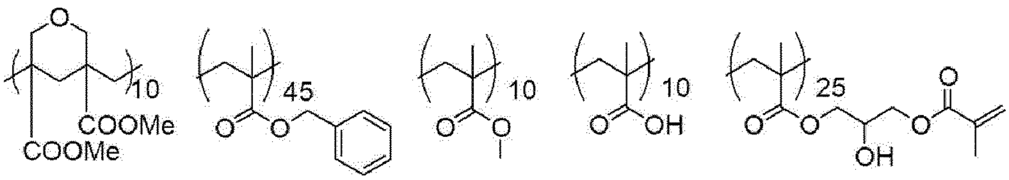

• C-3 (acid value = 210 mg KOH/g, and weight-average molecular weight = 11,500)

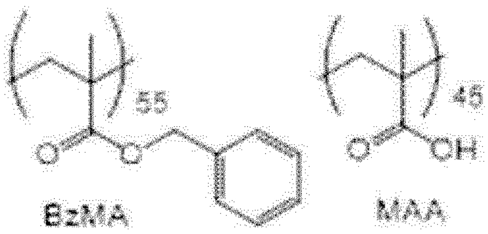

(Polymerizable compound)

As a polymerizable compound, the following D-1 and D-2 were used.

- D-1: KAYARAD DPHA (produced by Nippon Kayaku Co., Ltd.)
- D-2: NK ESTER A-TMMT (produced by Shin-Nakamura Chemical Co., Ltd.)

D-1 is a compound containing four ethylenically unsaturated groups in one molecule, and D-2 is a mixture of a compound containing five ethylenically unsaturated groups in one molecule and a compound containing six ethylenically unsaturated groups in one molecule.

(Polymerization initiator (photopolymerization initiator))

As a polymerization initiator (photopolymerization initiator), the following E-1 to E-4 were used.

- E-1: IRGACURE OXE02 (oxime compound) (produced by BASF SE)
- E-2: IRGACURE OXE03 (oxime compound represented by General Formula (C-13)) (produced by BASF SE)
- E-3: IRGACURE 369 (produced by BASF SE)
- E-4: IRGACURE 379 (produced by BASF SE)

(Solvent)

- PGMEA: Propylene glycol monomethyl ether acetate
- Cyclopentanone

(Other components)

As other components, the following G-1 to G-4 were used.

- G-1: EHPE 3150 (produced by DAICEL CORPORATION) (epoxy group-containing compound)
- G-2: EPICLON N-695 (produced by DIC CORPORATION) (epoxy group-containing compound)
- G-3: The following compound (ultraviolet absorber (diethylamino-phenylsulfonyl-based ultraviolet absorber))

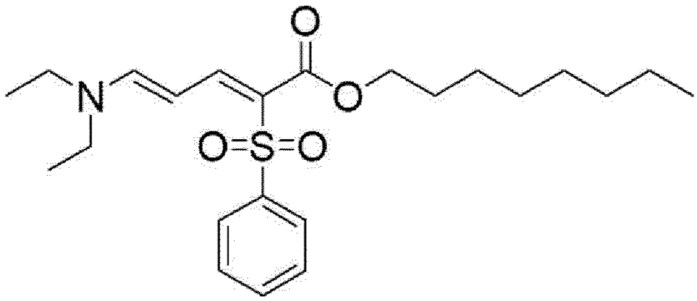

- G-4: The following compound (adhesive agent)

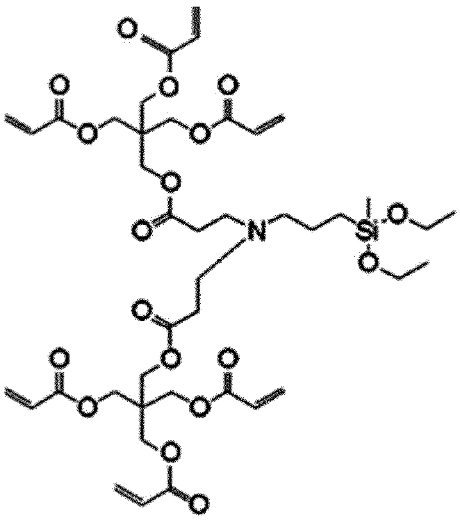

(Surfactant)

- W-1: The following compound (weight-average molecular weight = 15,000)

Provided that in the following formula, contents of a left structural unit and a right structural unit are 62% by

mass and 38% by mass, respectively.

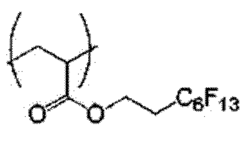

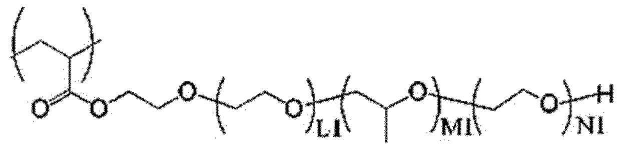

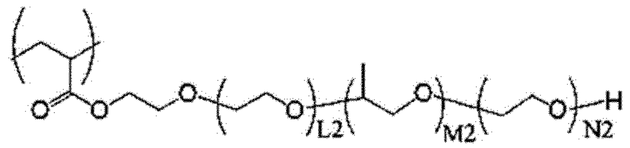

62%

38%

L1+N1+L2+N2=14
M1+M2=17

The obtained compositions were used for the following tests and evaluations.

<UW/FT evaluation and surface roughness>

Each of the compositions of Examples and Comparative Examples obtained above was applied onto a glass substrate having each thickness shown in Tables 3 and 4 by a spin coating method while the rotation speed was adjusted so that the film thickness of each of the obtained light-shielding film was as shown in Tables 3 and 4, then the resultant was heated on a hot plate at 110°C for 2 minutes to obtain a composition layer.

Using the i-line stepper exposure device FPA-3000i5+ (manufactured by Canon Inc.), the obtained composition layer was exposed (exposure amount of 400 mJ/$cm^2$) through a mask so that a line and space of 300 μm/300 μm could be obtained.

Subsequently, a development treatment was performed using a development device (Act-8 manufactured by Tokyo Electron Limited). Puddle development was performed at 23°C for each time shown in Tables 3 and 4 by using an aqueous solution of 0.3% tetramethylammonium hydroxide (TMAH) as a developer. Thereafter, rinse was performed with a spin shower using pure water to obtain a line and space of 300 μm/300 μm.

An undercut width (UW) was measured by observing the cross section of the obtained pattern with a scanning electron microscope (SEM) (S-4800, manufactured by Hitachi High-Technologies Corporation), and UW/FT was calculated based on these results.

Furthermore, surface roughnesses (Ra) of the obtained light-shielding films were measured using an atomic force microscope (Dimension FastScan AFM (manufactured by Bruker)), and are shown in Tables 3 and 4.

<Light distribution characteristics>

Each of the compositions of Examples and Comparative Examples obtained above was applied onto a glass substrate having each thickness shown in Tables 3 and 4 by a spin coating method while the rotation speed was adjusted so that the film thickness of each of the obtained light-shielding film was as shown in Tables 3 and 4, then the resultant was heated on a hot plate at 110°C for 2 minutes to obtain a composition layer.

Using the i-line stepper exposure device FPA-3000i5+ (manufactured by Canon Inc.), the obtained composition layer was exposed (exposure amount of 1,000 mJ/$cm^2$) through a mask so that a light-shielding film having the pattern shown in Fig. 2 could be obtained.

Subsequently, a development treatment was performed using a development device (Act-8 manufactured by Tokyo Electron Limited). Puddle development was performed at 23°C for each time shown in Tables 3 and 4 by using an aqueous solution of 0.3% tetramethylammonium hydroxide (TMAH) as a developer. Thereafter, rinse was performed with a spin shower using pure water to obtain a light-shielding film having a predetermined pattern.

Regarding the light distribution characteristics, 20 testers were asked to stand in the same position, a headlight was produced using a light-shielding film manufactured above and having a pattern in which light was not radiated, the 20 testers were asked to visually observe light, and the intensity of the light was evaluated in three grades: 1. "feeling the light strongly"; 2. "feeling the light less strongly"; and 3. "feeling the light weakly". The stronger light the tester feels, the more dazzling it means.

The evaluation standards were as follows.

A: Among 20 testers, none of them judged that the result was "feeling the light strongly", and 18 or more testers judged that the result was "feeling the light weakly".
B: Among 20 testers, none of them judged that the result was "feeling the light strongly", and 16 or 17 testers judged that the result was "feeling the light weakly".
C: Among 20 testers, none of them judged that the result was "feeling the light strongly", and 15 or fewer testers judged that the result was "feeling the light weakly".
D: Among 20 testers, 1 or 2 testers judged that the result was "feeling the light strongly", and 15 or fewer testers judged that the result was "feeling the light weakly".
E: Among 20 testers, 3 or more testers judged that the result was "feeling the light strongly", and 15 or fewer testers judged that the result was "feeling the light weakly".

<Minimum OD value>

Each of the compositions of Examples and Comparative Examples obtained above was applied onto a glass plate (Eagle XG, manufactured by Corning Incorporated) having each thickness shown in Tables 3 and 4 and 10 cm square by a spin coating method while the rotation speed was adjusted so that the film thickness of each of the obtained light-shielding films was as shown in Tables 3 and 4, then the resultant was heated on a hot plate at 110°C for 2 minutes to obtain a composition layer.
Using the i-line stepper exposure device FPA-3000i5+ (manufactured by Canon Inc.), the entire surface of the obtained composition layer was exposed (exposure amount of 1,000 mJ/cm$^2$).
Regarding the substrate containing the obtained light-shielding film, the OD value for light having wavelengths of 400 to 700 nm was measured with a spectrophotometer U-4100 (manufactured by Hitachi High-Technologies Corporation), and the lowest OD values are shown in Tables 3 and 4. As the OD value is higher, the light-shielding film has superior light-shielding properties.

<Light resistance evaluation>

The obtained composition was applied onto a glass substrate using a spin coater so that the film thickness of each of the obtained light-shielding films was as shown in Tables 3 and 4, and subjected to a heating treatment (pre-baking) for 2 minutes using a hot plate at 110°C to obtain a composition layer.
Next, using the i-line stepper exposure device FPA-3000i5+ (manufactured by Canon Inc.), the composition layer was exposed to light having a wavelength of 365 nm at 400 mJ/cm$^2$ through a mask having a pattern of 2 cm × 2 cm.
Subsequently, a development treatment was performed using a development device (Act-8 manufactured by Tokyo Electron Limited). Puddle development was performed at 23°C for each time shown in Tables 3 and 4 by using an aqueous solution of 0.3% tetramethylammonium hydroxide (TMAH) as a developer. Thereafter, rinse was performed with a spin shower using pure water to form a pattern of 2 cm × 2 cm on the glass substrate.
Subsequently, a heating treatment (post-baking: 220°C/5 minutes) using a hot plate was performed to obtain a 2 cm × 2 cm pattern-like light-shielding film.
The glass substrate with the formed 2 cm × 2 cm pattern-like light-shielding film was irradiated with an illuminance of 100,000 lux for 500 hours using SUPER XENON WEATHER METER SX75 manufactured by Suga Test Instruments Co., Ltd. The OD values at wavelengths of 400 to 700 nm were measured with U-4100 (manufactured by Hitachi High-Technologies Corporation) before and after the treatment, respectively. The change in the OD values before and after the treatment was examined, and light resistance was evaluated based on a change rate at a wavelength showing the maximum change rate.
A change rate for light having each wavelength is determined based on the following expression.

$$\text{Change rate (\%)} = (|\text{OD value before treatment} - \text{OD value after treatment}|)/\text{OD value before treatment} \times 100$$

In the following determination standards, A to C are levels which are unproblematic for practical use.

A: The change rate was equal to or greater than 0% and less than 3%
B: The change rate was equal to or greater than 3% and less than 5%
C: The change rate was equal to or greater than 5% and less than 10%
D: The change rate was equal to or greater than 10% and less than 20%
E: The change rate was equal to or greater than 20%

<Moisture-resistant spectral stability>

A glass substrate with a 2 cm × 2 cm pattern-like light-shielding film formed by the same procedure as in the section of <Light resistance evaluation> above was subjected to a treatment of being left to stand for 1,000 hours in an atmosphere of a temperature of 85°C and a relative humidity of 85% using a constant temperature and humidity machine (EHS-221M) manufactured by Yamato Scientific Co., Ltd. The OD values at wavelengths of 400 to 700 nm were measured with U-4100 (manufactured by Hitachi High-Technologies Corporation) before and after the treatment, respectively.

The change in the OD values before and after the treatment was examined, and moisture resistance (moisture-resistant spectral stability) was evaluated based on a change rate at a wavelength showing the maximum change rate.

A change rate for light having each wavelength is determined based on the following expression.

$$\text{Change rate (\%)} = (|\text{OD value before treatment - OD value after treatment}|)/\text{OD value before treatment} \times 100$$

In the following determination standards, A to C are levels which are unproblematic for practical use.

A: The change rate was equal to or greater than 0% and less than 3%
B: The change rate was equal to or greater than 3% and less than 5%
C: The change rate was equal to or greater than 5% and less than 10%
D: The change rate was equal to or greater than 10%

<Moisture-resistant peeling inhibitory>

A glass substrate with a line-shaped light-shielding film formed by the same procedure as in the section of <UW/FT evaluation and surface roughness> above was left to stand for 750 hours, 1,000 hours, and 1,500 hours, respectively, in an atmosphere of a temperature of 85°C and a relative humidity of 85% using a constant temperature and humidity machine (EHS-221M) manufactured by Yamato Scientific Co., Ltd.

The cross section of the light-shielding film after each moisture resistance test was observed with the scanning electron microscope (SEM) (S-4800, manufactured by Hitachi High-Technologies Corporation), and the presence or absence of peeling was observed according to the following determination standards.

A: There was no peeling in a case of being left to stand for 1,500 hours
B: There was no peeling in a case of being left to stand for 1,000 hours, and there was peeling in a case of being left to stand for 1,500 hours
C: There was no peeling in a case of being left to stand for 750 hours, and there was peeling in a case of being left to stand for 1,000 hours
D: There was peeling in a case of being left to stand for 750 hours

[Table 3]

| | Film formation conditions | | | | Headlight characteristics | | | Light-shielding film | | | |
|---|---|---|---|---|---|---|---|---|---|---|---|
| | Light -shielding film-forming composition | Thickness of glass substrate (mm) | Puddle time of developer (seconds) | Film thickness (FT) of light-shielding film (μm) | Minimum OD value (400 to 700 nm) | UW/FT | Light distribution characteristics | Light resistance | Moisture-resistan t spectral stability | Moisture-resistan t peeling inhibitory | Surface roughness (Ra) |
| Example 1 | Example Composition-1 | 1.1 | 50.0 | 1.8 | 3.0 | 2.2 | B | B | A | D | 19 nm |
| Example 2 | Example Composition-2 | 1.1 | 50.0 | 1.8 | 3.0 | 2.2 | B | B | A | C | 18 nm |
| Example 3 | Example Composition-3 | 1.1 | 50.0 | 1.8 | 3.0 | 2.2 | B | B | A | B | 19 nm |
| Example 4 | Example Composition-4 | 1.1 | 50.0 | 1.8 | 3.0 | 2.2 | B | B | A | B | 19 nm |
| Example 5 | Example Composition-5 | 1.1 | 50.0 | 1.8 | 3.0 | 2.2 | B | B | A | C | 20 nm |
| Example 6 | Example Composition-6 | 1.1 | 50.0 | 1.8 | 3.0 | 2.2 | B | B | A | C | 19 nm |
| Example 7 | Example Composition-7 | 1.1 | 50.0 | 1.8 | 3.0 | 2.2 | B | B | A | A | 20 nm |
| Example 8 | Example Composition-8 | 1.1 | 50.0 | 1.8 | 3.0 | 2.2 | B | B | A | A | 19 nm |

(continued)

| | Film formation conditions | | | | Headlight characteristics | | | Light-shielding film | | | |
|---|---|---|---|---|---|---|---|---|---|---|---|
| | Light -shielding film-forming composition | Thickness of glass substrate (mm) | Puddle time of developer (seconds) | Film thickness (FT) of light-shielding film (μm) | Minimum OD value (400to700 nm) | UW/FT | Light distribution characteristics | Light resistance | Moisture-resistan t spectral stability | Moisture-resistan t peeling inhibitory | Surface roughness (Ra) |
| Example 9 | Example Composition-9 | 1.1 | 50.0 | 1.8 | 3.0 | 2.2 | B | B | A | C | 19 nm |
| Example 10 | Example Composition-10 | 1.1 | 50.0 | 1.8 | 3.0 | 2.2 | B | B | A | A | 19 nm |
| Example 11 | Example Composition-11 | 1.1 | 50.0 | 1.8 | 3.0 | 2.2 | B | B | A | B | 20 nm |
| Example 12 | Example Composition-12 | 1.1 | 50.0 | 1.8 | 3.0 | 2.2 | B | B | A | B | 19 nm |
| Example 13 | Example Composition-13 | 1.1 | 50.0 | 1.8 | 3.0 | 2.2 | B | B | A | A | 18 nm |
| Example 14 | Example Composition-14 | 1.1 | 50.0 | 1.8 | 3.0 | 2.2 | B | B | A | B | 19 nm |
| Example 15 | Example Composition-4 | 1.1 | 50.0 | 1.3 | 2.0 | 2.2 | D | B | A | B | 20 nm |
| Example 16 | Example Composition-4 | 1.1 | 50.0 | 1.6 | 2.5 | 2.2 | C | B | A | B | 18 nm |

(continued)

| | Film formation conditions | | | | Headlight characteristics | | | Light-shielding film | | | |
|---|---|---|---|---|---|---|---|---|---|---|---|
| | Light -shielding film-forming composition | Thickness of glass substrate (mm) | Puddle time of developer (seconds) | Film thickness (FT) of light-shielding film (μm) | Minimum OD value (400 to 700 nm) | UW/FT | Light distribution characteristics | Light resistance | Moisture-resistan t spectral stability | Moisture-resistan t peeling inhibitory | Surface roughness (Ra) |
| Example 17 | Example Composition-4 | 1.1 | 50.0 | 2.1 | 3.5 | 2.2 | A | B | A | B | 19 nm |
| Example 18 | Example Composition-4 | 1.1 | 50.0 | 2.4 | 4.0 | 2.2 | A | B | A | B | 19 nm |
| Example 19 | Example Composition-4 | 1.1 | 50.0 | 2.9 | 5.0 | 2.2 | A | B | A | B | 20 nm |
| Example 20 | Example Composition-4 | 1.1 | 50.0 | 3.5 | 6.0 | 2.2 | A | B | A | C | 19 nm |

[Table 4]

| | Film formation conditions | | | | Headlight characteristics | | | Light-shielding film | | | |
|---|---|---|---|---|---|---|---|---|---|---|---|
| | Light -shielding film-forming composition | Thickness of glass substrate (mm) | Puddle time of developer (seconds) | Film thickness (FT) of light-shielding film (μm) | Minimum OD value (400 to 700 nm) | UW/FT | Light distribution characteristics | Light resistance | Moisture -re sistant spectral stability | Moisture-resistant peeling inhibitory | Surface roughness (Ra) |
| Example 21 | Example Composition-4 | 1.1 | 60.0 | 1.8 | 3.0 | 2.5 | D | B | A | B | 19 nm |
| Example 22 | Example Composition-4 | 1.1 | 40.0 | 1.8 | 3.0 | 2.0 | B | B | A | B | 19 nm |
| Example 23 | Example Comosition-4 | 1.1 | 30.0 | 1.8 | 3.0 | 1.5 | A | B | A | B | 19 nm |
| Example 24 | Example Composition-4 | 1.1 | 15.0 | 1.8 | 3.0 | 1.0 | A | B | A | B | 19 nm |
| Example 25 | Example Comosition-4 | 1.1 | 10.0 | 1.8 | 3.0 | 0.5 | A | B | A | B | 20 nm |
| Example 26 | Example Comosition-4 | 1.1 | 5.0 | 1.8 | 3.0 | 0.0 | A | B | A | B | 19 nm |
| Example 27 | Example Composition-4 | 0.2 | 10.0 | 1.8 | 3.0 | -0.5 | A | B | A | B | 18 nm |
| Example 28 | Example Comosition-4 | 0.2 | 15.0 | 1.8 | 3.0 | -1.0 | A | B | A | B | 19 nm |
| Example 29 | Example Composition-4 | 0.2 | 30.0 | 1.8 | 3.0 | -1.5 | A | B | A | B | 18 nm |
| Example 30 | Example Comosition-4 | 0.2 | 40.0 | 1.8 | 3.0 | -2.0 | B | B | A | B | 19 nm |

(continued)

| | Film formation conditions | | | | Headlight characteristics | | | Light-shielding film | | | |
|---|---|---|---|---|---|---|---|---|---|---|---|
| | Light -shielding film-forming composition | Thickness of glass substrate (mm) | Puddle time of developer (seconds) | Film thickness (FT) of light-shielding film (μm) | Minimum OD value (400 to 700 nm) | UW/FT | Light distribution characteristics | Light resistance | Moisture -resistant spectral stability | Moisture-resistant peeling inhibitory | Surface roughness (Ra) |
| Example 31 | Example Comosition-4 | 0.2 | 60.0 | 1.8 | 3.0 | -2.5 | D | B | A | B | 19 nm |
| Example 32 | Example Comosition-15 | 1.1 | 50.0 | 1.8 | 3.0 | 2.2 | B | B | B | B | 20 nm |
| Example 33 | Example Comosition-16 | 1.1 | 50.0 | 1.8 | 3.0 | 2.2 | B | B | B | B | 20 nm |
| Example 34 | Example Composition-17 | 1.1 | 50.0 | 1.8 | 3.0 | 2.2 | B | B | C | B | 19 nm |
| Example 35 | Example Composition-18 | 1.1 | 50.0 | 1.8 | 3.0 | 2.2 | B | B | B | B | 19 nm |
| Example 36 | Example Composition-19 | 1.1 | 50.0 | 1.8 | 3.0 | 2.2 | C | A | A | B | 18 nm |
| Example 37 | Example Composition-20 | 1.1 | 50.0 | 3.0 | 3.0 | 2.2 | C | C | A | B | 18 nm |
| Example 38 | Example Composition-21 | 1.1 | 50.0 | 1.8 | 3.0 | 2.2 | B | B | A | B | 19 nm |
| Example 39 | Example Composition-22 | 1.1 | 50.0 | 1.8 | 3.0 | 2.2 | B | B | A | B | 18 nm |

(continued)

| | Film formation conditions | | | | Headlight characteristics | | | Light-shielding film | | | |
|---|---|---|---|---|---|---|---|---|---|---|---|
| | Light -shielding film-forming composition | Thickness of glass substrate (mm) | Puddle time of developer (seconds) | Film thickness (FT) of light-shielding film (μm) | Minimum OD value (400 to 700 nm) | UW/FT | Light distribution characteristics | Light resistance | Moisture -re sistant spectral stability | Moisture-resistant peeling inhibitory | Surface roughness (Ra) |
| Example 40 | Example Composition-23 | 1.1 | 50.0 | 1.8 | 3.0 | 2.2 | B | B | A | B | 19 nm |
| Example 41 | Example Composition-24 | 1.1 | 50.0 | 1.8 | 3.0 | 2.2 | A | A | A | B | 75 nm |
| Example 42 | Example Composition-25 | 1.1 | 50.0 | 1.8 | 3.0 | 2.2 | A | A | A | B | 229 nm |
| Comparative Example 1 | Example Composition-4 | 1.1 | 50.0 | 1.2 | 1.8 | 2.2 | E | B | A | B | 19 nm |
| Comparative Example 2 | Example Composition-4 | 1.1 | 50.0 | 1.0 | 1.5 | 2.2 | E | B | A | B | 19 nm |
| Comparative Example 3 | Example Composition-4 | 1.1 | 80.0 | 1.8 | 3.0 | 2.7 | E | B | A | B | 18 nm |
| Comparative Example 4 | Example Composition-4 | 1.1 | 120.0 | 1.8 | 3.0 | 3.0 | E | B | A | B | 20 nm |
| Comparative Example 5 | Example Composition-4 | 0.2 | 80.0 | 1.8 | 3.0 | -2.7 | E | B | A | B | 19 nm |

(continued)

| | Film formation conditions | | | | Headlight characteristics | | | Light-shielding film | | | |
|---|---|---|---|---|---|---|---|---|---|---|---|
| | Light -shielding film-forming composition | Thickness of glass substrate (mm) | Puddle time of developer (seconds) | Film thickness (FT) of light-shielding film (μm) | Minimum OD value (400 to 700 nm) | UW/FT | Light distribution characteristics | Light resistance | Moisture -re sistant spectral stability | Moisture-resistant peeling inhibitory | Surface roughness (Ra) |
| Comparative Example 6 | Example Composition-4 | 0.2 | 120.0 | 1.8 | 3.0 | -3.0 | E | B | A | B | 20 nm |

As shown in Tables 3 and 4, with the headlight unit for a vehicle and the light-shielding film according to the embodiment of the present invention, desired effects were obtained.

In particular, from the comparison of Examples 1 and 2, in a case where the resin had an ethylenically unsaturated group, the effect was superior.

From the comparison of Examples 3 to 6, in a case where an oxime compound was used as the polymerization initiator, the effect was superior.

From the comparison of Examples 3 and 7 and 8, in a case where the epoxy group-containing compound was used, the effect was superior.

From the comparison of Examples 3 and 10, in a case where the adhesive agent was used, the effect was superior. From the comparison of Examples 15 to 20, in a case where the OD value was equal to or greater than 2.5 (preferably equal to or greater than 3.0), the effect was superior.

From the comparison of Examples 21 to 31, in a case where UW/FT was -2.0 to 2.0 (preferably -1.5 to 1.5), the effect was superior.

From the comparison of Examples 32 to 37, in a case where titanium nitride, titanium oxynitride, zirconium nitride, zirconium oxynitride, vanadium nitride, vanadium oxynitride, niobium nitride, or niobium oxynitride was used as the black coloring material, the effect was superior.

In a case where the same evaluation was performed without adding the surfactant W-1 of Example Composition-4 in Example 4, the results were equivalent to those in Example 4.

In Example 41, the alkali-soluble resin C-2 (2.5 parts by mass) of Example Composition-3 in Example 3 was changed to C-2 (1.2 parts by mass)/C-3 (1.3 parts by mass), and the evaluation was performed in the same manner. As a result, the results were equivalent to those in Example 3, except that the surface roughness (Ra) was 78 nm and the light distribution characteristics and the light resistance were evaluated as A.

In Example 42, the alkali-soluble resin C-2 of Example Composition-3 in Example 3 was changed to the alkali-soluble resin C-3, and the evaluation was performed in the same manner. As a result, the results were equivalent to those in Example 3, except that the surface roughness (Ra) was 229 nm and the light distribution characteristics and the light resistance were evaluated as A.

Explanation of References

10: Headlight unit for vehicle
12: Light source
14: Light-shielding part
16: Lens
20: Substrate
22: Light-shielding film
22b: Peripheral edge part
23: Opening part
30, 32: Light distribution pattern
30a: Edge
31: Region
33: Cutout part
FT: Film thickness
UW: Length

## Claims

**1.** A headlight unit for a vehicle, comprising:

a light source; and
a light-shielding part which shields at least a part of light emitted from the light source,
wherein the light-shielding part has a light-shielding film which is formed in a pattern shape and shields at least a part of light emitted from the light source,
the light-shielding film contains a black coloring material and a resin,
a minimum optical density of the light-shielding film in a wavelength range of 400 to 700 nm is equal to or greater than 2.0, and

in a case where a film thickness of the light-shielding film is defined as FT, and a length of a region where a film thickness of a peripheral edge part of the light-shielding film is changed is defined as UW, $-2.5 \leq (UW/FT) \leq 2.5$ is satisfied.

**2.** The headlight unit for a vehicle according to claim 1, wherein $-2.0 \leq (UW/FT) \leq 2.0$ is satisfied.

**3.** The headlight unit for a vehicle according to claim 1 or 2, wherein $-1.5 \leq (UW/FT) \leq 1.5$ is satisfied.

**4.** The headlight unit for a vehicle according to any one of claims 1 to 3, wherein the minimum optical density is 3.0 to 6.0.

**5.** The headlight unit for a vehicle according to any one of claims 1 to 4, wherein the black coloring material is at least one selected from the group consisting of carbon black, a bisbenzofuranone-based pigment, a metal oxynitride, and a metal nitride.

**6.** The headlight unit for a vehicle according to any one of claims 1 to 5, wherein the black coloring material is at least one selected from the group consisting of carbon black, a bisbenzofuranone-based pigment, titanium nitride, titanium oxynitride, zirconium nitride, zirconium oxynitride, vanadium nitride, vanadium oxynitride, niobium nitride, and niobium oxynitride.

**7.** The headlight unit for a vehicle according to any one of claims 1 to 6,

wherein the light-shielding film is formed of a light-shielding film-forming composition, and
the light-shielding film-forming composition contains the black coloring material, a polymerizable compound, and a polymerization initiator.

**8.** The headlight unit for a vehicle according to claim 7, wherein the light-shielding film-forming composition further contains a resin.

**9.** The headlight unit for a vehicle according to claim 8, wherein the resin contains an ethylenically unsaturated group.

**10.** The headlight unit for a vehicle according to any one of claims 7 to 9, wherein the polymerization initiator is an oxime compound.

**11.** The headlight unit for a vehicle according to any one of claims 1 to 10, wherein a surface roughness of the light-shielding film is 10 to 250 nm.

**12.** A light-shielding film for a headlight, comprising:

a black coloring material; and
a resin,
wherein a minimum optical density in a wavelength range of 400 to 700 nm is equal to or greater than 2.0, and in a case where a film thickness of the light-shielding film is defined as FT, and a length of a region where a film thickness of a peripheral edge part of the light-shielding film is changed is defined as UW, $-2.5 \leq (UW/FT) \leq 2.5$ is satisfied.

**13.** The light-shielding film for a headlight according to claim 12, wherein $-2.0 \leq (UW/FT) \leq 2.0$ is satisfied.

**14.** The light-shielding film for a headlight according to claim 12 or 13, wherein $-1.5 \leq (UW/FT) \leq 1.5$ is satisfied.

**15.** The light-shielding film for a headlight according to any one of claims 12 to 14, wherein the minimum optical density is 3.0 to 6.0.

**16.** The light-shielding film for a headlight according to any one of claims 12 to 15, wherein the black coloring material is at least one selected from the group consisting of carbon black, a bisbenzofuranone-based pigment, a metal oxynitride, and a metal nitride.

**17.** The light-shielding film for a headlight according to any one of claims 12 to 16, wherein the black coloring material is at least one selected from the group consisting of carbon black, a bisbenzofuranone-based pigment, titanium nitride, titanium oxynitride, zirconium nitride, zirconium oxynitride, vanadium nitride, vanadium oxynitride, niobium nitride, and niobium oxynitride.

**18.** The light-shielding film for a headlight according to any one of claims 12 to 17,

wherein the light-shielding film for a headlight is formed of a light-shielding film-forming composition, and
the light-shielding film-forming composition contains the black coloring material, a compound containing an ethylenically unsaturated group, and a polymerization initiator.

**19.** The light-shielding film for a headlight according to claim 18, wherein the light-shielding film-forming composition further contains a resin.

**20.** The light-shielding film for a headlight according to claim 19, wherein the resin contains an ethylenically unsaturated group.

**21.** The light-shielding film for a headlight according to any one of claims 13 to 20, wherein the polymerization initiator is an oxime compound.

**22.** The light-shielding film for a headlight according to any one of claims 12 to 21, wherein a surface roughness is 10 to 250 nm.

**23.** A method for manufacturing the light-shielding film for a headlight according to any one of claims 12 to 22, the method comprising, in the following order:

a composition layer forming step of forming a composition layer using a light-shielding film-forming composition which contains a black coloring material, a compound containing an ethylenically unsaturated group, and a polymerization initiator;
an exposure step of exposing a part of the composition layer by irradiation with actinic rays or radiation; and
a development step of developing the exposed composition layer to form a light-shielding film.

FIG. 1

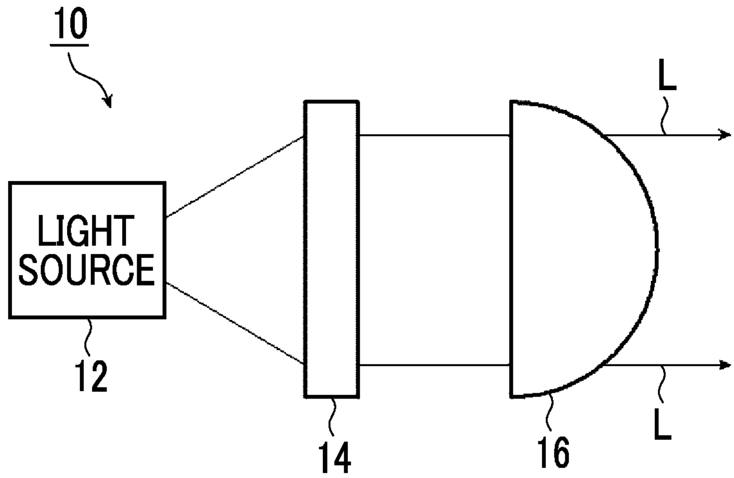

FIG. 2

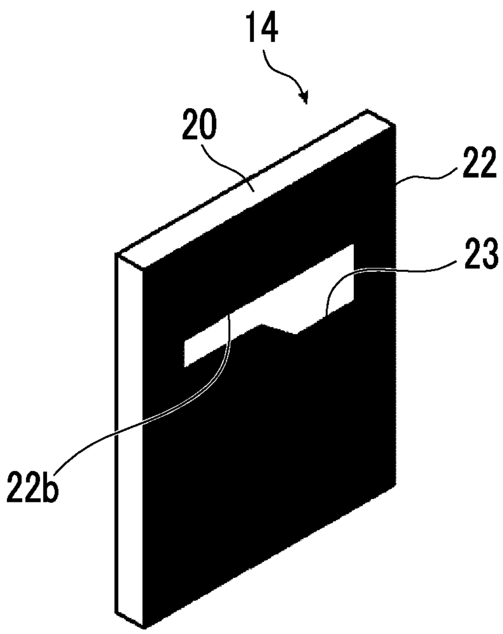


FIG. 3

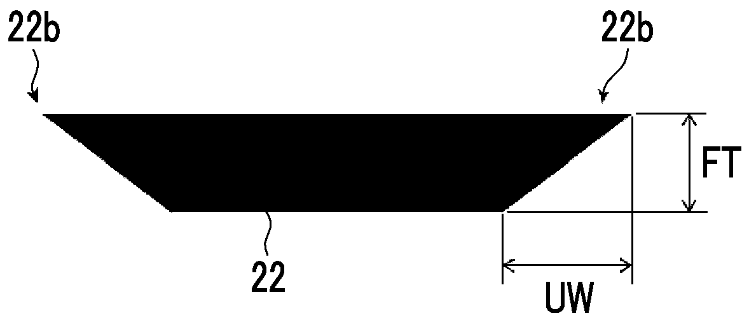


FIG. 4

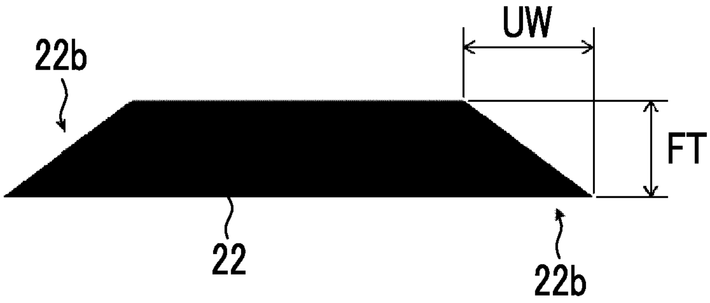

FIG. 5

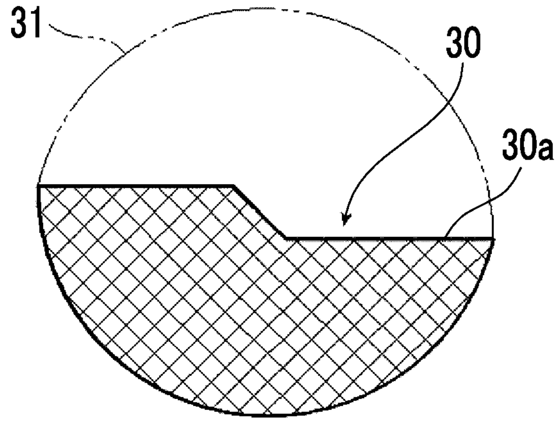


FIG. 6

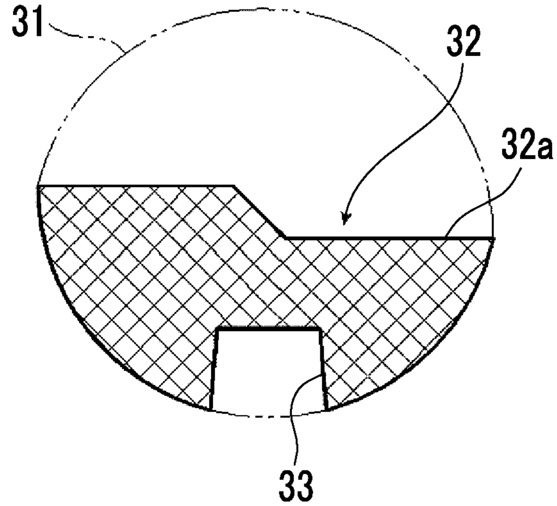

## INTERNATIONAL SEARCH REPORT

International application No.
PCT/JP2019/030758

A. CLASSIFICATION OF SUBJECT MATTER
Int.Cl. F21S41/40(2018.01)i, F21W102/155(2018.01)n

According to International Patent Classification (IPC) or to both national classification and IPC

B. FIELDS SEARCHED
Minimum documentation searched (classification system followed by classification symbols)
Int.Cl. F21S41/40, F21W102/155

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2018-519641 A (ZKW GROUP GMBH) 19 July 2018, paragraphs [0019], [0020], [0023], fig. 1-3, 6 & US 2018/0180239 A1, paragraphs [0021], [0022], [0025], fig. 1-3, 6 & WO 2017/000005 A1 & CN 107787426 A & AT 517409 A | 1-23 |
| Y | JP 2003-123520 A (KOITO MFG CO., LTD.) 25 April 2003, paragraphs [0024], [0044], [0045], fig. 12, 13 & US 2003/0076688 A1, paragraphs [0046], [0066], [0067], fig. 12, 13 | 1-23 |

☒ Further documents are listed in the continuation of Box C.

☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04.10.2019 | 15.10.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/030758

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2017/203979 A1 (FUJIFILM CORPORATION) 30 November 2017, paragraphs [0001], [0012]-[0026], [0101], [0118], [0182]-[0184], [0308]-[0317], [0374]-[0376], fig. 4-6 & KR 10-2018-0135935 A & TW 201809868 A | 1-23 |
| Y | WO 2018/135249 A1 (FUJIFILM CORPORATION) 26 July 2018, paragraphs [0001], [0012], [0138]-[0141] & TW 201827401 A | 9, 20 |
| Y | WO 2017/057192 A1 (FUJIFILM CORPORATION) 06 April 2017, paragraphs [0005], [0007], [0016] (Family: none) | 11, 22 |
| A | JP 2014-56777 A (KOITO MFG CO., LTD.) 27 March 2014, entire text, all drawings (Family: none) | 1-23 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2015009647 A
- JP 2016534503 A
- JP 2012528448 A
- JP 2010534726 A
- JP 2012515234 A
- JP 1170601 A
- JP H01170601 A
- JP 2034664 A
- JP H02034664 A
- JP 2013249417 A
- JP 2010106268 A
- US 20110124824 A
- JP 2011153283 A
- US 20110279759 A
- JP 2016109763 A
- JP 2010097210 A
- JP 2015068893 A
- JP 59044615 A
- JP S59044615 A
- JP 54034327 B
- JP S54034327 B
- JP 58012577 B
- JP S58012577 B
- JP 54025957 B
- JP 54092723 A
- JP S54092723 A
- JP 59053836 A
- JP S59053836 A
- JP 59071048 A
- JP S59071048 A
- EP 993966 B
- EP 1204000 B
- JP 2001318463 A
- WO 2008123097 A
- JP 2016075845 A
- JP 2008106250 A
- JP 2016122101 A
- JP 2016068401 A
- JP 2014137523 A
- JP 2015187676 A
- JP 2014106326 A
- JP 2014042375 A
- JP 1090403 A
- JP S64090403 A
- JP 1091102 A
- JP S64091102 A
- JP 1094301 A
- JP H01094301 A
- JP 6011614 A
- JP H06011614 A
- JP 2592207 B
- US 4808501 A
- US 5667920 A
- US 0505950 A
- JP 5333207 A
- JP H05333207 A
- JP 6035183 A
- JP H06035183 A
- JP 6051115 A
- JP H06051115 A
- JP 6194828 A
- JP H06194828 A
- JP 2011213925 A
- JP 2013041097 A
- JP 2010111750 A
- JP 7164729 A
- JP H07164729 A
- JP 2002146254 A
- JP 2011164583 A
- JP 2010222557 A
- WO 2014088063 A
- WO 2014030628 A
- JP 2014059550 A
- WO 2012169447 A
- JP 2015176046 A
- JP 2014063144 A
- JP 2014052431 A
- JP 2014044301 A
- JP 2012008532 A
- JP 2015172102 A
- JP 2015172004 A
- JP 2015040895 A
- JP 2014126642 A
- JP 2014148567 A
- JP 2015157893 A
- JP 2014095007 A
- JP 2014080487 A
- JP 2013227403 A
- JP 2008260927 A
- JP 2013029760 A
- JP 2008292970 A
- JP 10291969 A
- JP H10291969 A
- JP 4225898 B
- JP 2009191179 A
- JP 2001233842 A
- JP 2000080068 A
- JP 2006342166 A

- JP 2000066385 A
- JP 2004534797 A
- JP 2009519904 A
- US 7626957 B
- JP 2010015025 A
- US 20090292039 A
- WO 2009131189 A
- US 7556910 B
- JP 2009221114 A
- JP 2010262028 A
- JP 2014500852 A
- JP 2013164471 A
- JP 2014137466 A
- WO 2015036910 A
- JP 2013011869 A
- JP 2014043556 A
- JP 2014089408 A
- JP 2012068418 A
- US 20120068292 A
- JP 2012032556 A
- JP 2012003225 A
- US 20130034812 A
- JP 2008250074 A
- JP 2013195480 A
- WO 2016129324 A
- JP 2017222559 A

**Non-patent literature cited in the description**

- CHROMOFINE BLACK A1103. Dainichiseika Color & Chemicals Mfg. Co., Ltd,
- SOLVENT BLACK 3. Orient Chemical Industries Co., Ltd,
- **A. J. LEO.** Comprehensive Medicinal Chemistry. Pergamon press, 1990, vol. 4, 295
- **C. HANSCH ; A. J. LEO.** Substituent Constants For Correlation Analysis in Chemistry and Biology. John Wiley & Sons
- Calculating logPoct from structure. **A. J. LEO.** Chem. Rev. 1993, vol. 93, 1281-1306
- **KIYOMI KATO.** Ultraviolet Curing System. Sogo Gijutsu Center, 1989, 65-148
- *J. C. S. Perkin II,* 1979, 1653-1660
- *J. C. S. Perkin II,* 1979, 156-162
- *Journal of Photopolymer Science and Technology,* 1995, 202-232